# EUROPEAN PATENT APPLICATION

(11) **EP 4 814 024 A1**
(43) Date of publication of application: **30.09.2026**
(21) Application number: 24894206.2
(22) Date of filing: 21.11.2024
(51) Int. Cl.: C08F 38/00, C08J 5/24, C09J 149/00, C09K 3/10

(54) **CURABLE COMPOSITION, COMPOUND, HEAT-RESISTANT RESIN MATERIAL, ADHESIVE, SEALING MATERIAL, POTTING AGENT, ENCAPSULANT, CARBON MATERIAL, AND PREPREG**

(30) Priority: 22.11.2023 JP 2023198673
(71) Applicant: Cemedine Co., Ltd., Tokyo 141-8620 (JP)
(72) Inventor: SUGIYAMA, Kazuya, Tokyo 141-8620 (JP); IWAKIRI, Hiroshi, Tokyo 141-8620 (JP)
(74) Representative: Hasegawa, Kan
(86) International application number: PCT/JP2024/041330
(87) International publication number: WO 2025/110215

(57) **Abstract**

It is an object to provide a curable resin composition that can cure at a low curing temperature in a short time with fewer limitations imposed on the reaction conditions for curing and that can form a cured product having a high glass transition temperature and high heat resistance. It is another object to provide a novel ethynyl group-containing compound that has an ethynyl group exhibiting high reactivity, that can cure at a low curing temperature in a short time with fewer limitations imposed on the reaction conditions for curing, and that can form a cured product having a high glass transition temperature and high heat resistance. To achieve the objects, a curable composition containing an ethynyl group-containing compound represented by formula (A1): 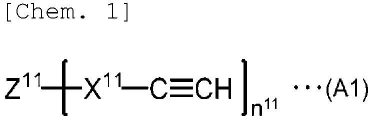 is provided.

## Description

### Technical Field

The present invention relates to a curable composition containing an ethynyl group-containing compound, a novel ethynyl group-containing compound, and a heat-resistant resin material. More particularly, the invention relates to a curable composition that has a highly reactive ethynyl group serving as a crosslinking group and forms 1,3,5-triacylarylene through metal-free regioselective alkyne cyclotrimerization and also relates to a heat-resistant resin material obtained by curing the curable composition, a novel ethynyl group-containing compound used as a component of the curable composition, and a heat-resistant resin material obtained by curing the compound or a composition containing the compound and an additive.

### Background Art

Curable compositions can provide high heat resistance and high dimensional stability and are therefore used for various applications such as electronic materials, matrices of composite materials, and coating materials. For example, curable compositions are indispensable in the field of electronic materials and are used as semiconductor encapsulants, interlayer dielectric materials for printed circuit boards, etc.

In recent years, in the field of semiconductor encapsulants, it has been contemplated to replace silicon (Si) used for semiconductor elements with silicon carbide (SiC) and similar materials for the purpose of reducing power loss. SiC semiconductors can operate at higher temperatures than Si semiconductors. Therefore, encapsulants for SiC semiconductors are required to have higher heat resistance than conventional semiconductor encapsulants and to withstand temperatures exceeding 200°C. Moreover, since the semiconductor encapsulants for SiC semiconductors are exposed to high temperatures for extended periods, the curable resin compositions used are required to maintain high heat resistance (chemical heat resistance) over prolonged periods. Therefore, since the curable resin compositions usable for the semiconductor encapsulants for SiC semiconductors can maintain high heat resistance over prolonged periods, they can be applied not only to encapsulants but also to other materials required to have heat resistance such as adhesives, insulating materials, coatings, and matrix resins of fiber-reinforced composite materials and are expected to be highly useful.

PTL 1 to PTL 3 disclose epoxy resin compositions that are used as curable compositions for encapsulation of semiconductor elements and that contain an epoxy resin such as a bisphenol A-type epoxy resin as a main component and a liquid acid anhydride or phenol novolac serving as a curing agent and further contain additives such as an inorganic filler.

PTL 4 to PTL 7 disclose curable compositions containing a cyanate ester compound. These curable compositions cure through cyclotrimerization of cyanate groups (cyanic acid ester groups; -OCN groups) in the cyanate ester compound to form cured products having excellent properties such as high heat resistance, low water absorbency, and high insulation. Moreover, curable compositions containing an epoxy resin or a maleimide resin in combination with the cyanate ester compound can provide excellent properties such as electric properties, mechanical properties, and chemical resistance and are expected to be promising candidate materials for SiC power semiconductor encapsulating resins.

PTL 8 discloses a soluble polymer obtained through cyclotrimerization of a dialkyne compound.

### Citation List

### Patent Literature

PTL 1: Japanese Unexamined Patent Application Publication No. 2003-160639
PTL 2: Japanese Unexamined Patent Application Publication No. 2009-292996
PTL 3: Japanese Unexamined Patent Application Publication No. 2008-255367
PTL 4: Japanese Unexamined Patent Application Publication No. 7-70315
PTL 5: Japanese Unexamined Patent Application Publication No. 2011-6683
PTL 6: Japanese Unexamined Patent Application Publication No. 2010-53085
PTL 7: Japanese Unexamined Patent Application Publication No. 8-176299
PTL 8: U.S. Patent Application Publication No. 2006/0247410

### Summary of Invention

### Technical Problem

The epoxy resin compositions have a low glass transition temperature (low physical heat resistance), and their heat resistance is not satisfactory.

The cyanate ester compound-containing curable compositions exhibit excellent heat resistance. However, to cure these compositions, the use of a transition metal catalyst is generally required. If no transition metal catalyst is used, the compositions must be heated to a high temperature (for example, 250°C or higher) for a prolonged time. Moreover, since a three-dimensional network structure with a high degree of crosslinking is formed through the curing reaction, the cured products are brittle and are not satisfactory. These hinder the practical application of the compositions, and their use has not become widespread.

Attention has been given to curable compositions containing an ethynyl group-containing compound because a highly heat resistant aromatic ring is formed through the curing reaction. However, the reactivity of the ethynyl groups is low. Therefore, to cure the curable compositions, it is necessary to use a transition metal catalyst, UV irradiation, high-temperature heating, etc. Under these conditions, materials etc. to which the curable compositions are applied may be adversely affected. Therefore, their practical applications and commercial development are limited.

The present inventors have found that an alkyne conjugated with an electron-withdrawing substituent exhibits high reactivity and can undergo reactions with a wide range of substances under mild reaction conditions. Therefore, the reaction conditions are less restricted, and the orientation of the reaction can be controlled.

One object to be achieved by the invention is to provide a curable resin composition that can cure at a low curing temperature in a short time with fewer limitations imposed on the reaction conditions for curing and that can form a cured product having a high glass transition temperature and high heat resistance.

Another object to be achieved by the invention is to provide a novel ethynyl group-containing compound that has an ethynyl group exhibiting high reactivity, that can cure at a low curing temperature in a short time with fewer limitations imposed on the reaction conditions for curing, and that can form a cured product having a high glass transition temperature and high heat resistance.

### Solution to Problem

To achieve the foregoing objects, the inventors have conducted extensive studies on a curing system that cures at a low temperature, contains a small amount of a volatile component, and forms a cured product capable of maintaining high stability even at high temperatures.

The inventors have thus found that a curable composition containing a compound represented by formula (A1) and having an ethynyl group conjugated with an electron-withdrawing group X¹¹ exhibits a weight loss of 5% or less in TG-DTA (thermogravimetry-differential thermal analysis) measurement when heated from 30°C to 300°C at a heating rate of 10°C/min in a nitrogen atmosphere and that the curable composition has properties suitable for use in the vicinity of high-temperature-operating semiconductor devices, and thus the invention has been completed. Specifically, the invention is as follows.

### [Item 1]

A curable composition containing an ethynyl group-containing compound represented by formula (A1): 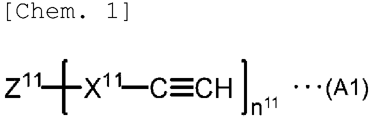 (wherein, in formula (A1), Z¹¹ is an n-valent aromatic organic group including at least one group selected from the group consisting of Ar¹¹, 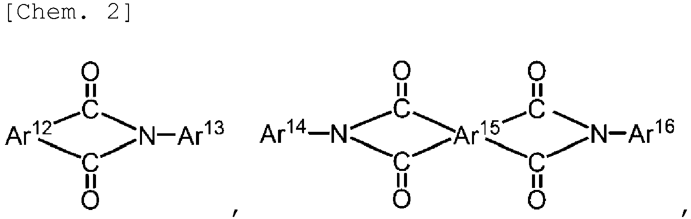 -O-, -S-, -C(=O)-, -S(=O)-, -S(=O)₂-, -P(=O)R¹¹-, - P(=O)(OR¹²)-, -NR¹³CO-, -COO-, -NR¹⁴-, and a direct bond;
Ar¹¹, Ar¹³, Ar¹⁴, and Ar¹⁶ are each independently a monovalent or higher-valent aromatic ring optionally having a substituent;
Ar¹² is a divalent or higher-valent aromatic ring optionally having a substituent;
Ar¹⁵ is a tetravalent or higher-valent aromatic ring optionally having a substituent;
-X¹¹-C≡CH is bonded to any of Ar¹¹ to Ar¹⁶;
R¹¹ to R¹⁴ are each independently hydrogen or a monovalent organic group; and
in Z¹¹, -O-, -S-, -C(=O)-, -S(=O)-, -S(=O)₂-, -P(=O)R¹¹-, -P(=O)(OR¹²)-, -NR¹³CO-, -COO-, and -NR¹⁴- are not directly bonded to one another.
-X¹¹- is a divalent group selected from the group consisting of -C(=O)-, -S(=O)-, -S(=O)₂-, -P(=O)R¹⁵-, and - P(=O)(OR¹⁶)-, and
R¹⁵ and R¹⁶ are each independently hydrogen or a monovalent organic group.
n¹¹ is an integer of 1 or more.
When more than one Ar¹¹, Ar¹², Ar¹³, Ar¹⁴, Ar¹⁵, Ar¹⁶, R¹¹, R¹², R¹³, R¹⁴, R¹⁵, R¹⁶, or -X¹¹- is present, they may be the same or different.).

### [Item 2]

The curable composition according to Item 1, wherein, in formula (A1) above,
when n¹¹ is 2, -X¹¹- is -C(=O)-, and Z¹¹ is 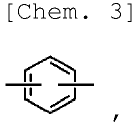 then the two -X¹¹-C≡CH groups are in ortho or meta positions; and
when n¹¹ is 2, -X¹¹- is -C(=O)-, and Z¹¹ is 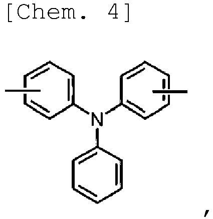 then at least one -X¹¹-C≡CH group is in an ortho or meta position relative to N.

### [Item 3]

The curable composition according to Item 1 or 2, wherein the ethynyl group-containing compound represented by formula (A1) above includes a compound in which n¹¹ is an integer of 2 or more, and wherein an average value of n¹¹ in the curable composition as a whole is 1.5 or more.

### [Item 4]

The curable composition according to any one of Items 1 to 3, wherein the following requirement (I) and/or requirement (II) is satisfied:
(I) in TG-DTA (thermogravimetry-differential thermal analysis) measurement of the curable composition, a weight loss when the curable composition is heated from 30°C to 300°C at a heating rate of 10°C/minute in a nitrogen atmosphere is 10% or less; and
(II) in TG-DTA (thermogravimetry-differential thermal analysis) measurement of a cured product of the curable composition that is obtained by heating the curable composition under conditions of 50°C or higher and 250°C or lower for 48 hours or shorter, a weight loss when the cured product is heated from 30°C to 300°C at a heating rate of 10°C/minute in a nitrogen atmosphere is 10% or less.

### [Item 5]

The curable composition according to any one of Items 1 to 4, wherein, when a cured product obtained by heating the curable composition under conditions of 50°C or higher and 250°C or lower for 48 hours or shorter is immersed in boiling tetrahydrofuran for 2 hours, subjected to solvent exchange in acetone at 25°C±5°C for 6 hours or longer, and then dried in an 80°C atmosphere under a reduced pressure of -0.1 MPa while mass measurement is performed every hour until no change in mass is observed for 3 hours or longer, an amount of insoluble matter is 70% or more.

### [Item 6]

The curable composition according to any one of Items 1 to 5, wherein the ethynyl group-containing compound represented by formula (A1) above is an ethynyl group-containing compound represented by the following formula (A2): 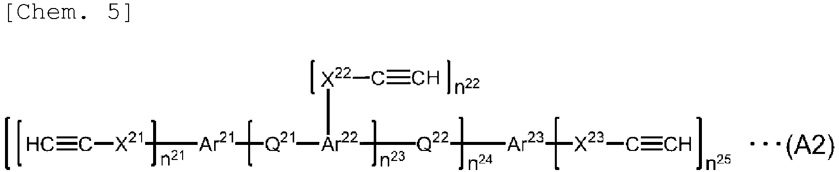 (wherein, in formula (A2), Ar²¹ to Ar²³ are each independently an n-valent aromatic organic group including at least one group selected from the group consisting of Ar²⁴, 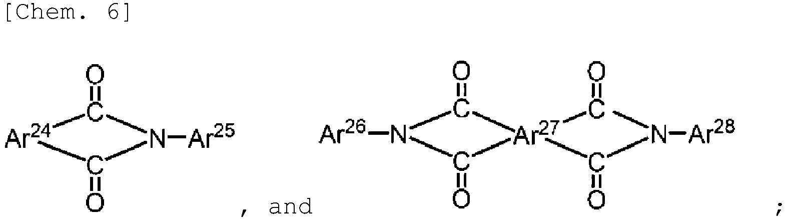
Ar²⁴, Ar²⁶, Ar²⁷, and Ar²⁹ are each independently a monovalent or higher-valent aromatic ring optionally having a substituent;
Ar²⁵ is a divalent or higher-valent aromatic ring optionally having a substituent;
Ar²⁸ is a tetravalent or higher-valent aromatic ring optionally having a substituent;
Q²¹ and Q²² are each independently a group selected from the group consisting of -O-, -S-, -C(=O)-, -S(=O)-, - S(=O)₂-, -P(=O)R²¹-, -P(=O)(OR²²)-, -NR²³CO-, -COO-, -NR²⁴-, and a direct bond; and
R²¹ to R²⁴ are each independently hydrogen or a monovalent organic group.
-X²¹- to -X²³- are each independently a divalent group selected from the group consisting of -C(=O)-, -S(=O)-, - S(=O)₂-, -P(=O)R²⁵-, and -P(=O)(OR²⁶)-, and
R²⁵ and R²⁶ are each independently hydrogen or a monovalent organic group.
n²¹ to n²⁴ are each 0 or an integer of 1 or more; n²⁵ is an integer of 1 or more; when n²⁴ is 0, n²⁵ is an integer of 2 or more;
when n²⁴ is an integer of 1 or more and n²³ is 0, then n²¹ + n²⁵ is an integer of 2 or more; and
when n²³ and n²⁴ are each an integer of 1 or more, n²¹ + n²² + n²⁵ is an integer of 2 or more.

When more than one Ar²¹, Ar²², Ar²³, Ar²⁴, Ar²⁵, Ar²⁶, Ar²⁷, Ar²⁸, Ar²⁹, -X²¹-, -X²²-, -X²³-, R²¹, R²², R²³, R²⁴, R²⁵, or R²⁶ is present, they may be the same or different.

When n²⁴ is 0, n²⁵ is 2, -X²³- is -C(=O)-, and -Ar²³- is 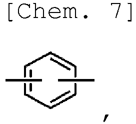 then the two -X²³-C≡CH groups are in ortho or meta positions.

When n²¹ is 1, n²³ is 0, n²⁴ is 1, -X²¹- and -X²³- are each -C(=O)-, and -Ar²¹-Q²²-Ar²³- is 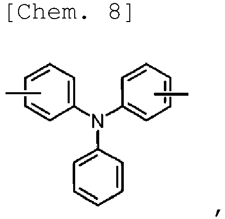 then at least one -X²³-C≡CH group is in an ortho or meta position relative to N.).

### [Item 7]

The curable composition according to Item 6, wherein the ethynyl group-containing compound represented by formula (A2) above is an ethynyl group-containing compound represented by the following formula (A3): 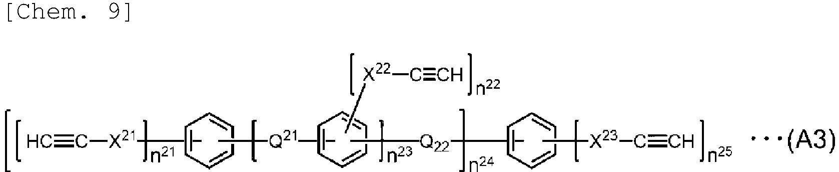 (wherein, in formula (A3), Q²¹ and Q²² are each independently a group selected from the group consisting of -O-, -S-, - C(=O)-, -S(=O)-, -S(=O)₂-, -P(=O)R²¹-, -P(=O)(OR²²)-, - NR²³CO-, -COO-, -NR²⁴-, and a direct bond, and
R²¹ to R²⁴ are each independently hydrogen or a monovalent organic group.
-X²¹- to -X²³- are each independently a divalent group selected from the group consisting of -C(=O)-, -S(=O)-, - S(=O)₂-, -P(=O)R²⁵-, and -P(=O)(OR²⁶)-, and
R²⁵ and R²⁶ are each independently hydrogen or a monovalent organic group.
n²¹ to n²⁴ are each 0 or an integer of 1 or more; n²⁵ is an integer of 1 or more; when n²⁴ is 0, n²⁵ is an integer of 2 or more;
when n²⁴ is an integer of 1 or more and n²³ is 0, then n²¹ + n²⁵ is an integer of 2 or more; and
when n²³ and n²⁴ are each an integer of 1 or more, n²¹ + n²² + n²⁵ is an integer of 2 or more.

When more than one -X²¹-, -X²²-, -X²³-, R²¹, R²², R²³, R²⁴, R²⁵, or R²⁶ is present, they may be the same or different.

When n²⁴ is 0, n²⁵ is 2, and -X²³- is -C(=O)-, then the two -X²³-C≡CH groups are in ortho or meta positions.

When n²¹, n²⁴, and n²⁵ are each 1, n²³ is 0, -X²¹- and - X²³- are each -C(=O)-, Q²² is NR²⁴, and R²⁴ is phenyl, then - X²¹-C≡CH is in an ortho or meta position relative to N.).

### [Item 8]

The curable composition according to any one of Items 1 to 6, wherein the curable composition is a single-component or multi-component curable composition.

### [Item 9]

An ethynyl group-containing compound represented by formula (B): 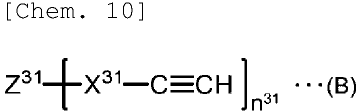 (wherein, in formula (B), Z³¹ is an n-valent aromatic organic group including at least one group selected from the group consisting of Ar³¹, 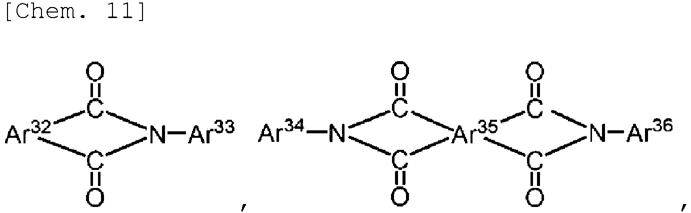 -O-, -S-, -C(=O)-, -S(=O)-, -S(=O)₂-, -P(=O)R³¹-, - P(=O)(OR³²)-, -NR³³CO-, -COO-, -NR³⁴-, and a direct bond;
Ar³¹, Ar³³, Ar³⁴, and Ar³⁶ are each independently a monovalent or higher-valent aromatic ring optionally having a substituent;
Ar³² is a divalent or higher-valent aromatic ring optionally having a substituent;
Ar³⁵ is a tetravalent or higher-valent aromatic ring optionally having a substituent;
-X³¹-C≡CH is bonded to any of Ar³¹ to Ar³⁶;
R³¹ to R³⁴ are each independently hydrogen or a monovalent organic group; and
in Z³¹, -O-, -S-, -C(=O)-, -S(=O)-, -S(=O)₂-, -P(=O)R³¹-, -P(=O)(OR³²)-, -NR³³CO-, -COO-, and -NR³⁴- are not directly bonded to one another.
-X³¹- is a divalent group selected from the group consisting of -C(=O)-, -S(=O)-, -S(=O)₂-, -P(=O)R³⁵-, and - P(=O)(OR³⁶)-, and
R³⁵ and R³⁶ are each independently hydrogen or a monovalent organic group.
n³¹ is an integer of 2 or more.

When more than one Ar³¹, Ar³², Ar³³, Ar³⁴, Ar³⁵, Ar³⁶, R³¹, R³², R³³, R³⁴, R³⁵, R³⁶, or -X³¹- is present, they may be the same or different.

When -X³¹- is -C(=O)- and Z³¹ is a phenyl ring having no substituent, then n³¹ is an integer from 3 to 6.

When n³¹ is 2, -X³¹- is -C(=O)-, and Z³¹ is 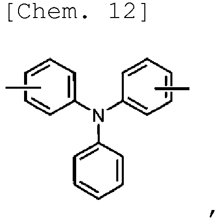 then at least one -X³¹-C≡CH group is in an ortho position relative to N, or the two -X³¹-C≡CH groups are in para and meta positions relative to N.

When n³¹ is 2, -X³¹- is -C(=O)- or -S(=O)₂-, and Z³¹ is 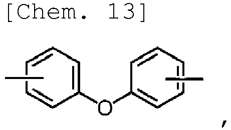 then at least one -X³¹-C≡CH group is in an ortho or meta position relative to O.

When n³¹ is 2, -X³¹- is -C(=O)-, and Z³¹ is 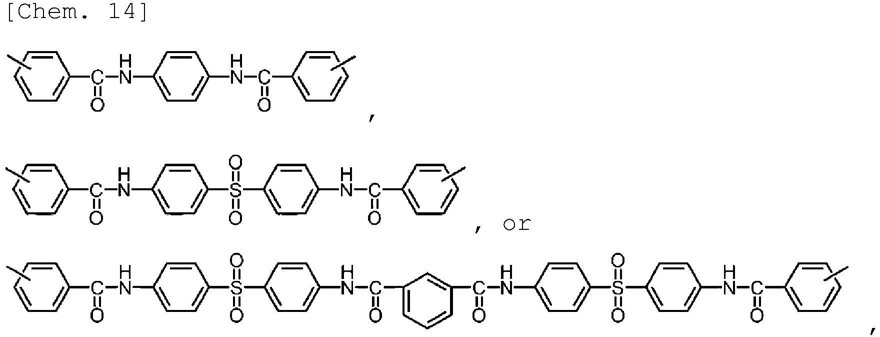 then at least one -X³¹-C≡CH group is in an ortho or meta position relative to an amide bond.

When n³¹ is 2, -X³¹- is -C(=O)-, and Z³¹ is 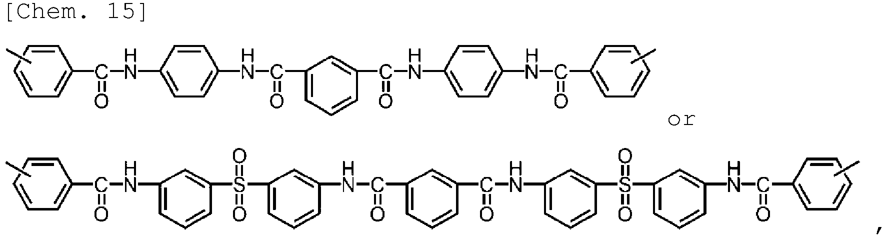 then at least one -X³¹-C≡CH group is in an ortho or para position relative to an amide bond.).

### [Item 10]

A heat-resistant resin material obtained by curing the curable composition according to any one of Items 1 to 8 or the compound according to Item 9.

### [Item 11]

An adhesive containing the curable composition according to any one of Items 1 to 8 or the compound according to Item 9.

### [Item 12]

A sealing material containing the curable composition according to any one of Items 1 to 8 or the compound according to Item 9.

### [Item 13]

A potting material containing the curable composition according to any one of Items 1 to 8 or the compound according to Item 9.

### [Item 14]

An encapsulant containing the curable composition according to any one of Items 1 to 8 or the compound according to Item 9.

### [Item 15]

A carbon material obtained by firing a curable composition containing an ethynyl group-containing compound represented by formula (A) or a cured product of the curable composition: 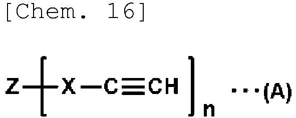 (wherein, in formula (A),
-X- is a divalent group selected from the group consisting of -C(=O)-, -S(=O)-, -S(=O)₂-, -P(=O)R^{a}-, and - P(=O)(OR^{b})-; when more than one -X- is present, they may be the same or different;
R^{a} is hydrogen or a monovalent organic group; when more than one R^{a} is present, they may be the same or different;
R^{b} is hydrogen or a monovalent organic group; when more than one R^{b} is present, they may be the same or different;
Z is an n-valent organic group; and
n is an integer of 1 or more.).

### [Item 16]

A prepreg including: a fibrous reinforcing material; and an ethynyl group-containing compound represented by formula (A): 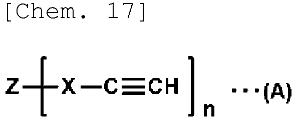 (wherein, in formula (A),
-X- is a divalent group selected from the group consisting of -C(=O)-, -S(=O)-, -S(=O)₂-, -P(=O)R^{a}-, and - P(=O)(OR^{b})-; when more than one -X- is present, they may be the same or different;
R^{a} is hydrogen or a monovalent organic group; when more than one R^{a} is present, they may be the same or different;
R^{b} is hydrogen or a monovalent organic group; when more than one R^{b} is present, they may be the same or different;
Z is an n-valent organic group; and
n is an integer of 1 or more.).

### Advantageous Effects of Invention

The present invention provides a curable resin composition that can cure at a low curing temperature in a short time with fewer limitations imposed on the reaction conditions for curing and that can form a cured product having a high glass transition temperature and high heat resistance.

The present invention can also provide a novel ethynyl group-containing compound that has an ethynyl group exhibiting high reactivity, that can cure at a low curing temperature in a short time with fewer limitations imposed on the reaction conditions for curing, and that can form a cured product having a high glass transition temperature and high heat resistance.

In the curable composition according to the invention that contains the ethynyl group-containing compound, the ethynyl group is an alkyne conjugated with a specific electron-withdrawing group. Therefore, the curable composition is highly reactive and can cure at a low curing temperature in a short time. Moreover, fewer limitations are imposed on the reaction conditions for curing such as the use of a transition metal catalyst, UV irradiation, or high-temperature heating. Therefore, the amount of the reaction promoter used can be reduced, and the orientation of the reaction can be controlled.

Moreover, by adding a filler, the thermal expansibility of the cured product can be further reduced.

### Brief Description of Drawings

[Fig. 1] A graph showing the results of TG-DTA of a curable composition 1B according to an embodiment of the invention.
[Fig. 2] A graph showing the results of TG-DTA of a curable composition 2B according to the embodiment of the invention.
[Fig. 3] A graph showing the results of TG-DTA of a curable composition 3B according to the embodiment of the invention.
[Fig. 4] A graph showing the results of TG-DTA of a curable composition 4B according to the embodiment of the invention.
[Fig. 5] A graph showing the results of TG-DTA of a curable composition 5B according to the embodiment of the invention.
[Fig. 6] A graph showing the results of TG-DTA of a curable composition 6B according to the embodiment of the invention.
[Fig. 7] A graph showing the results of TG-DTA of a curable composition 8B according to the embodiment of the invention.
[Fig. 8] A graph showing the results of TG-DTA of a curable composition 9B according to the embodiment of the invention.
[Fig. 9] A graph showing the results of TG-DTA of a heat-resistant resin material 1Ca (cured product 1Ca) obtained by curing the curable composition 1B according to the embodiment of the invention.
[Fig. 10] A graph showing the results of TG-DTA of a heat-resistant resin material 2C (cured product 2C) obtained by curing the curable composition 2B according to the embodiment of the invention.
[Fig. 11] A graph showing the results of TG-DTA of a heat-resistant resin material 3C (cured product 3C) obtained by curing the curable composition 3B according to the embodiment of the invention.
[Fig. 12] A graph showing the results of TG-DTA of a heat-resistant resin material 4C (cured product 4C) obtained by curing the curable composition 4B according to the embodiment of the invention.
[Fig. 13] A graph showing the results of TG-DTA of a heat-resistant resin material 5C (cured product 5C) obtained by curing the curable composition 5B according to the embodiment of the invention.
[Fig. 14] A graph showing the results of TG-DTA of a heat-resistant resin material 6C (cured product 6C) obtained by curing the curable composition 6B according to the embodiment of the invention.
[Fig. 15] A graph showing the results of TG-DTA of a heat-resistant resin material 7C (cured product 7C) obtained by curing the curable composition 7B according to the embodiment of the invention.
[Fig. 16] A graph showing the results of TG-DTA of a heat-resistant resin material 8C (cured product 8C) obtained by curing the curable composition 8B according to the embodiment of the invention.
[Fig. 17] A graph showing the results of TG-DTA of a heat-resistant resin material 9C (cured product 9C) obtained by curing the curable composition 9B according to the embodiment of the invention.
[Fig. 18] A graph showing the results of DMA measurement for measuring the dynamic viscoelasticity (Tg) of a heat-resistant resin material 1Cb (cured product 1Cb) obtained by curing the curable composition 1B according to the embodiment of the invention.
[Fig. 19] A graph showing the results of DMA measurement for measuring the dynamic viscoelasticity (Tg) of a heat-resistant resin material 2C (cured product 2C) obtained by curing the curable composition 2B according to the embodiment of the invention.
[Fig. 20] A graph showing the results of TG-DTA for measuring the residual carbon weight of a heat-resistant resin material 1C (cured product 1C) obtained by curing the curable composition 1B according to the embodiment of the invention.
[Fig. 21] A graph showing the results of TG-DTA for measuring the residual carbon weight of a heat-resistant resin material 2C (cured product 2C) obtained by curing the curable composition 2B according to the embodiment of the invention.

### Description of Embodiments

The present invention will next be described in detail.

### [Curable composition]

The curable composition according to the invention that contains a specific ethynyl group-containing compound is a curable composition containing an ethynyl group-containing compound represented by formula (A1).

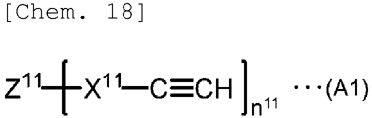

The main curing reaction of the curable composition according to the invention that contains the ethynyl group-containing compound represented by formula (A1) is a crosslinking reaction in which the ethynyl groups in the ethynyl group-containing compound represented by formula (A1) undergo cyclotrimerization. The crosslinking reaction in which the ethynyl groups undergo cyclotrimerization is a reaction for forming a phenyl ring, and the reaction proceeds without the formation/elimination of low-molecular weight components etc.

### <Ethynyl group-containing compound represented by formula (A1)>

The ethynyl group-containing compound represented by formula (A1) is as follows. 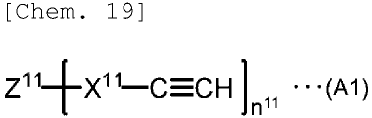 (In formula (A1), Z¹¹ is an n-valent aromatic organic group including at least one group selected from the group consisting of Ar¹¹, 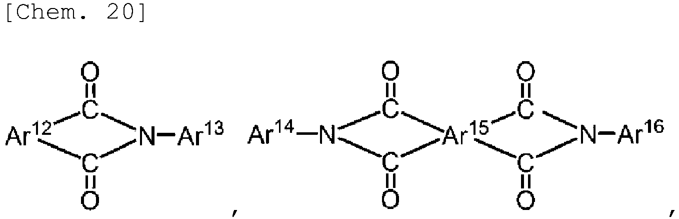 -O-, -S-, -C(=O)-, -S(=O)-, -S(=O)₂-, -P(=O)R¹¹-, - P(=O)(OR¹²)-, -NR¹³CO-, -COO-, -NR¹⁴-, and a direct bond;
Ar¹¹, Ar¹³, Ar¹⁴, and Ar¹⁶ are each independently a monovalent or higher-valent aromatic ring optionally having a substituent;
Ar¹² is a divalent or higher-valent aromatic ring optionally having a substituent;
Ar¹⁵ is a tetravalent or higher-valent aromatic ring optionally having a substituent;
-X¹¹-C≡CH is bonded to any of Ar¹¹ to Ar¹⁶;
R¹¹ to R¹⁴ are each independently hydrogen or a monovalent organic group; and
in Z¹¹, -O-, -S-, -C(=O)-, -S(=O)-, -S(=O)₂-, -P(=O)R¹¹-, -P(=O)(OR¹²)-, -NR¹³CO-, -COO-, and -NR¹⁴- are not directly bonded to one another.
-X¹¹- is a divalent group selected from the group consisting of -C(=O)-, -S(=O)-, -S(=O)₂-, -P(=O)R¹⁵-, and - P(=O)(OR¹⁶)-, and
R¹⁵ and R¹⁶ are each independently hydrogen or a monovalent organic group.
n¹¹ is an integer of 1 or more.

When more than one Ar¹¹, Ar¹², Ar¹³, Ar¹⁴, Ar¹⁵, Ar¹⁶, R¹¹, R¹², R¹³, R¹⁴, R¹⁵, R¹⁶, or -X¹¹- is present, they may be the same or different.

In the curable composition according to the invention that contains the specific ethynyl group-containing compound, the ethynyl group-containing compound represented by formula (A1) is preferably such that, when n¹¹ is 2, -X¹¹-is -C(=O)-, and Z¹¹ is 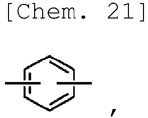 then the two -X¹¹-C≡CH groups are in the ortho or meta positions.

In the curable composition according to the invention that contains the specific ethynyl group-containing compound, the ethynyl group-containing compound represented by formula (A1) is preferably such that, when n¹¹ is 2, -X¹¹-is -C(=O)-, and Z¹¹ is 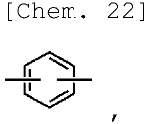 then the two -X¹¹-C≡CH groups are in the ortho or meta positions.

In the curable composition according to the invention that contains the specific ethynyl group-containing compound, the ethynyl group-containing compound represented by formula (A1) is preferably such that, when n¹¹ is 2, -X¹¹-is -C(=O)-, and Z¹¹ is 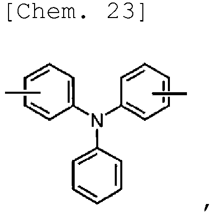 then at least one -X¹¹-C≡CH group is in the ortho or meta position relative to N.

Examples of the aromatic rings included in Ar¹¹ to Ar¹⁶ in Z¹¹ in formula (A1) include hydrocarbon aromatic rings and heteroaromatic rings. These rings may be either monocyclic or polycyclic. These rings may be rings that themselves exhibit aromaticity, rings fused to aromatic rings, or combinations of any of these rings bonded together.

Examples of the hydrocarbon aromatic rings include a benzene ring, a naphthalene ring, an anthracene ring, a tetracene ring, a pyrene ring, a spirodifluorene ring, a phenanthrene ring, and a perylene ring.

Examples of the heteroaromatic ring include a pyridine ring, a pyrazine ring, a pyrimidine ring, a triazine ring, a pyridazine ring, a pyrrole ring, an imidazole ring, an oxazole ring, an oxadiazole ring, a thiadiazole ring, a thiazole ring, a phenoxazine ring, an isoquinoline ring, a benzopyran ring, an indole ring, a cridine ring, an acridine ring, a quinoline ring, a carbazole ring, a quinoxaline ring, a furan ring, a benzofuran ring, a dibenzofuran ring, a benzopyran ring, a dibenzodioxin ring, a thiophene ring, a benzothiophene ring, a thienylene ring, a phenothiazine ring, a thienothiophene ring, a dithienothiophene ring, a pyrazole ring, a phosphole ring, a dibenzophosphole ring, a dibenzosilole ring, and a dibenzoborole ring.

The "monovalent or higher-valent aromatic rings" represented by Ar¹¹, Ar¹³, Ar¹⁴, and Ar¹⁶ in Z¹¹ in formula (A1) each include at least one aromatic ring selected from: monovalent and higher-valent aromatic rings obtained by removing at least one of the hydrogen atoms directly bonded to the carbon atoms and hetero atom(s) (such as a nitrogen or sulfur atom) forming the aromatic rings; and monovalent and higher-valent aromatic rings formed by combining at least two of these monovalent and higher-valent aromatic rings.

The "divalent or higher-valent aromatic ring" represented by Ar¹² in Z¹¹ in formula (A1) includes at least one aromatic ring selected from: divalent and higher-valent aromatic rings obtained by removing at least two of the hydrogen atoms directly bonded to the carbon atoms and hetero atom(s) (such as a nitrogen or sulfur atom(s)) forming the aromatic rings; and divalent and higher-valent aromatic rings formed by combining at least two monovalent or higher-valent aromatic rings.

The "tetravalent or higher-valent aromatic ring" represented by Ar¹⁵ in Z¹¹ in formula (A1) includes at least one aromatic ring selected from: tetravalent and higher-valent aromatic rings obtained by removing at least four of the hydrogen atoms directly bonded to the carbon atoms and hetero atom(s) (such as a nitrogen or sulfur atom(s)) forming the aromatic rings; and tetravalent and higher-valent aromatic rings formed by combining at least two monovalent and higher-valent aromatic rings.

No particular limitation is imposed on the optional substituents on Ar¹¹ to Ar¹⁶ in Z¹¹ in formula (A1), so long as they do not inhibit the crosslinking reaction through cyclotrimerization of the ethynyl groups in the -X¹¹-C≡CH groups. For example, each substituent includes at least one selected from the group consisting of a fluorine atom, a chlorine atom, a bromine atom, an iodine atom, a cyano group, a cyanate group (-OCN group), alkyl groups having 1 to 20 carbon atoms, halogenated alkyl groups having 1 to 20 carbon atoms, aryl groups having 6 to 30 carbon atoms, alkoxy groups having 1 to 20 carbon atoms, aryloxy groups having 6 to 30 carbon atoms, ketoalkyl groups having 2 to 20 carbon atoms, ketoaryl groups having 7 to 30 carbon atoms, an amino group, alkylamino groups having 1 to 20 carbon atoms, dialkylamino groups having 2 to 40 carbon atoms, a carboxy group, a hydroxy group, carboxylic acid alkyl esters having 1 to 21 carbon atoms, alkenyl groups having 2 to 20 carbon atoms, and alkynyl groups having 2 to 20 carbon atoms.

No particular limitation is imposed on the number of substituents on Ar¹¹ to Ar¹⁶ in Z¹¹ in formula (A1), and the number of substituents is 0 or more.

No particular limitation is imposed on the monovalent organic groups represented by R¹¹ to R¹⁴ in Z¹¹ in formula (A1) and R¹⁵ to R¹⁶ in X¹¹ in formula (A1), so long as they do not inhibit the crosslinking reaction through cyclotrimerization of the ethynyl groups in the -X¹¹-C≡CH groups. For example, each monovalent organic group includes at least one selected from the group consisting of alkyl groups having 1 to 20 carbon atoms, halogenated alkyl groups having 1 to 20 carbon atoms, and aryl groups having 6 to 30 carbon atoms.

n¹¹ in formula (A1) is an integer of 1 or more, and the average n¹¹ (apparent n¹¹) in the curable composition as a whole is, for example, 1.3 or more, preferably 1.5 or more, more preferably 1.7 or more, still more preferably 1.9 or more, and particularly preferably 2.0 or more and is, for example, 10.0 or less, preferably 8.0 or less, more preferably 6.0 or less, still more preferably 4.0 or less, and particularly preferably 3.0 or less.

In the curable composition according to the invention, a mixture of compounds with different n¹¹ values may be used as the ethynyl group-containing compound represented by formula (A1).

If the average n¹¹ in the curable composition as a whole is small, the molecular weight of a cured product obtained from the curable composition is small, and the degree of crosslinking of the cured product is insufficient. This may adversely affect both the heat resistance and mechanical properties. If the average n¹¹ in the curable composition as a whole is excessively large, the curability of the curable composition is excessively high. This may adversely affect both the storage stability and handleability, and the cured product may become brittle.

The "average n¹¹ in the curable composition as a whole" is the sum of the products of the values of n¹¹ of the respective compounds represented by formula (A1) in the curable composition and their presence ratios and can be determined using the following formula. 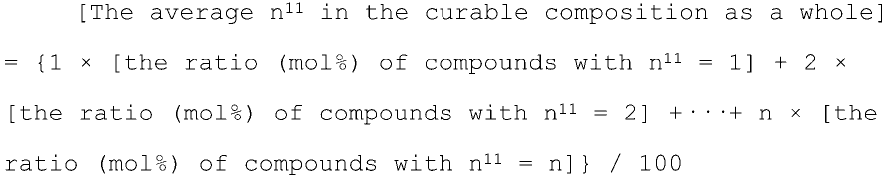 [The average n11 in the curable composition as a whole] = {1 × [the ratio (mol%) of compounds with n11 = 1] + 2 × [the ratio (mol%) of compounds with n11 = 2] +···+ n × [the ratio (mol%) of compounds with n11 = n]} / 100

In the curable composition according to the invention that contains the specific ethynyl group-containing compound, the ethynyl group-containing compound represented by formula (A1) is preferably an ethynyl group-containing compound represented by the following formula (A2): 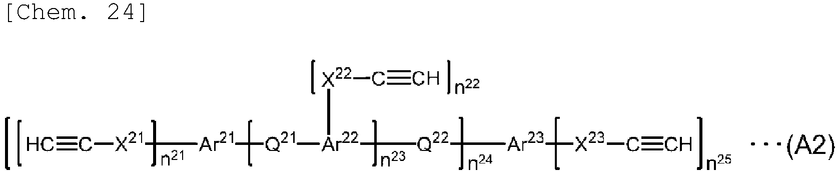 (wherein, in formula (A2), Ar²¹ to Ar²³ are each independently an n-valent aromatic organic group selected from the group consisting of Ar²⁴, 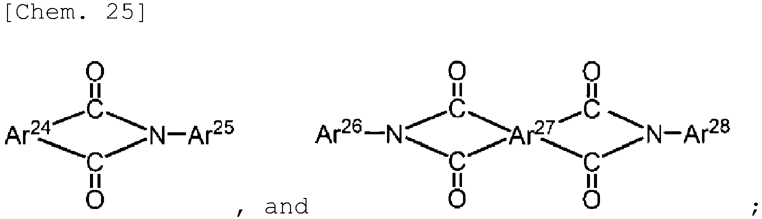
Ar²⁴, Ar²⁶, Ar²⁷, and Ar²⁹ are each independently a monovalent or higher-valent aromatic ring optionally having a substituent;
Ar²⁵ is a divalent or higher-valent aromatic ring optionally having a substituent;
Ar²⁸ is a tetravalent or higher-valent aromatic ring optionally having a substituent;
Q²¹ and Q²² are each independently a group selected from the group consisting of -O-, -S-, -C(=O)-, -S(=O)-, - S(=O)₂-, -P(=O)R²¹-, -P(=O)(OR²²)-, -NR²³CO-, -COO-, -NR²⁴-, and a direct bond; and
R²¹ to R²⁴ are each independently hydrogen or a monovalent organic group.
-X²¹- to -X²³- are each independently a divalent group selected from the group consisting of -C(=O)-, -S(=O)-, - S(=O)₂-, -P(=O)R²⁵-, and -P(=O)(OR²⁶)-, and
R²⁵ and R²⁶ are each independently hydrogen or a monovalent organic group.
n²¹ to n²⁴ are each 0 or an integer of 1 or more; n²⁵ is an integer of 1 or more; when n²⁴ is 0, n²⁵ is an integer of 2 or more;
when n²⁴ is an integer of 1 or more and n²³ is 0, then n²¹ + n²⁵ is an integer of 2 or more; and
when n²³ and n²⁴ are each an integer of 1 or more, n²¹ + n²² + n²⁵ is an integer of 2 or more.

When more than one Ar²¹, Ar²², Ar²³, Ar²⁴, Ar²⁵, Ar²⁶, Ar²⁷, Ar²⁸, Ar²⁹, -X²¹-, -X²²-, -X²³-, R²¹, R²², R²³, R²⁴, R²⁵, or R²⁶ is present, they may be the same or different.

When n²⁴ is 0, n²⁵ is 2, -X²³- is -C(=O)-, and -Ar²³- is 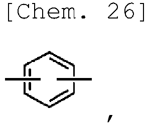 then the two -X²³-C≡CH groups are in the ortho or meta positions.

When n²¹ is 1, n²³ is 0, n²⁴ is 1, -X²¹- and -X²³- are each -C(=O)-, and -Ar²¹-Q²²-Ar²³- is 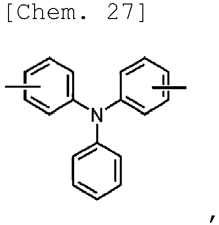 then at least one -X¹¹-C≡CH group is in the ortho or meta position relative to N.).

The aromatic rings included in Ar²¹ to Ar²⁹ in formula (A2) are the same as the aromatic rings included in Ar¹¹ to Ar¹⁶ in Z¹¹ in formula (A1).

The optional substituents on Ar²¹ to Ar²⁹ in formula (A2) are the same as the optional substituents on Ar¹¹ to Ar¹⁶ in Z¹¹ in formula (A1).

The monovalent organic groups represented by R¹¹ to R¹⁴ in Q²¹ and Q²² and R¹⁵ to R¹⁶ in -X²¹- to -X²³- in formula (A2) are the same as the monovalent organic groups represented by R¹¹ to R¹⁴ in Z¹¹ in formula (A1) and R¹⁵ to R¹⁶ in -X²¹- to - X²³- in formula (A1).

In the curable composition according to the invention that contains the specific ethynyl group-containing compound, the ethynyl group-containing compound represented by formula (A2) above is more preferably an ethynyl group-containing compound represented by the following formula (A3): 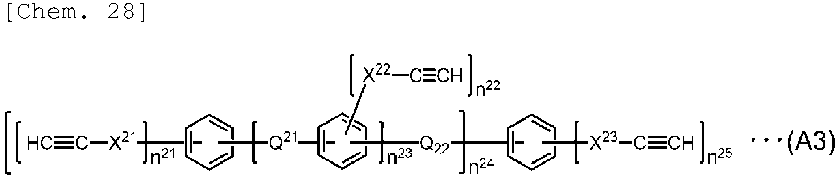 (wherein, in formula (A3), Q²¹ and Q²² are each independently a group selected from the group consisting of -O-, -S-, - C(=O)-, -S(=O)-, -S(=O)₂-, -P(=O)R²¹-, -P(=O)(OR²²)-, - NR²³CO-, -COO-, -NR²⁴-, and a direct bond, and
R²¹ to R²⁴ are each independently hydrogen or a monovalent organic group.
-X²¹- to -X²³- are each independently a divalent group selected from the group consisting of -C(=O)-, -S(=O)-, - S(=O)₂-, -P(=O)R²⁵-, and -P(=O)(OR²⁶)-, and
R²⁵ and R²⁶ are each independently hydrogen or a monovalent organic group.
n²¹ to n²⁴ are each 0 or an integer of 1 or more; n²⁵ is an integer of 1 or more; when n²⁴ is 0, n²⁵ is an integer of 2 or more;
when n²⁴ is an integer of 1 or more and n²³ is 0, then n²¹ + n²⁵ is an integer of 2 or more; and
when n²³ and n²⁴ are each an integer of 1 or more, n²¹ + n²² + n²⁵ is an integer of 2 or more.

When more than one -X²¹-, -X²²-, -X²³-, R²¹, R²², R²³, R²⁴, R²⁵, or R²⁶ is present, they may be the same or different.

When n²⁴ is 0, n²⁵ is 2, and -X²³- is -C(=O)-, then the two -X²³-C≡CH groups are in the ortho or meta positions.

When n²¹, n²⁴, and n²⁵ are each 1, n²³ is 0, -X²¹- and - X²³- are each -C(=O)-, Q²² is NR²⁴, and R²⁴ is phenyl, then the -X²¹-C≡CH group is in the ortho or meta position relative to N.).

Among the ethynyl group-containing compounds that are represented by formula (A1) and can be contained in the curable composition according to the invention, compounds in which -X¹¹- is -C(=O)- include, for example, the following compounds (Aa1) to (Aa98).

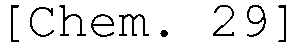

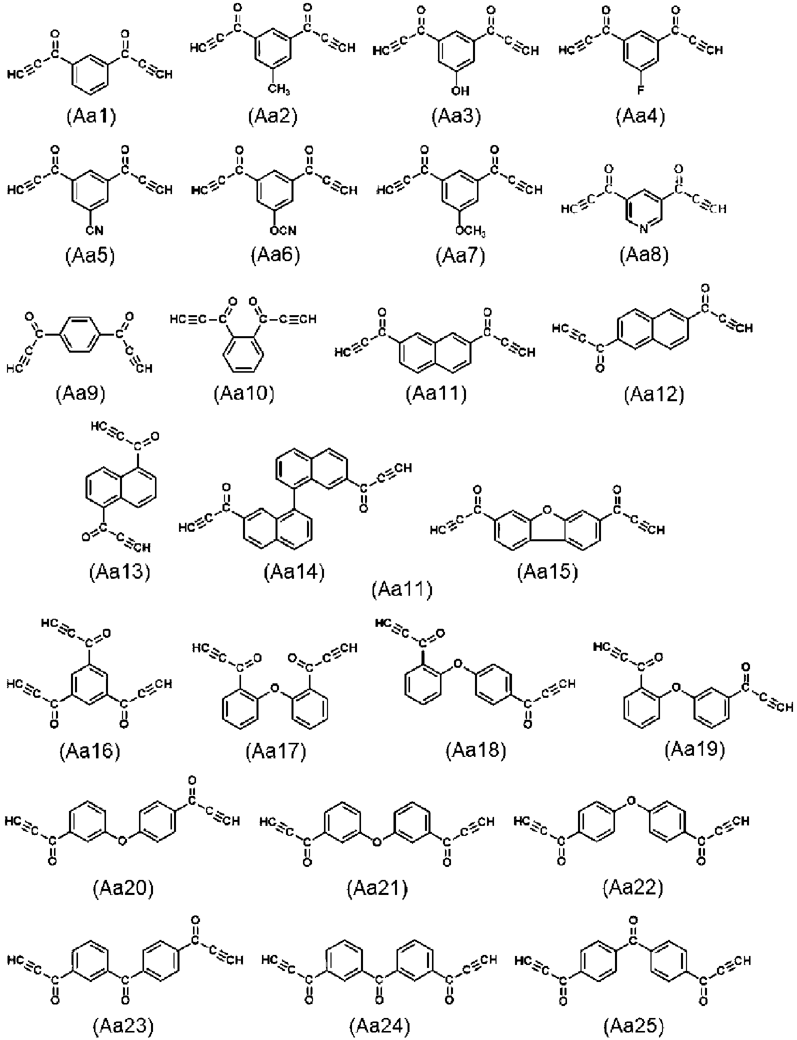

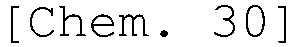

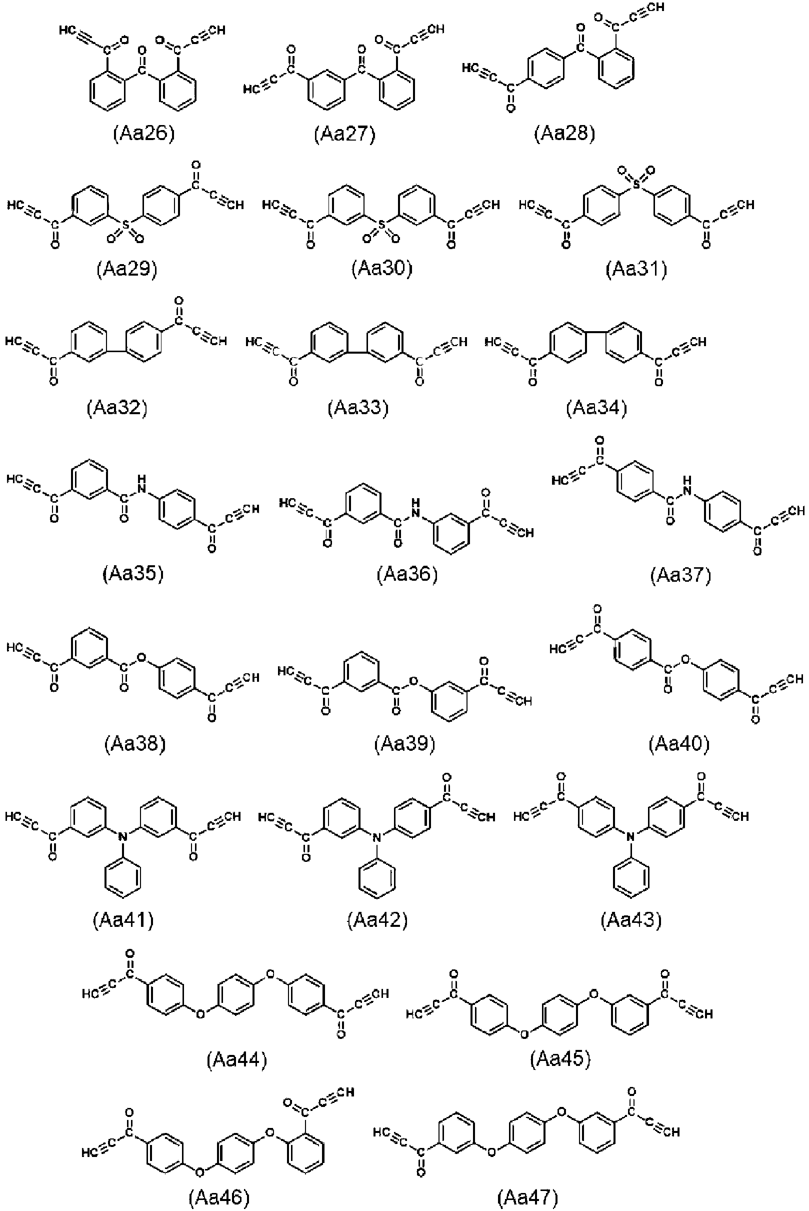

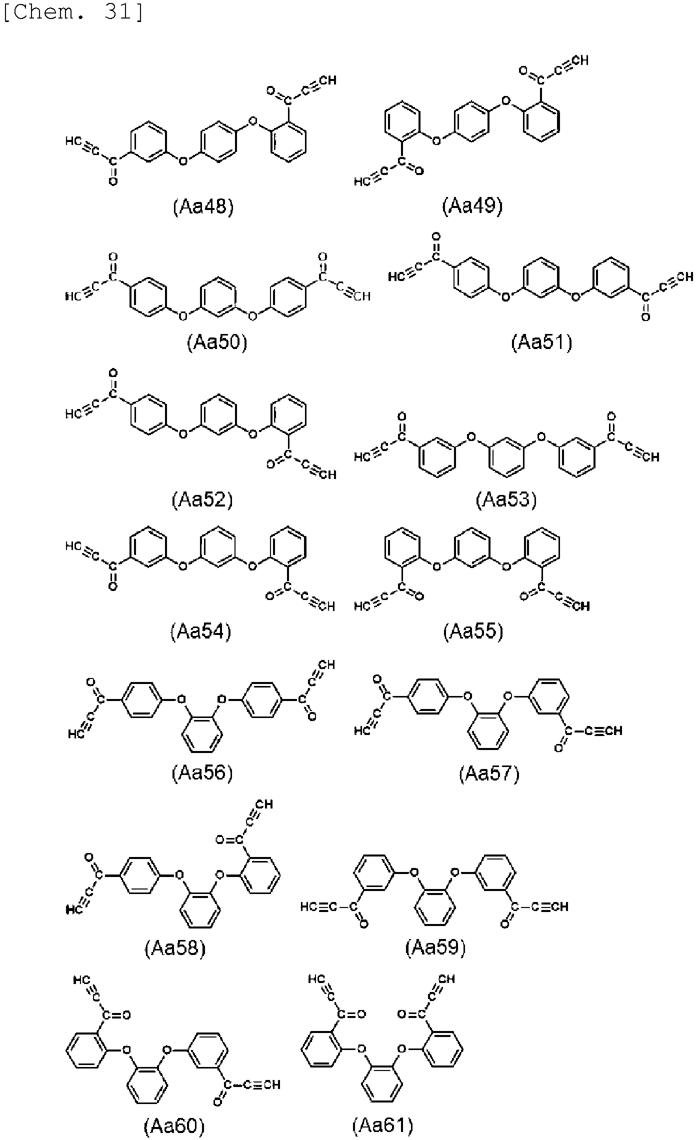

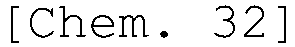

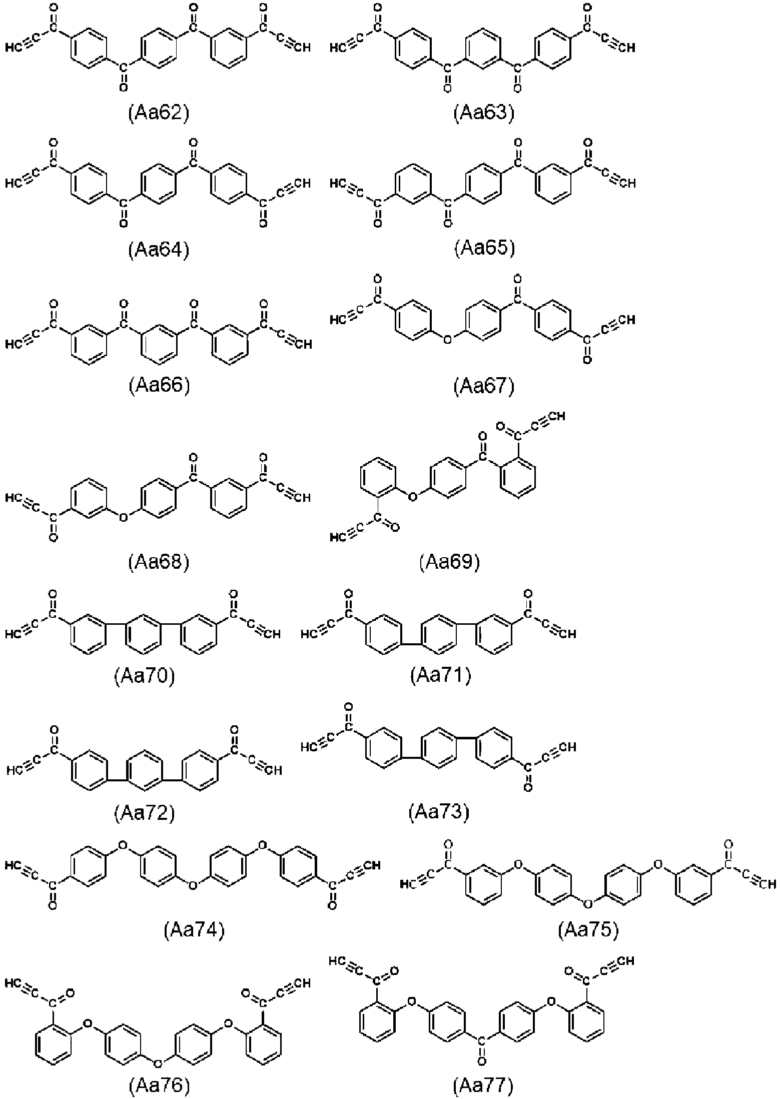

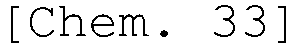

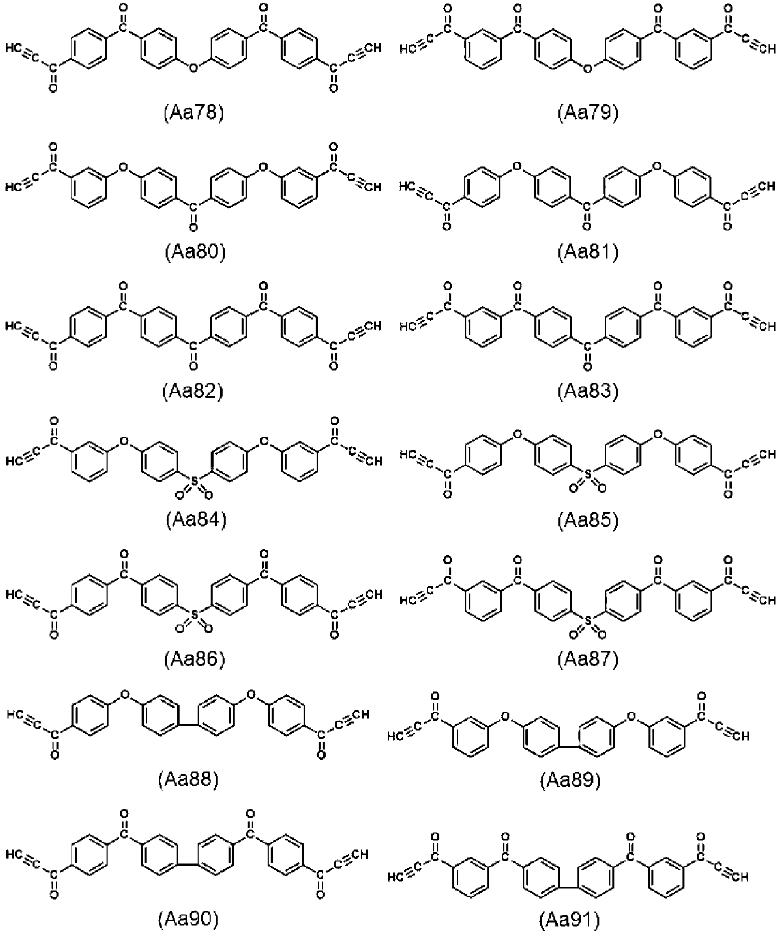

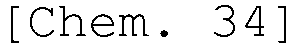

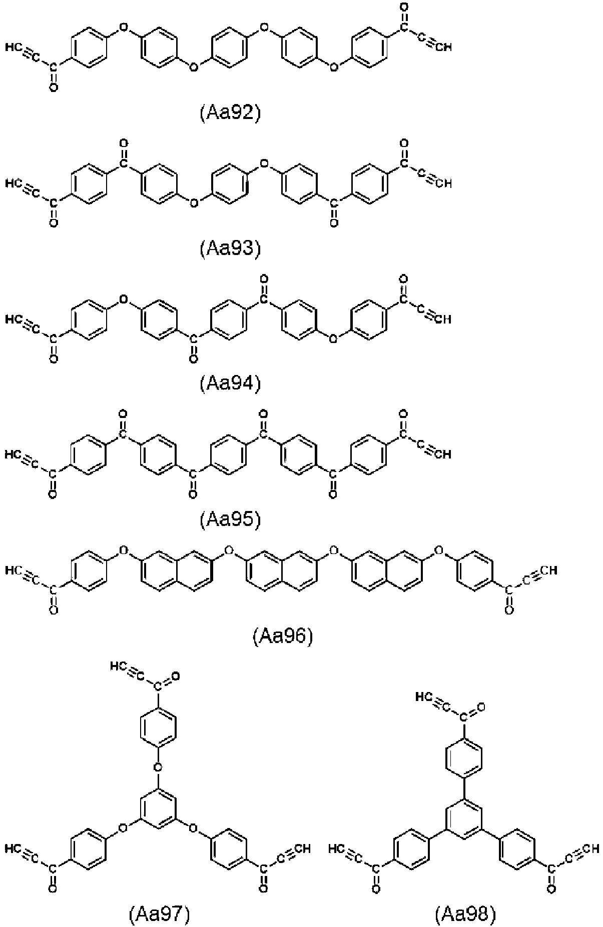

Among the ethynyl group-containing compounds that are represented by formula (A1) and can be contained in the curable composition according to the invention, compounds in which -X¹¹- is -S(=O)- include, for example, the following compounds (Ab1) to (Ab35).

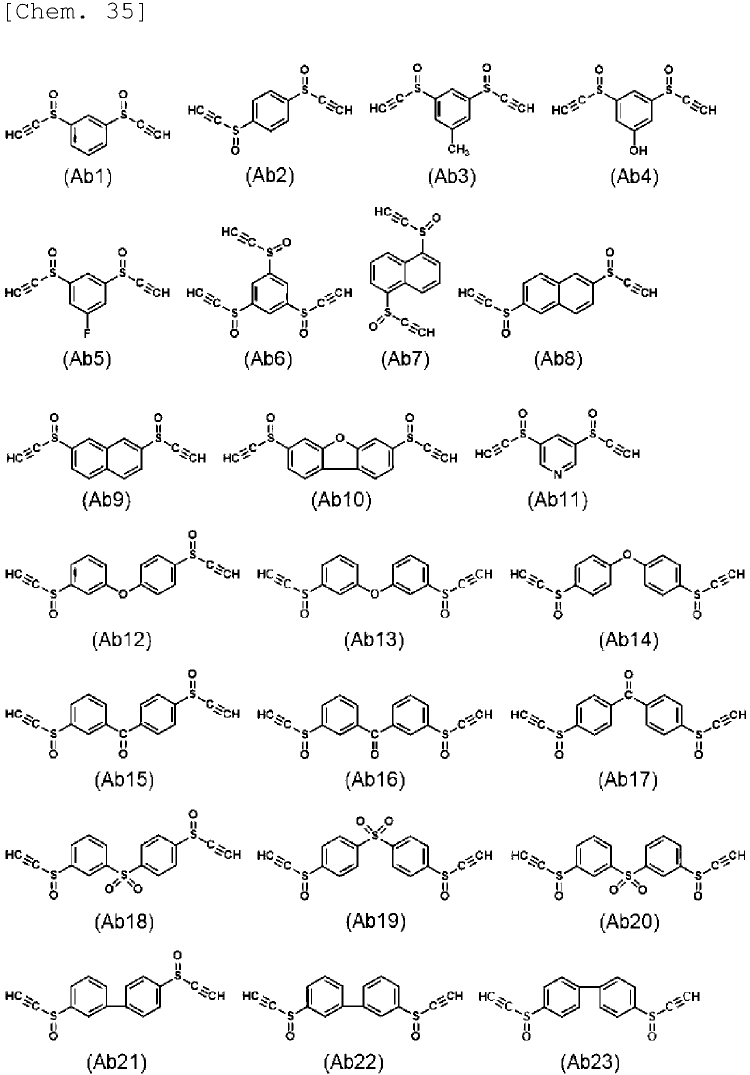

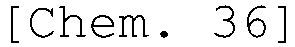

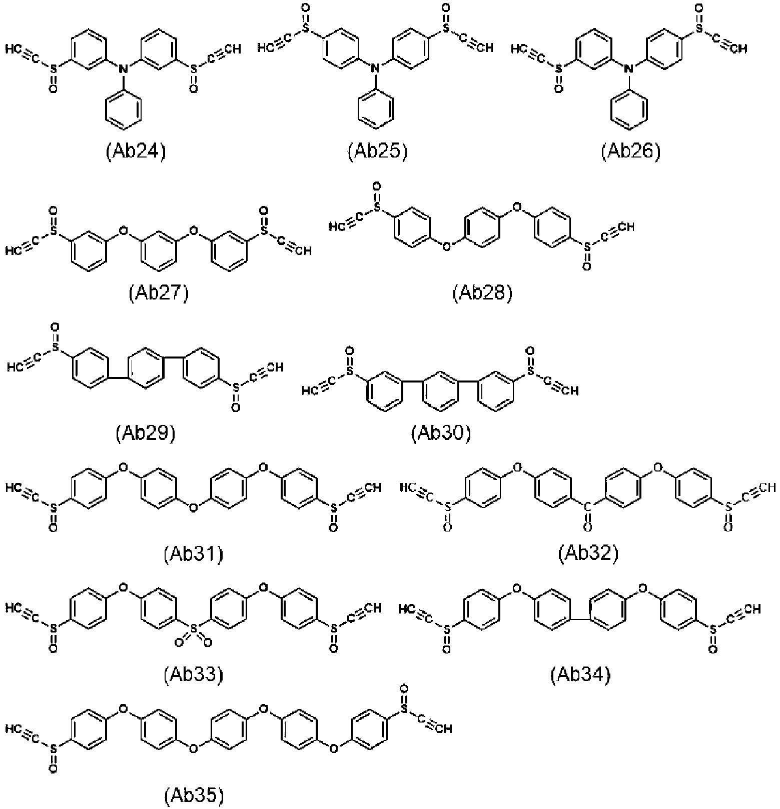

Among the ethynyl group-containing compounds that are represented by formula (A1) and can be contained in the curable composition according to the invention, compounds in which -X¹¹- is -S(=O)₂- include, for example, the following compounds (Ac1) to (Ac35).

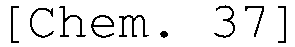

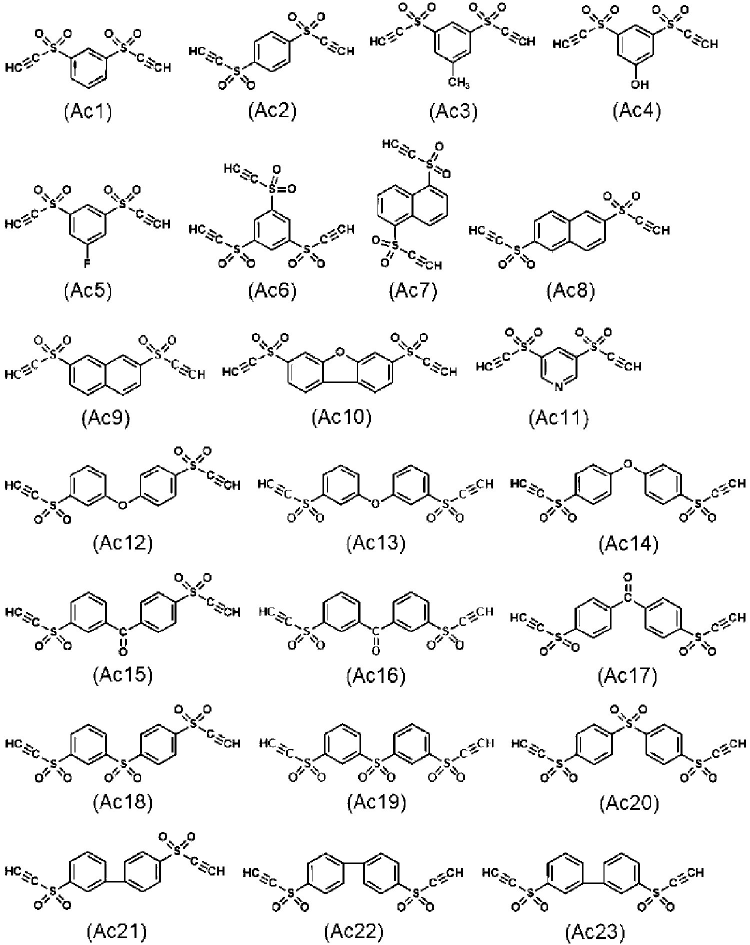

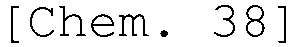

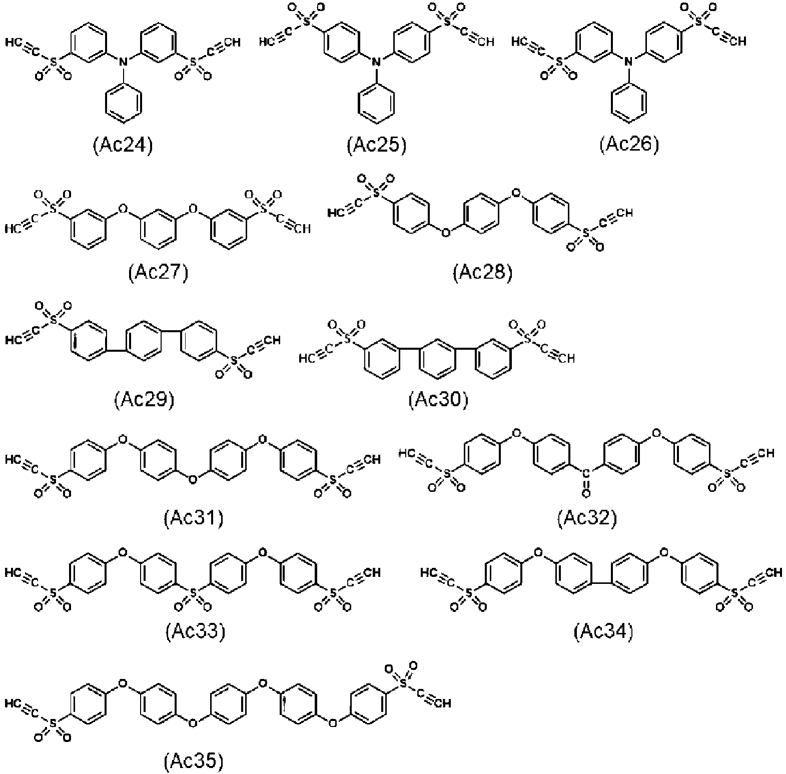

Among the ethynyl group-containing compounds that are represented by formula (A1) and can be contained in the curable composition according to the invention, compounds in which -X¹¹- is -P(=O)R¹⁵- include, for example, the following compounds (Ad1) to (Ad64).

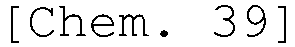

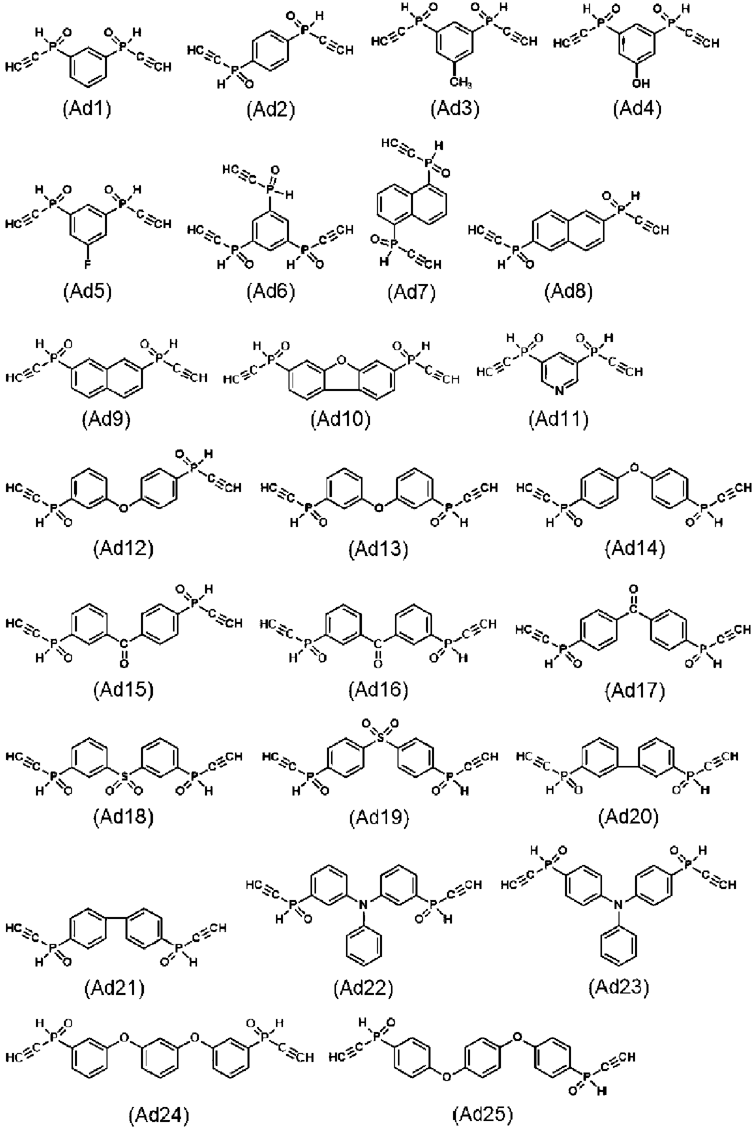

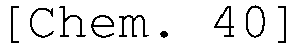

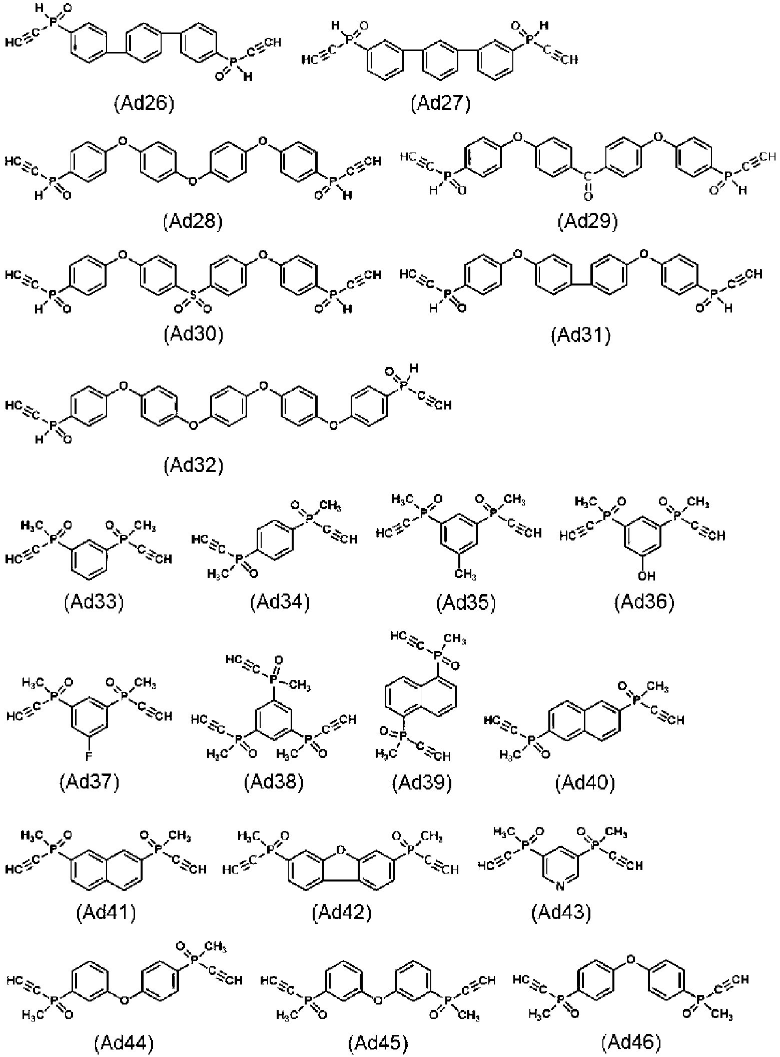

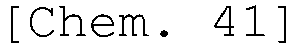

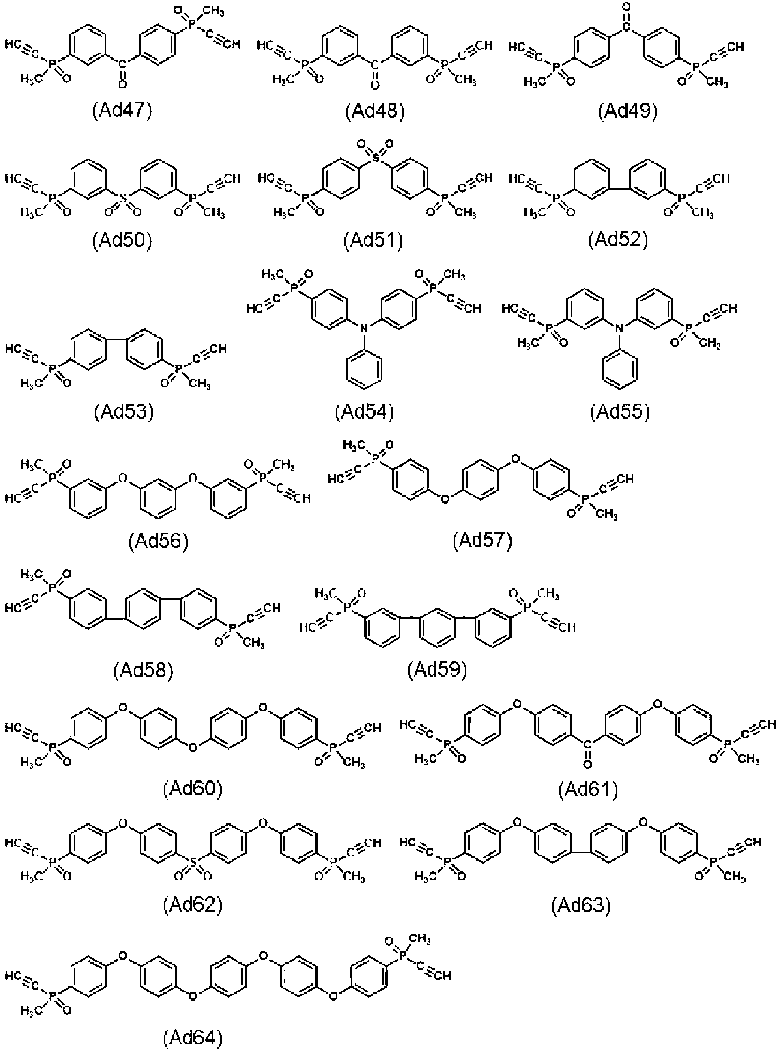

Among the ethynyl group-containing compounds that are represented by formula (A1) and can be contained in the curable composition according to the invention, compounds in which -X¹¹- is -P(=O)(OR¹⁶)- include, for example, the following compounds (Ae1) to (Ae32).

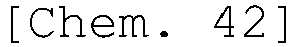

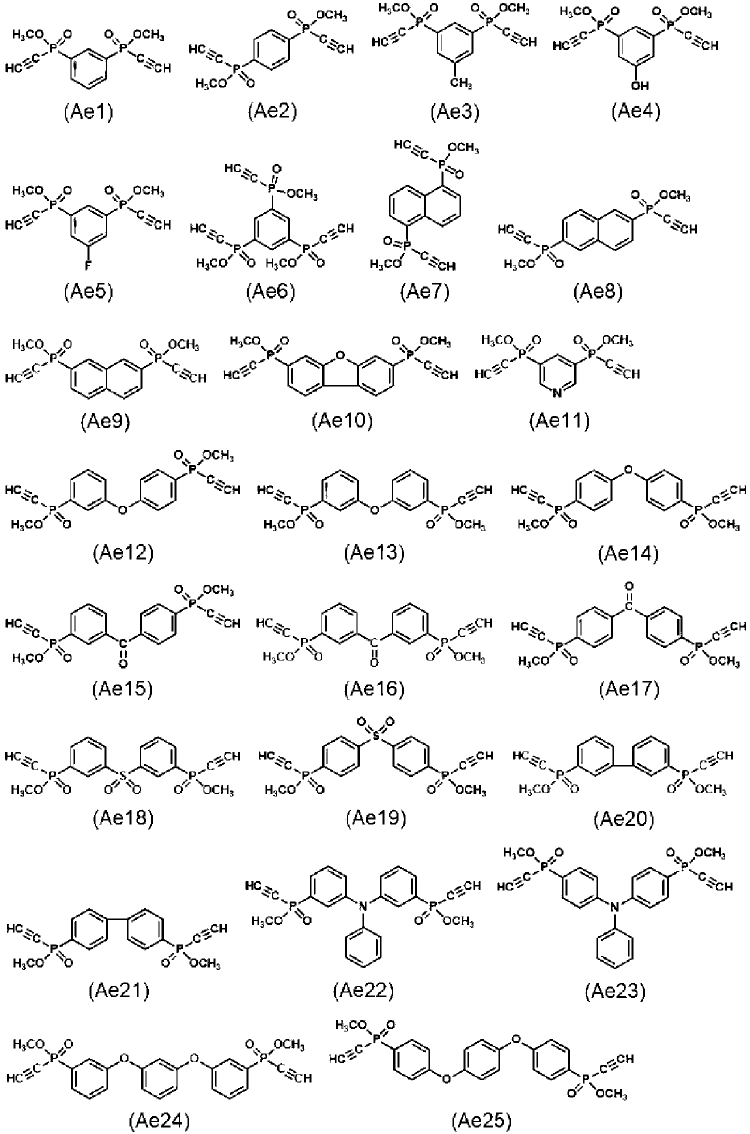

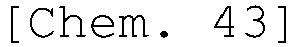

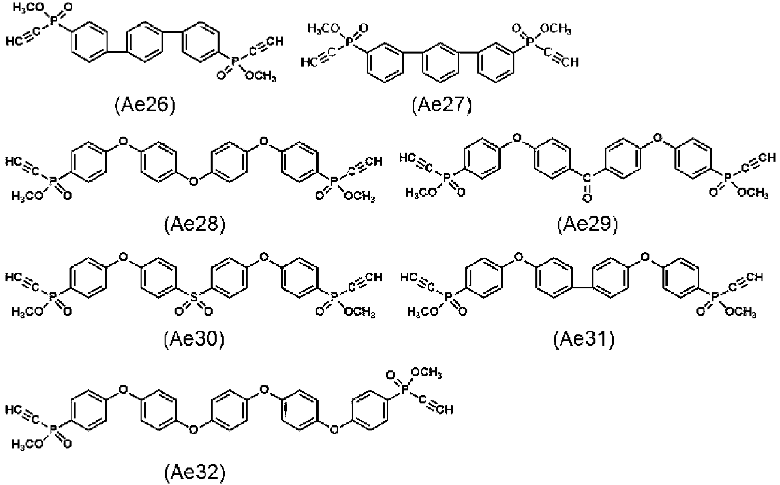

Among the ethynyl group-containing compounds that are represented by formula (A1) and can be contained in the curable composition according to the invention,
the compound in which X¹¹- is -C(=O)- is preferably any of the compounds represented by (Aa1), (Aa4) to (Aa6), and (Aa8) to (Aa95));
the compound in which X¹¹- is -S(=O)- is preferably any of the compounds represented by (Ab1) to (Ab2), and (Aa5) to (Ab34);
the compound in which X¹¹- is -S(=O)₂- is preferably any of the compounds represented by (Ac1) to (Ac2) and (Ac5) to (Ac34);
the compound in which X¹¹- is -P(=O)R¹⁵- is preferably any of the compounds represented by (Ad1) to (Ad2), (Ad5) to (Ad34), and (Ad37) to (Ad63); and
the compound in which X¹¹- is -P(=O)(OR¹⁶)- is preferably any of the compounds represented by (Ae1) to (Ae2) and (Ae5) to (Ae34).

Of these, at least one selected from the group consisting of the compounds in which -X¹¹- is -C(=O)-, - S(=O)-, or -S(=O)₂- is preferred from the viewpoint of the reactivity etc. of the ethynyl group-containing compound.

The compounds in which -X¹¹- is -C(=O)- or -S(=O)₂- are still more preferred.

More preferably, the compounds represented by (Aa1), (Aa4) to (Aa6), and (Aa8) to (Aa95) in which -X¹¹- is -C(=O)- and the compounds represented by (Ac1) to (Aa35) in which - X¹¹- is -S(=O)₂- are particularly preferred.

Among the ethynyl group-containing compounds that are represented by formula (A1) and can be contained in the curable composition according to the invention, the compound in which n¹¹ is 1 includes, for example, at least one selected from the group consisting of the compounds represented by (Aa1) to (Aa95) and having only one -C(=O)-C≡CH group, the compounds represented by (Ab1) to (Ab35) and having only one -S(=O)-C≡CH group, the compounds represented by (Ac1) to (Ac35) and having only one -S(=O)₂-C≡CH group, the compounds represented by (Ad1) to (Ad64) and having only one -P(=O)R¹⁵-C≡CH group, and the compounds represented by (Ae1) to (Ae32) and having only one -P(=O)(OR¹⁶)-C≡CH group.

### <Content of ethynyl group-containing compound represented by formula (A1))

No particular limitation is imposed on the content of the ethynyl group-containing compound represented by formula (A1) in the curable composition according to the invention that contains the ethynyl group-containing compound represented by formula (A1). The content can be appropriately adjusted according to the intended application and the desired properties.

For example, the curable composition may be composed entirely of the ethynyl group-containing compound represented by formula (A1).

For example, the total amount of the curable composition is defined as 100% by mass. Then, the ethynyl group-containing compound represented by formula (A1) may be contained in an amount of less than 100% by mass, preferably 99.7% by mass or less, and more preferably 99.5% by mass or less and in an amount of, for example, 10% by mass or more, preferably 30% by mass or more, and more preferably 50% by mass or more.

<Additives>

The curable composition according to the invention that contains the ethynyl group-containing compound represented by formula (A1) may contain, in addition to the ethynyl group-containing compound represented by formula (A1), at least one optional additive selected from the group consisting of curable components other than the ethynyl group-containing compound represented by formula (A1), a curing accelerator, a filler, fibers, a flame retardant, a solvent, an antioxidant, a light stabilizer, an ultraviolet absorber, a resin, a coupling agent, an electroconductive material a coloring agent, a release agent, a dispersant, an adhesion imparting agent, a tackifier, an anti-sagging agent, a thixotropic agent, a pore-forming material, a foaming agent, an emulsifier, a plasticizer, etc.

### (Curable component other than ethynyl group-containing compound represented by formula (A1))

No particular limitation is imposed on the curable component other than the ethynyl group-containing compound represented by formula (A1), so long as it is a component capable of reacting with the ethynyl group-containing compound represented by formula (A1) or a component capable of forming an interpenetrating polymer network structure (IPN structure) when the curable composition according to the invention that contains the ethynyl group-containing compound represented by formula (A1) is cured.

The curable component is, for example, an ethynyl group-containing compound other than the ethynyl group-containing compound represented by formula (A1), a compound having an ethylenically unsaturated group such as a vinyl group, an allyl group, a (meth)acryloyloxy group, or a maleimide group, or a compound having at least one reactive group selected from the group consisting of a cyanate group (-OCN group), a hydroxy group, an epoxy group, an isocyanate group, an amino group, a mercapto group, a carboxy group, a hydrolyzable silicon group, etc.

The curable component other than the ethynyl group-containing compound represented by formula (A1) includes at least one compound selected from the group consisting of a compound represented by the following (C): 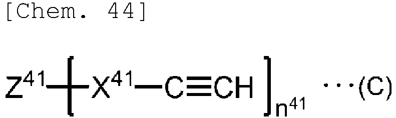 (in the above formula, Z⁴¹ is a group different from Z¹¹ in formula (A1); X⁴¹ is the same as or different from X¹¹ in formula (A1); and n⁴¹ is an integer of 1 or more.), terephthaloylacetylene, N,N'-bis(4-ethynylcarbonylphenylene aniline, ethynyl group-containing compounds other than the ethynyl group-containing compound represented by formula (A1) and the ethynyl group-containing compound represented by formula (C), vinyl compounds having at least one vinyl group per molecule, allyl compounds having at least one allyl group per molecule, (meth)acrylic compounds having at least one (meth)acryloyloxy group per molecule, maleimide compounds having at least one maleimide group per molecule, cyanate ester compounds having at least one cyanate group (-OCN group) per molecule, polyhydroxy compounds, epoxy resins, polyisocyanate compounds, polyamine compounds, polymercapto compounds, polycarboxylic acid compounds, hydrolyzable silicon compounds, phenolic resins, active ester compounds, unsaturated polyester resins, polybutadiene resins, and benzoxazine resins.

No particular limitation is imposed on the content of the curable component other than the ethynyl group-containing compound represented by formula (A1), and the content can be appropriately adjusted according to the intended application or the desired characteristics. The total amount of the curable composition is defined as 100% by mass. Then, the curable component other than the ethynyl group-containing compound represented by formula (A1) may be contained in an amount of, for example, 90% by mass or less, preferably 70% by mass or less, and more preferably 50% by mass or less and in an amount of, for example, 10% by mass or more, preferably 20% by mass or more, and more preferably 30% by mass or more.

### (Curing accelerator)

No particular limitation is imposed on the curing accelerator, so long as it is a compound that can facilitate the curing of the ethynyl group-containing compound represented by formula (A1), the curing of a compound capable of reacting with the ethynyl group-containing compound represented by formula (A1), and the curing of a component capable of forming an interpenetrating polymer network structure (IPN structure) when the curable composition containing the ethynyl group-containing compound represented by formula (A1) is cured.

The curing accelerator includes, for example, at least one selected from the group consisting of amine-based compounds (such as primary amines, secondary amines, tertiary amines, guanidine, aminosilanes, amino acids, and ketimines), imidazole-based compounds, organic peroxides, organophosphorus-based compounds, azo-based compounds, organic acid metal salts, and organometallic compounds.

The amine-based compound includes, for example, at least one selected from the group consisting of octylamine, 2-ethylhexylamine, laurylamine, stearylamine, diaminodiphenylmethane, morpholine, piperidine, piperazine, pyrrolidine, dimethylamine, diethylamine, dipropylamine, diisopropylamine, dibutylamine, dibenzylamine, dicyclohexylamine, N-alkylarylamines, diallylamine, thiazoline, thiomorpholine, benzyldimethylamine, 2-(dimethylaminomethyl)phenol, 2,4,6-tris(diaminomethyl)phenol, N,N,N',N'-tetramethyl-1,3-diaminopropane, N,N,N',N'-tetramethyl-1,6-diaminohexane, N,N-dimethylbenzylamine, N-methyl-N-(dimethylaminopropyl)aminoethanol, (dimethylaminomethyl)phenol, 2,4,6-tris(dimethylaminomethyl)phenol, tripropylamine, 1,8-diazabicyclo[5,4,0]undecene-7 (DBU), 1,5-diazabicyclo[4,3,0]nonene-5 (DBN), guanidine, phenylguanidine, diphenylguanidine, butylbiguanide, 1-o-tolybiguanide, 1-phenylbiguanide, dicyandiamide, amino acid compounds such as DL-alanine, γ-amino butyric acid, δ-amino valeric acid, L-glutamic acid, glutamine, glycine, L-theanine, glycylglycine, γ-aminocaproic acid, L-glutamine, aspartic acid, asparagine, L-citrulline, L-arginine, L-leucine, and L-serine, ketimine group-containing compounds, salts of these amine-based compounds, etc.

The imidazole-based compound includes, for example, at least one selected from the group consisting of imidazole, 2-methylimidazole, 2-ethylimidazole, 2-ethyl-4-methylimidazole, 2-phenylimidazole, 2-undecylimidazole, 1-benzyl-2-methylimidazole, 2-heptadecylimidazole, 4,5-diphenylimidazole, 2-methylimidazoline, 2-phenylimidazoline, 2-undecylimidazoline, 2-heptadecylimidazoline, 2-isopropylimidazole, 2,4-dimethylimidazole, 2-phenyl-4-methylimidazole, 2-ethylimidazoline, 2-isopropylimidazoline, 2,4-dimethylimidazoline, and 2-phenyl-4-methylimidazoline. The imidazole-based compound may be masked with a masking agent such as acrylonitrile, phenylene diisocyanate, toluidine isocyanate, naphthalene diisocyanate, methylene bisphenylisocyanate, and melamine acrylate.

The organic peroxide includes, for example, at least one selected from the group consisting of dicumyl peroxide, benzoyl peroxide, cumene hydroperoxide, 2,5-dimethylhexane-2,5-dihydroperoxide, 2,5-dimethyl-2,5-di(t-butylperoxy)hexyne-3, di-t-butyl peroxide, t-butyl cumyl peroxide, t-butyl hydroperoxide, α,α'-di(t-butylperoxy)diisopropylbenzene, 2,5-dimethyl-2,5-di(t-butylperoxy)hexane, di-t-butylperoxy isophthalate, t-butyl peroxybenzoate, 2,2-bis(t-butylperoxy)butane, 2,2-bis(t-butylperoxy)octane, 2,5-dimethyl-2,5-di(benzoylperoxy)hexane, di(trimethylsilyl)peroxide, trimethylsilyl triphenylsilyl peroxide, dodecanoyl peroxide, and methyl ethyl ketone peroxide.

The organophosphorus-based compound includes, for example, at least one selected from the group consisting of ethylphosphine, propylphosphine, butylphosphine, phenylphosphine, trimethylphosphine, triethylphosphine, tributylphosphine, trioctylphosphine, triphenylphosphine, tricyclohexylphosphine, a triphenylphosphine/triphenylborane complex, tetraphenylphosphonium tetraphenylborate, etc.

Examples of the azo-based compound include 2,2'-azobis(4-methoxy-2,4-dimethylvaleronitrile), 2,2'-azobis(2-amidinopropane)dihydrochloride, 2,2'-azobis(2,4-dimethylvaleronitrile), 2,2'-azobis(isobutyronitrile), 2,2'-azobis-2-methylbutyronitrile, 1,1-azobis(1-cyclohexanecarbonitrile), 2,2'-azobis(2-methylpropionitrile), 2,2'-azobis(2-cyclopropylpropionitrile), 2,2'-azobis(methylisobutyrate), and azobisisobutyronitrile.

The organic acid salt includes, for example, at least one selected from the group consisting of metal salts (such as magnesium salts, calcium salts, zinc salts, cobalt salts, nickel salts, tin salts, barium salts, iron salts, aluminum salts, copper salts, manganese salts, zirconium salts, titanium salts, indium salts, and lead salts of at least one fatty acid selected from the group consisting of aliphatic carboxy acids having 6 to 18 carbon atoms (such as octylic acid, lauric acid, stearic acid, neodecanoic acid, and oleic acid) and aromatic carboxylic acids having 6 to 18 carbon atoms (such as benzoic acid and naphthoic acid).

The organometallic compound is, for example, preferably a metal chelate compound having, as a chelate component, at least one β-diketone (such as acetylacetone, benzoylacetone, stearoylbenzoylmethane, dibenzoylmethane, ethyl acetoacetate, or dehydroacetic acid). The metal includes at least one selected from the group consisting of magnesium, calcium, zinc, cobalt, nickel, tin, barium, iron, aluminum, copper, manganese, zirconium, titanium, indium, lead, etc.

Preferably, in the curable composition according to the invention that contains the ethynyl group-containing compound represented by formula (A1), an amine-based compound is used as the curing accelerator.

The curing of the curable composition according to the invention that contains the ethynyl group-containing compound represented by formula (A1) can proceed without using a metal component such as an organic acid metal salt or an organometallic compound.

No particular limitation is imposed on the content of the curing accelerator. The content can be appropriately adjusted according to the curability etc. of the curable component in the curable composition, the curing conditions, etc. For example, the content of the curing accelerator is, for example, 0.01 parts by mass or more and preferably 0.05 parts by mass or more and is, for example, 5.0 parts by mass or less and preferably 1.0 parts by mass or less, based on 100 parts by mass of the ethynyl group-containing compound represented by formula (1A).

### (Filler)

The filler includes, for example, at least one selected from the group consisting of oxides, hydroxides, sulfates, carbonates, borates, phosphates, titanates, nitrides, carbides, etc. For example, the filler includes at least one selected from the group consisting of silicon oxides such as spherical silica (such as amorphous silica, crystalline silica, fused silica, spherical silica, precipitated silica, silicic anhydride, and hydrated silica), aluminum oxide (alumina), titanium oxide, magnesium oxide, aluminum oxides (such as alumina), beryllium oxide, zinc oxide, aluminum, magnesium carbonate, calcium carbonates (such as heavy calcium carbonate and colloidal calcium carbonate), diamond, aluminum hydroxide, magnesium hydroxide, barium sulfate, diatomaceous earth, clay, talc, mica, barium titanate, crystalline silica, Neuburg siliceous earth, fused silica, spherical silica, silicon nitride, aluminum nitride, boron nitride, aluminum borate, carbon black, ferric oxide, resin powders (such as styrene-based resin powders, acrylic-based resin powders, vinyl chloride-based resin powders, olefin-based resin powders, urethane-based resin powders, polyamide-based resin powders, and polyester-based resin powders), glass balloons, shirasu balloons, etc.

No particular limitation is imposed on the shape of the filler. The filler has, for example, a spherical shape, an indefinite (crushed) shape, or a fibrous shape.

No particular limitation is imposed on the volume average particle diameter of the filler. The volume average particle diameter is, for example, 0.01 µm or more and preferably 0.1 µm or more and is, for example, 100 µm or less and preferably 50 µm or less.

The filler may have been surface-treated in advance. The surface treatment agent used for the surface treatment of the filler includes, for example, at least one selected from the group consisting of silane coupling agents such as epoxysilane, vinylsilane, (meth)acrylic silane, aminosilane, and alkoxysilane, titanium coupling agents, etc.

No particular limitation is imposed on the content of the filler. The content can be appropriately adjusted according to the intended application, the desired characteristics, etc. For example, the content of the filler is, for example, 0.1 parts by mass or more and preferably 0.5 parts by mass or more and is, for example, 1200 parts by mass or less and preferably 1000 parts by mass or less, based on 100 parts by mass of the ethynyl group-containing compound represented by formula (1A).

### (Fibers)

The fibers may be, for example, any of a twisted yarn, a de-twisted yarn, and a non-twisted yarn. To form a fiber-reinforced composite material, it is preferable to use a de-twisted yarn or a non-twisted yarn from the viewpoint of formability etc. Fibers with a uniform fiber orientation or a woven fabric may be used. The woven fabric used may be a plain-woven fabric, a satin fabric, etc.

The fibers include, for example, at least one type of fibers selected from the group consisting of carbon fibers, glass fibers, aramid fibers, boron fibers, alumina fibers, silicon carbide fibers, potassium titanate fibers, etc.

No particular limitation is imposed on the diameter of the fibers. The diameter is, for example, 0.01 µm or more and preferably 0.1 µm or more and is, for example, 100 mm or less and preferably 50 mm or less.

The fibers may have been surface-treated in advance. The surface treatment agent used for the surface treatment of the filler includes, for example, at least one selected from the group consisting of silane coupling agents such as epoxysilane, vinylsilane, (meth)acrylic silane, aminosilane, and alkoxysilane, titanium coupling agents, etc.

No particular limitation is imposed on the content of the fibers. The content can be appropriately adjusted according to the intended application, the desired characteristics, etc. For example, the content of the fibers is, for example, 0.1 parts by mass or more and preferably 0.5 parts by mass or more and is, for example, 1200 parts by mass or less and preferably 1000 parts by mass or less, based on 100 parts by mass of the ethynyl group-containing compound represented by formula (1A).

### (Flame retardant)

No particular limitation is imposed on the flame retardant, so long as it can impart flame resistance to the curable composition and/or a cured product of the curable composition. The flame retardant includes, for example, at least one selected from the group consisting of halogen-based flame retardants (such as bromine-based flame retardants (such as pentabromodiphenyl ether, octabromodiphenyl ether, decabromodiphenyl ether, tetrabromo bisphenol A, and hexabromocyclododecane) and chlorine-based flame retardants (such as chlorinated paraffin)), and phosphorus-based flame retardants (phosphate-based compounds such as condensed phosphates and cyclic phosphates, phosphazene-based compounds such as cyclic phosphazenes, phosphinate-based flame retardants such as aluminum dialkylphosphinate, melamine phosphate-based compounds such as melamine phosphate and melamine polyphosphate, and phosphine oxide compounds having a diphenylphosphine oxide group, etc.).

No particular limitation is imposed on the content of the flame retardant. The content of the flame retardant may be such that the required flame resistance can be imparted to the curable composition and/or the cured product of the curable composition without impairing their characteristics.

### (Solvent)

The curable composition may optionally contain a solvent that can dissolve or disperse the ethynyl group-containing compound represented by formula (A1) and does not react with the ethynyl group-containing compound represented by formula (A1). No particular limitation is imposed on the solvent. The solvent includes at least one selected from the group consisting of ketone-based solvents such as methyl ethyl ketone, ether-based solvents such as dibutyl ether and tetrahydrofuran, ester-based solvents such as ethyl acetate, amide-based solvents such as dimethylformamide, hydrocarbons such as benzene, toluene, and xylene, chlorinated hydrocarbon-based solvents such as trichloroethylene, etc.

No particular limitation is imposed on the content of the solvent. The content of the solvent may be such that impregnability or spreadability can be imparted to the curable composition when fibers etc. are impregnated with the curable composition or the curable composition is applied to an article etc.

### (Antioxidant)

No particular limitation is imposed on the antioxidant, so long as it can impart antioxidation properties (antiaging properties) and weather resistance to the curable composition and/or the cured product of the curable composition.

The antioxidant includes, for example, at least one selected from the group consisting of hindered phenol-based antioxidants, monophenol-based antioxidants, bisphenol-based antioxidants, polyphenol-based antioxidants, etc.

### (Light stabilizer)

No particular limitation is imposed on the light stabilizer, so long as it can impart light stability (resistance to photooxidative degradation) to the curable composition and/or the cured product of the curable composition. The light stabilizer includes, for example, at least one selected from the group consisting of benzotriazole-based light stabilizers, hindered amine-based light stabilizers, benzoate-based light stabilizers, etc.

### (Ultraviolet absorber)

No particular limitation is imposed on the ultraviolet absorber, so long as it can impart UV-resistance stability (surface weather resistance) to the curable composition and/or the cured product of the curable composition. The ultraviolet absorber includes, for example, at least one selected from the group consisting of benzophenone-based ultraviolet absorbers, benzotriazole-based ultraviolet absorbers, salicylate-based ultraviolet absorbers, substituted acrylonitrile-based ultraviolet absorbers, metal chelate-based ultraviolet absorbers, etc.

### (Resin)

No particular limitation is imposed on the resin, so long as it is a resin having a weight average molecular weight of 500 or more. The resin includes, for example, at least one selected from the group consisting of polyimide resins, polyamide resins, polybenzimidazole resins, polybenzoxazole resins, polyester resins, polyurethane resins, phenolic resins, polyether ether ketone resins, polyether ketone resins, polyether sulfone resins, polyphenylene ether resins, polyether resins, polyketone resins, acetal resins, polyolefin resins, polystyrene resins, vinyl chloride resins, fluorocarbon resins, vinyl ester resins, vinyl alcohol resins, vinyl acetal resins, acrylic resins, synthetic rubbers, diene-based resins, grafted resins, core-shell resins, block resins, etc.

### (Coupling agent)

The coupling agent includes, for example, at least one selected from the group consisting of silane coupling agents such as epoxysilanes, vinylsilanes, (meth)acrylic silanes, aminosilanes, and alkoxysilanes, titanium coupling agents, phosphorus-based coupling agents, aluminum-based coupling agents, boron-based coupling agents, zirconium-based coupling agents, etc.

### (Electroconductive material)

No particular limitation is imposed on the electroconductive material, so long as it is a material that can impart electroconductivity to the curable composition. The electroconductive material includes, for example, at least one selected from the group consisting of metal powders, metal-coated particles, metal-deposited materials, electroconductive macromolecules, etc.

### <Form of curable composition>

No particular limitation is imposed on the form of the curable composition according to the invention that contains the ethynyl group-containing compound represented by formula (A1). The curable composition may be, for example, in a powder form, a solution form, or a dispersion form. When the curable composition is in a solution form, the curable composition may be a single-component composition or a multi-component composition (e.g., a two-component composition).

### <Weight loss in TG-DTA (thermogravimetry-differential thermal analysis) measurement>

The curable composition according to the invention that contains the ethynyl group-containing compound represented by formula (A1) may be a curable composition that meets the following requirement (I) and/or requirement (II):
(I) in TG-DTA (thermogravimetry-differential thermal analysis) measurement of the curable composition, the weight loss when the curable composition is heated from 30°C to 300°C at a heating rate of 10°C/minute in a nitrogen atmosphere is 10% or less; and
(II) in TG-DTA (thermogravimetry-differential thermal analysis) measurement of a cured product of the curable composition that is obtained by heating the curable composition under the conditions of 50°C or higher and 250°C or lower for 48 hours or shorter, the weight loss when the cured product is heated from 30°C to 300°C at a heating rate of 10°C/minute in a nitrogen atmosphere is 10% or less.

Preferably, the curable composition according to the invention that contains the ethynyl group-containing compound represented by formula (A1) meets the requirement (I) and/or the requirement (II).

The requirement (I) specifies the behavior when the "curable composition" is subjected to TG-DTA (thermogravimetry-differential thermal analysis) measurement. In the TG-DTA measurement, the weight loss when the curable composition is heated from 30°C to 300°C at a heating rate of 10°C/minute in a nitrogen atmosphere is 10% or less, preferably 7% or less, and more preferably 5% or less. The requirement (I) can be checked using, for example, the same method as that for measuring 5% weight loss temperature described later in the Examples section.

The requirement (II) specifies the behavior when the "cured product of the curable composition obtained by heating the curable composition under the conditions of 50°C or higher and 250°C or lower for 48 hours or shorter" is subjected to TG-DTA (thermogravimetry-differential thermal analysis) measurement. The weight loss when the cured product is heated from 30°C to 300°C at a heating rate of 10°C/minute in a nitrogen atmosphere is 10% or less, preferably 7% or less, and more preferably 5% or less. The requirement (II) can be checked using, for example, the same method as that for measuring the 5% weight loss temperature described later in the Examples section.

In the requirement (II), no particular limitation is imposed on the lower limit of the heating time under the conditions of 50°C or higher and 250°C or lower, provided that the heating time is defined as the time required for completion of curing of the curable composition and formation of the cured product and is 48 hours or shorter. The heating time is, for example, 15 minutes or longer, preferably 1 hour or longer, more preferably 2 hours or longer, and still more preferably 4 hours or longer.

The conditions for obtaining the "cured product of the curable composition obtained by heating the curable composition under the conditions of 50°C or higher and 250°C or lower for 48 hours or shorter" may be, for example, the same as those in the method for producing the cured product used for the measurement of the 5% weight loss temperature described later in the Examples section.

### <Solvent-insoluble matter>

The curable composition according to the invention that contains the ethynyl group-containing compound represented by formula (A1) may be a curable composition that meets the following requirement. The cured product obtained by heating the curable composition under the conditions of 50°C or higher and 250°C or lower for 48 hours or shorter is immersed in boiling tetrahydrofuran for 2 hours, subjected to solvent exchange in acetone at 25°C±5°C for 6 hours or longer, and then dried in an 80°C atmosphere under a reduced pressure of -0.1 MPa while mass measurement is performed every hour until no change in mass is observed for 3 hours or longer. Then, the amount of insoluble matter is 70% or more.

The amount of the solvent-insoluble matter is preferably 75% or more, more preferably 85% or more, and still more preferably 90% or more. When the amount of the solvent-insoluble matter is more than 70% even after the cured product is immersed in boiling tetrahydrofuran for 2 hours, the cured product can be regarded as having high resistance to various solvents.

The conditions for obtaining the "cured product obtained by heating the curable composition under the conditions of 50°C or higher and 250°C or lower for 48 hours or shorter" may be the same as those in the <Weight loss in TG-DTA (thermogravimetry-differential thermal analysis) measurement> section, and, for example, the same method as the method for producing the cured product used to measure the 5% weight loss temperature described later in the Examples section can be used.

### <Heat generation onset temperature (Tonset (°C)) and exothermic peak temperature (Tpeak (°C))>

The heat generation onset temperature (Tonset (°C)) of the curable composition according to the invention that contains the ethynyl group-containing compound represented by formula (A1) is lower than 250°C and is, for example, lower than 200°C, preferably lower than 170°C, and more preferably lower than 120°C. When the heat generation onset temperature (Tonset (°C)) is lower than 250°C, for example, lower than 200°C, the curable composition has excellent low-temperature curability.

To measure the heat generation onset temperature (Tonset (°C)) and the exothermic peak temperature (Tpeak (°C)), for example, the same method as that for the measurement of the heat generation onset temperature (Tonset (°C)) and exothermic peak temperature (Tpeak (°C)) described later in the Examples section can be used.

### <Glass transition temperature>

In the cured product of the curable composition according to the invention that contains the ethynyl group-containing compound represented by formula (A1), the glass transition temperature obtained by dynamic viscoelasticity measurement is preferably 300°C or higher. The glass transition temperature is more preferably 330°C or higher. When the glass transition temperature of the cured product of the curable composition is 300°C or higher, the cured product formed can be regarded as having excellent heat resistance.

To measure the glass transition temperature obtained by dynamic viscoelasticity measurement, for example, the same method as that for the measurement of the glass transition temperature by the dynamic viscoelasticity measurement described later in the Examples section can be used.

### <Residual carbon weight>

By heating the curable composition according to the invention that contains the ethynyl group-containing compound represented by formula (A1) under the conditions of 50°C or higher and 250°C or lower for 48 hours or shorter, a cured product is obtained. When the cured product is subjected to TG-DTA in which the cured product is heated from 100°C to 800°C in a nitrogen atmosphere and maintained at 800°C for 1 hour, the residual carbon weight (residual mass) is preferably 60% by mass or more. The residual carbon weight is more preferably 63% by mass or more and still more preferably 65% by mass or more. When the residual carbon weight is 60% by mass or more, the cured product can be regarded as having good heat resistance, in particular high flame retardancy.

The residual carbon weight is determined as follows. The cured product is heated from 100°C to 800°C at a heating rate of 10°C/min in a non-oxidative atmosphere and maintained at 800°C for 1 hour. Then, the ratio of the mass of the remaining cured product to the mass of the cured product at 100°C is determined as the residual carbon weight, provided that the ratio of the mass at 100°C is defined as 100. For example, the same method as that for the measurement of the residual carbon weight described later in the Examples section can be used.

### <Method for producing curable composition>

No particular limitation is imposed on the method for producing the curable composition according to the invention that contains the ethynyl group-containing compound represented by formula (A1). For example, the curable composition can be obtained by mixing the ethynyl group-containing compound represented by formula (A1) with optionally added additives. To mix them, a method in which they are mixed until uniform using a mixer such as an extruder, a kneader, or rolls can be used.

### <Applications>

The curable composition according to the invention that contains the ethynyl group-containing compound represented by formula (A1) can be used for various applications. Examples of the applications include adhesives, sealing materials, potting agents, encapsulants, raw materials of carbon materials, prepregs, circuit connecting materials, electroconductive compositions, molded products, insulating materials, coatings, laminates, cured prepreg products, fiber-reinforced composite materials, automotive components, electric and electronic materials, civil engineering and construction materials, structural materials, and films.

### [Compounds]

### <Compound represented by formula (B)>

This compound is an ethynyl group-containing compound represented by formula (B): 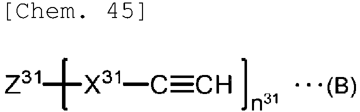 (wherein, in formula (B), Z³¹ is an n-valent aromatic organic group including at least one group selected from the group consisting of Ar³¹, 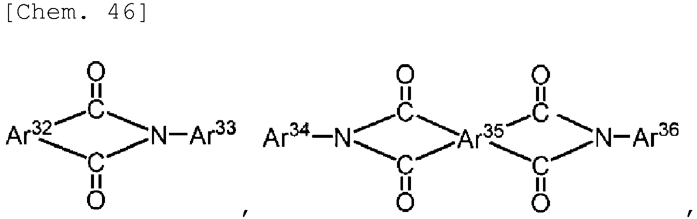 -O-, -S-, -C(=O)-, -S(=O)-, -S(=O)₂-, -P(=O)R³¹-, - P(=O)(OR³²)-, -NR³³CO-, -COO-, -NR³⁴-, and a direct bond;
Ar³¹, Ar³³, Ar³⁴, and Ar³⁶ are each independently a monovalent or higher-valent aromatic ring optionally having a substituent;
Ar³² is a divalent or higher-valent aromatic ring optionally having a substituent;
Ar³⁵ is a tetravalent or higher-valent aromatic ring optionally having a substituent;
-X³¹-C≡CH is bonded to any of Ar³¹ to Ar³⁶;
R³¹ to R³⁴ are each independently hydrogen or a monovalent organic group; and
in Z³¹, -O-, -S-, -C(=O)-, -S(=O)-, -S(=O)₂-, -P(=O)R³¹-, -P(=O)(OR³²)-, -NR³³CO-, -COO-, and -NR³⁴- are not directly bonded to one another.
-X³¹- is a divalent group selected from the group consisting of -C(=O)-, -S(=O)-, -S(=O)₂-, -P(=O)R³⁵-, and - P(=O)(OR³⁶)-, and
R³⁵ and R³⁶ are each independently hydrogen or a monovalent organic group.
n³¹ is an integer of 2 or more.

When more than one Ar³¹, Ar³², Ar³³, Ar³⁴, Ar³⁵, Ar³⁶, R³¹, R³², R³³, R³⁴, R³⁵, R³⁶, or -X³¹- is present, they may be the same or different.

When -X³¹- is -C(=O)- and Z³¹ is a phenyl ring having no substituent, then n³¹ is an integer from 3 to 6.

When n³¹ is 2, -X³¹- is -C(=O)-, and Z³¹ is

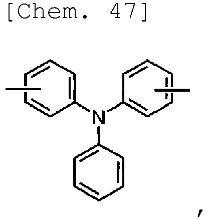

Then at least one -X³¹-C≡CH group is in the ortho position relative to N, or the two -X-C≡CH groups are in the para and meta positions relative to N.

When n³¹ is 2, -X³¹- is -C(=O)- or *-*S(*=*O)₂*-,* and Z³¹ is 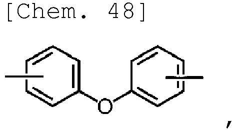 then at least one -X³¹-C≡CH group is in the ortho or meta position relative to O.

When n³¹ is 2, -X³¹- is -C(=O)-, and Z³¹ is 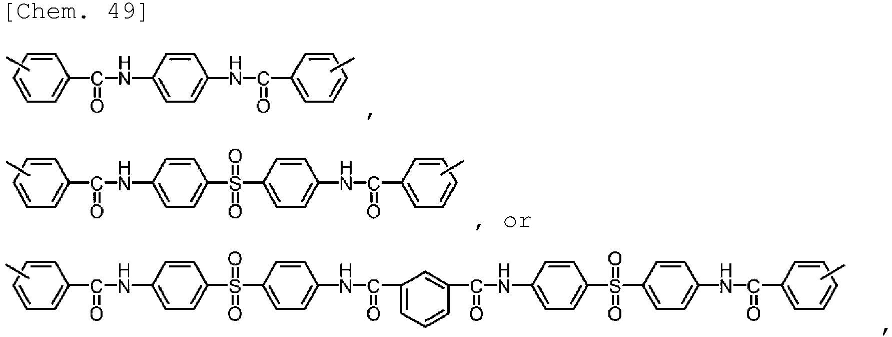 then at least one -X³¹-C≡CH group is in the ortho or meta position relative to an amide bond.

When n³¹ is 2, -X³¹- is -C(=O)-, and Z³¹ is 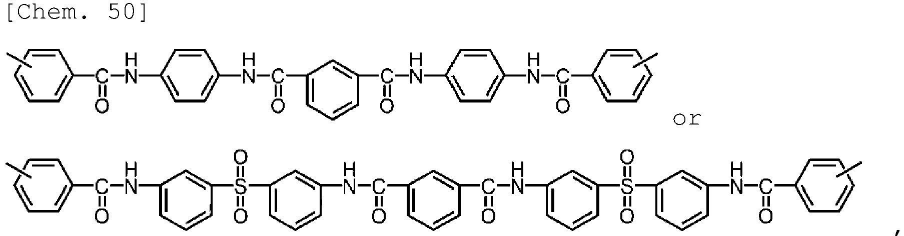 then at least one -X³¹-C≡CH group is in the ortho or para position relative to an amide bond.).

Z³¹, X³¹, and n³¹ in formula (B) are the same as Z¹¹, X¹¹, n¹¹, respectively, in formula (A1). Ar³¹ to Ar³⁶, R³¹ to R³⁴, the aromatic rings, and the monovalent organic groups in Z³¹ in formula (B) and R³⁵ to R³⁶ and the monovalent organic groups in X³¹ in formula (B) are respectively the same as Ar¹¹ to Ar¹⁶, R¹¹ to R¹⁴, the aromatic rings, and the monovalent organic groups in Z¹¹ in formula (A1) and R¹⁵ to R¹⁶ and the monovalent organic groups in X¹¹ in formula (A1).

The ethynyl group-containing compound in the invention represented by formula (B) may be, for example, the compound represented by formula (A2) in the [Curable composition] section above.

The ethynyl group-containing compound in the invention represented by formula (B) may also be, for example, the compound represented by formula (A3) in the [Curable composition] section above.

The ethynyl group-containing compound in the invention represented by formula (B) in which -X³¹- is -C(=O)- is, for example, any of the compounds (Aa2) to (Aa19) and (Aa21) to (Aa95).

The ethynyl group-containing compound in the invention represented by formula (B) in which -X³¹- is -S(=O)- may be, for example, any of the compounds (Ab1) to (Ab35).

The ethynyl group-containing compound in the invention represented by formula (B) in which -X³¹- is -S(=O)₂- may be, for example, any of the compounds (Ac1) to (Ac13) and (Ac15) to (Ac35).

The ethynyl group-containing compound in the invention represented by formula (B) in which -X³¹- is -P(=O)R³⁵- may be, for example, any of the compounds (Ad1) to (Ad64).

The ethynyl group-containing compound in the invention represented by formula (B) in which -X³¹- is -P(=O)(OR³⁶)-may be, for example, the compounds (Ae1) to (Ae32).

The ethynyl group-containing compound in the invention represented by formula (B) is preferably any of the following compounds.

When X³¹- is -C(=O)-, the compounds represented by (Aa4) to (Aa19) and (Aa21) to (Aa95) are preferred.

When X³¹- is -S(=O)-, the compounds represented by (Ab1) to (Ab2) and (Ab5) to (Ab34) are preferred.

When X³¹- is -S(=O)₂-, the compounds represented by (Ac1) to (Ac2) and (Ac5) to (Ac34) are preferred.

When X³¹- is -P(=O)R³⁵-, the compounds represented by (Ad1) to (Ad2), (Ad5) to (Ad34), and (Ad37) to (Ad64) are preferred.

When X¹¹- is -P(=O)(OR³⁶)-, the compounds represented by (Ae1) to (Ae2) and (Ae5) to (Ae32) are preferred.

Of these, at least one selected from the group consisting of the compounds in which -X³¹- is -C(=O)- and the compounds in which -X³¹- is -S(=O)₂- is more preferred, from the viewpoint of the reactivity etc. of the ethynyl group-containing compound.

The compounds in which -X³¹- is -C(=O)- or -S(=O)₂- are still more preferred.
-X³¹- is more preferably -C(=O)-, and the compounds represented by (Aa4) to (Aa18), (Aa21) to (Aa38), and (Aa41) to (Aa95) are particularly preferred.

### <Method for producing ethynyl group-containing compound represented by formula (B)>

The ethynyl group-containing compound in the invention represented by formula (B) can be produced using industrial synthesis means.

For example, the following reaction (i) or (ii) may be used.

(i)

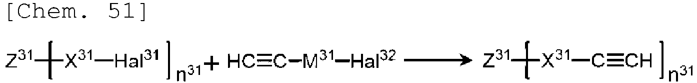

In this reaction method, an acid halide represented by Z³¹-(X³¹-Hal³¹)ₙ₃₁ (wherein Z³¹, X³¹, and n³¹ are the same as Z³¹, X³¹, and n³¹, respectively, in formula (B), and Hal³¹ is a halogen atom) and an organometallic compound represented by CH≡C-M³¹-Hal³² (wherein M³¹ is an alkaline-earth metal, an alkali metal, manganese, palladium, titanium, zinc, aluminum, bismuth, indium, germanium, silicon, or samarium, and Hal³¹ is a halogen atom.) are reacted in the presence of an organic solvent and a base.

(ii)

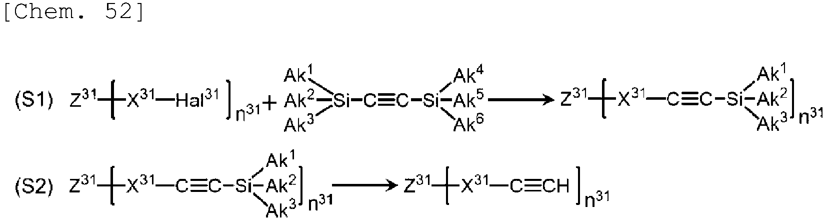

This reaction includes: (S1) reacting an acid halide represented by Z³¹-(X³¹-Hal³¹)ₙ₃₁ (wherein Z³¹, X³¹, and n³¹ are the same as Z³¹, X³¹, and n³¹, respectively, in formula (B), and Hal³¹ is a halogen atom) with bis(trialkylsilyl)acetylene in the presence of an organic solvent and a Lewis acid catalyst; and (S2) eliminating the trialkylsilyl groups in the presence of an organic solvent and a base.

The organic solvent in the reactions (i) and (ii) includes, for example, at least one selected from the group consisting of hydrocarbon-based solvents (such as benzene, toluene, and xylene), halogenated hydrocarbon-based solvents (such as chlorobenzene, dichlorobenzene, methylene chloride, chloroform, and carbon tetrachloride), ether-based solvents (such as diethyl ether, dimethyl ether, tetrahydrofuran, and dioxane), ketone-based solvents (such as acetone and methyl ethyl ketone), nitrile-based solvents (such as acetonitrile, propionitrile, and benzonitrile), amide-based solvents (such as dimethylformamide and N-methyl-2-pyrrolidone), and sulfoxide-based solvents (such as dimethyl sulfoxide).

The base in the reactions (i) and (ii) includes, for example, at least one selected from the group consisting of various bases such as inorganic bases and organic bases. For example, the base includes at least one selected from the group consisting of metal carbonates (such as sodium carbonate and sodium hydrogencarbonate), metal carboxylates (such as sodium acetate and calcium acetate), metal hydroxides (such as sodium hydroxide and calcium hydroxide), metal borates (such as sodium borate), and amines (primary, secondary, and tertiary amines such as ammonia, triethylamine, triisopropylamine, tributylamine, methylamine, benzylamine, N,N-dimethylaniline, piperazine, and pyridine).

The Lewis acid in the reactions (i) and (ii) includes, for example, at least one selected from the group consisting of aluminum chloride, chromium oxide, alumina, silica alumina, zeolite, boron trifluoride, tin tetrachloride, titanium tetrachloride, phosphorus pentafluoride, phosphorus pentachloride, and antimony pentafluoride.

In the present invention, the reaction (i) is convenient and advantageous in terms of reactivity etc. Therefore, it is preferable to use the reaction (i).

If necessary, a (meth)acrylation reaction may be performed in the presence of a polymerization inhibitor (thermal polymerization inhibitor). Examples of the polymerization inhibitor include hydroquinone-based compounds, catechol-based compounds, amine-based compounds, 2,2-diphenyl-1-picrylhydrazyl, and 4-hydroxy-2,2,6,6-tetramethylpiperazine-1-oxyl. Examples of the hydroquinone-based compound include: hydroquinone; and hydroquinone monoalkyl ethers such as hydroquinone monomethyl ether (methoquinone). Examples of the catechol-based compound include alkylcatechols such as t-butylcatechol. Examples of the amine-based compound include diphenylamine. One of these polymerization inhibitors may be used alone, or two or more may be used in combination.

No particular limitation is imposed on the reaction conditions when the ethynyl group-containing compound represented by formula (B) is produced. The reaction may be performed under cooling or heating or may be performed at room temperature (25°C±5°C). The reaction may be performed under increased or reduced pressure.

When the ethynyl group-containing compound represented by formula (B) is produced, optional procedures such as neutralization, washing with water, concentration, crystallization, and filtration may be performed after the reaction. The product may be purified through procedures such as recrystallization, distillation, adsorption, and column chromatography.

### [Heat-resistant resin material]

The heat-resistant resin material according to the invention is a heat-resistant resin material obtained by curing the curable composition containing the ethynyl group-containing compound represented by formula (A1) or curing the ethynyl group-containing compound represented by formula (B). The heat-resistant resin material may be a fully or partially cured product obtained by fully or partially curing the curable composition containing the ethynyl group-containing compound represented by formula (A1) or fully or partially curing the ethynyl group-containing compound represented by formula (B). For example, the heat-resistant resin material can be obtained by heating the ethynyl group-containing compound represented by formula (B) or the curable composition containing the ethynyl group-containing compound represented by formula (A1) under the conditions of 50°C or higher and 250°C or lower for 48 hours or shorter. The temperature conditions in the heating conditions are such that the heating temperature is 50°C or higher, for example, 60°C or higher, preferably 70°C or higher, and more preferably 100°C or higher and is 250°C or lower, for example, 200°C or lower, preferably 180°C or lower, and more preferably 150°C or lower. The heating time conditions in the heating conditions are such that the heating time is 48 hours or shorter, for example, preferably 36 hours or shorter, and more preferably 24 hours or shorter and is, for example, preferably 15 minutes or longer, preferably 1 hour or longer, more preferably 2 hours or longer, and still more preferably 4 hours or longer.

Preferably, a cured product obtained from the heat-resistant resin material (the cured product of the curable composition) obtained by curing the ethynyl group-containing compound represented by formula (B) or the curable composition according to the invention that contains the ethynyl group-containing compound represented by formula (A1) satisfies the following requirement (II):
(II) in TG-DTA (thermogravimetry-differential thermal analysis) measurement of the cured product of the curable composition that is obtained by heating the curable composition under the conditions of 50°C or higher and 250°C or lower for 48 hours or shorter, the weight loss when the cured product is heated from 30°C to 300°C at a heating rate of 10°C/minute in a nitrogen atmosphere is 10% or less.

### [Adhesive]

The adhesive according to the invention is an adhesive that contains the curable composition containing the ethynyl group-containing compound represented by formula (A1) or that contains the ethynyl group-containing compound represented by formula (B). Any component may optionally be used as an additive for the adhesive. Since the ethynyl groups in the ethynyl group-containing compound represented by formula (A1) or in the ethynyl group-containing compound represented by formula (B) undergo a cyclization reaction etc., strong adhesion is obtained. The adhesive according to the invention that contains the curable composition containing the ethynyl group-containing compound represented by formula (A1) or that contains the ethynyl group-containing compound represented by formula (B) can be used as an adhesive for electric and electronic use, an adhesive for structural use, a heat resistant adhesive for aerospace use, etc.

### [Sealing material]

The sealing material according to the invention is a sealing material that contains the curable composition containing the ethynyl group-containing compound represented by formula (A1) or that contains the ethynyl group-containing compound represented by formula (B). Any component may optionally be used as an additive for the sealing material. Since the ethynyl groups in the ethynyl group-containing compound represented by formula (A1) or in the ethynyl group-containing compound represented by formula (B) undergo a cyclization reaction etc., a strong sealing effect can be achieved. The sealing material according to the invention that contains the curable composition containing the ethynyl group-containing compound represented by formula (A1) or that contains the ethynyl group-containing compound represented by formula (B) can be used as a sealing material for civil engineering and construction use, a sealing material for various structures, a heat resistant sealing material for aerospace use, etc.

### [Potting material]

The potting material according to the invention is a potting material that contains the curable composition containing the ethynyl group-containing compound represented by formula (A1) or that contains the ethynyl group-containing compound represented by formula (B). Any component may optionally be used as an additive for the potting material. Since the ethynyl groups in the ethynyl group-containing compound represented by formula (A1) or in the ethynyl group-containing compound represented by formula (B) undergo a cyclization reaction etc., the potting material can exhibit high functionality. The potting material according to the invention that contains the curable composition containing the ethynyl group-containing compound represented by formula (A1) or that contains the ethynyl group-containing compound represented by formula (B) can be used as a material for insulating electric parts, electronic parts, motor parts, battery parts, etc. and for protecting electric parts, electronic parts, motor parts, battery parts, etc. from thermal shock and mechanical shock.

### [Encapsulant]

The encapsulant according to the invention is an encapsulant that contains the curable composition containing the ethynyl group-containing compound represented by formula (A1) or that contains the ethynyl group-containing compound represented by formula (B). Any component may optionally be used as an additive for the encapsulant. Since the ethynyl groups in the ethynyl group-containing compound represented by formula (A1) or in the ethynyl group-containing compound represented by formula (B) undergo a cyclization reaction etc., the encapsulant can exhibit high functionality. The encapsulant according to the invention that contains the curable composition containing the ethynyl group-containing compound represented by formula (A1) or that contains the ethynyl group-containing compound represented by formula (B) can be used as an encapsulant for electric parts, electronic parts, motor parts, battery parts, etc., particularly as an encapsulant for electric parts such as semiconductors.

### [Carbon material]

The carbon material according to the invention is a carbon material obtained by firing an ethynyl group-containing compound represented by formula (A): 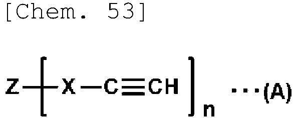 (wherein, in formula (A),
-X- is a divalent group selected from the group consisting of -C(=O)-, -S(=O)-, -S(=O)₂-, -P(=O)R^{a}-, and - P(=O)(OR^{b})-; when more than one -X- is present, they may be the same or different;
R^{a} is hydrogen or a monovalent organic group; when more than one R^{a} is present, they may be the same or different;
R^{b} is hydrogen or a monovalent organic group; when more than one R^{b} is present, they may be the same or different;
Z is an n-valent organic group; and
n is an integer of 1 or more.), by firing a cured product of the ethynyl group-containing compound represented by formula (A), by firing a curable composition containing the ethynyl group-containing compound represented by formula (A), or by firing a cured product of the curable composition. Examples of the carbon material obtained include glassy carbon, graphene, carbon fibers, carbon sheets, carbon molded articles, porous carbon materials, and carbon particles. The carbon material is also used as a raw material for these carbon products.

Examples of the n-valent organic group in Z in formula (A) include n-valent aromatic groups, n-valent alicyclic groups, and n-valent aliphatic groups.

When the n-valent organic group in Z in formula (A) is an n-valent aromatic group, the ethynyl group-containing compound represented by formula (A) may be the compound represented by formula (A1) described in the [Curable composition] section above.

When the n-valent organic group in Z in formula (A) is an n-valent alicyclic group, no particular limitation is imposed on the alicyclic group, so long as it is an n-valent group having an alicycle that is formed only of carbon and that is different from a conjugated unsaturated structure (aromantic ring). Examples of the alicycle include cycloalkyl rings having 3 to 20 carbon atoms (such as cyclopropyl, cyclobutyl, cyclopentyl, and cyclohexyl), cycloalkene rings having 3 to 20 carbon atoms (such as cyclopentene, cyclohexene, and cyclopentadiene), fused rings having 8 to 30 carbon atoms (such as bicycloalkanes), and crosslinked rings having 6 to 30 carbon atoms (such as tricyclo[5.2.1.02,6]decane, norbornene, norbornane, and adamantane).

When the n-valent organic group in Z in formula (A) is an n-valent aliphatic group, no particular limitation is imposed on the aliphatic group, so long as it is a saturated or unsaturated n-valent aliphatic hydrocarbon group having 2 to 30 carbon atoms. Examples of the n-valent aliphatic group include: n-valent groups obtained from alkyl groups having 1 to 20 carbon atoms (such as a methyl group, an ethyl group, a n-propyl group, an isopropyl group, a n-butyl group, an isobutyl group, a tert-butyl group, a pentyl group, a hexyl group, and an octyl group); n-valent groups obtained from alkenyl groups having 1 to 24 carbon atoms, preferably 1 to 18 carbon atoms, more preferably 1 to 12 carbon atoms, and still more preferably 1 to 8 carbon atoms (such as an ethenyl group, a propenyl group, a butenyl group, a pentenyl group, a hexenyl group, and an octenyl group); and n-valent groups obtained from alkynyl groups having 1 to 24 carbon atoms, preferably 1 to 18 carbon atoms, more preferably 1 to 12 carbon atoms, and still more preferably 1 to 8 carbon atoms (such as an ethynyl group, a propynyl group, a butynyl group, a pentynyl group, a hexynyl group, and an octynyl group).

In formula (A), n is an integer of 1 or more. In the present invention, it is preferable to use an ethynyl group-containing compound in which n is 2 or more.

When a plurality of ethynyl group-containing compounds represented by formula (A) are used, the average n (apparent n) is, for example, 1.3 or more, preferably 1.5 or more, more preferably 1.7 or more, still more preferably 1.9 or more, and particularly preferably 2.0 or more and is, for example, 10.0 or less, preferably 8.0 or less, more preferably 6.0 or less, still more preferably 4.0 or less, and particularly preferably 3.0 or less. The average n can be calculated in the same manner as in the calculation of the "average n in the curable composition as a whole" described above.

In the carbon material according to the invention, examples of the ethynyl group-containing compound represented by formula (A) include the compounds (Aa1) to (Aa98), (Ab1) to (Ab35), (Ac1) to (Ac35), (Ad1) to (Ad64), and (Ae1) to (Ae32) described above and the following compounds (Aa99) to (Aa111), (Ab36) to (Ab52), (Ac36) to (Ac52), (Ad65) to (Ad98), and (Ae33) to (Ae49).

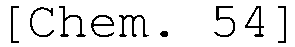

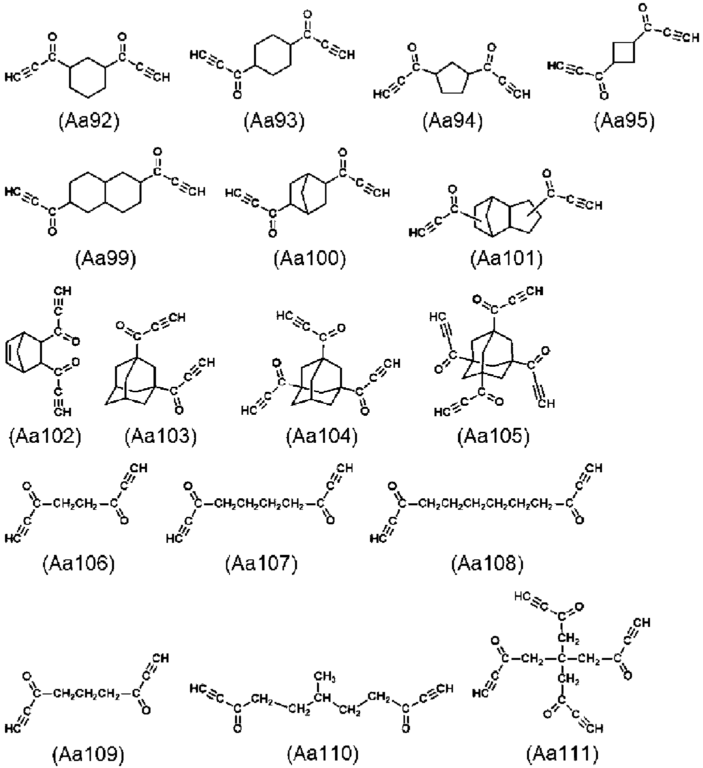

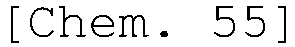

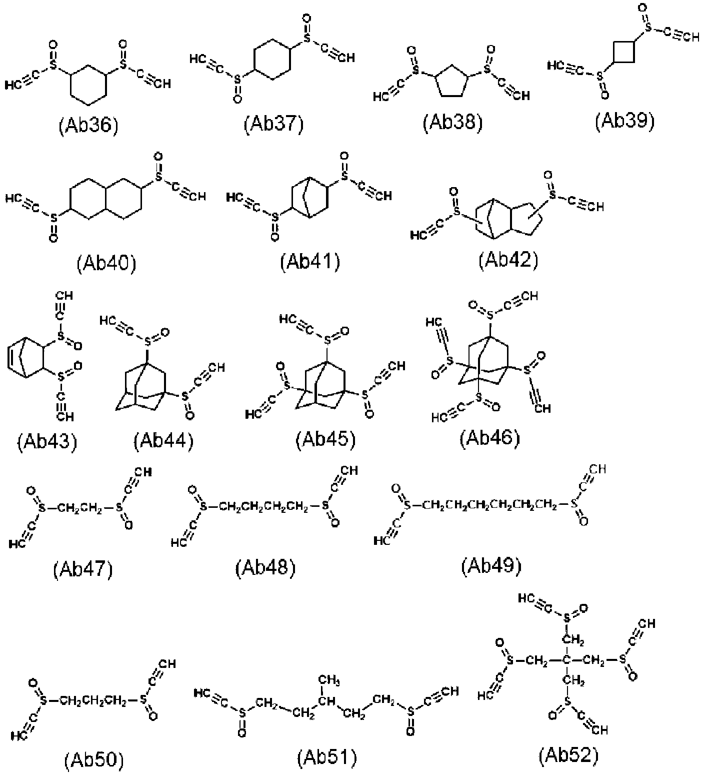

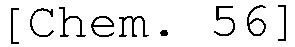

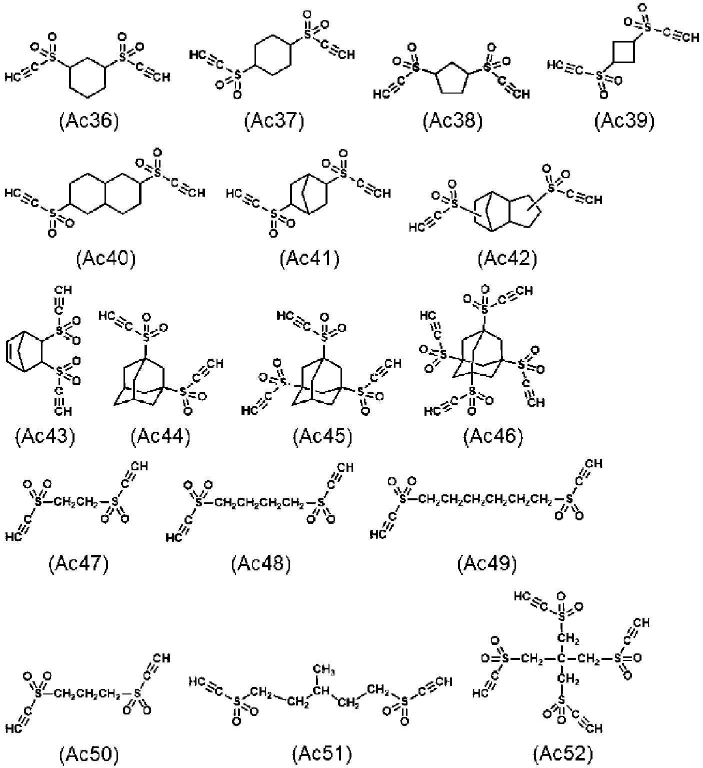

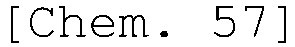

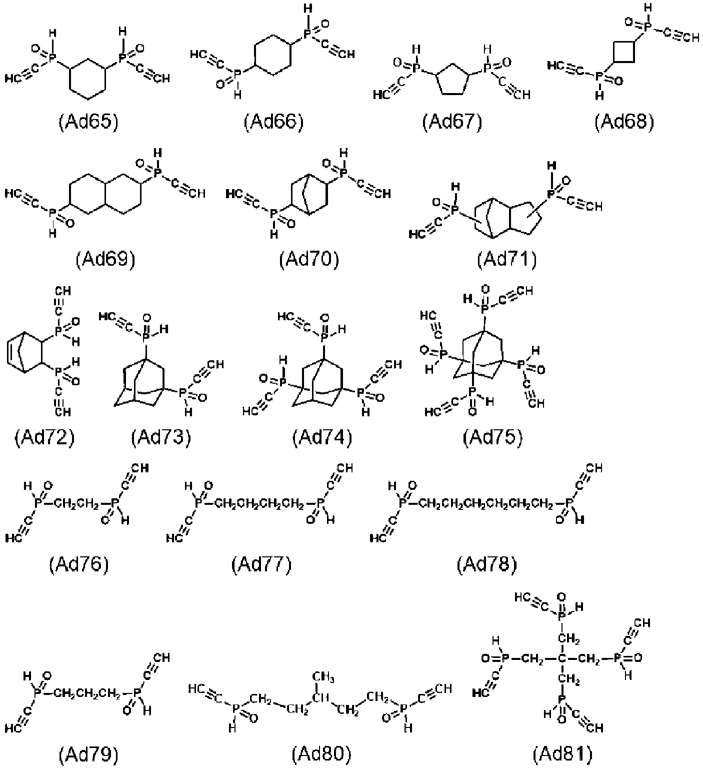

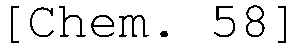

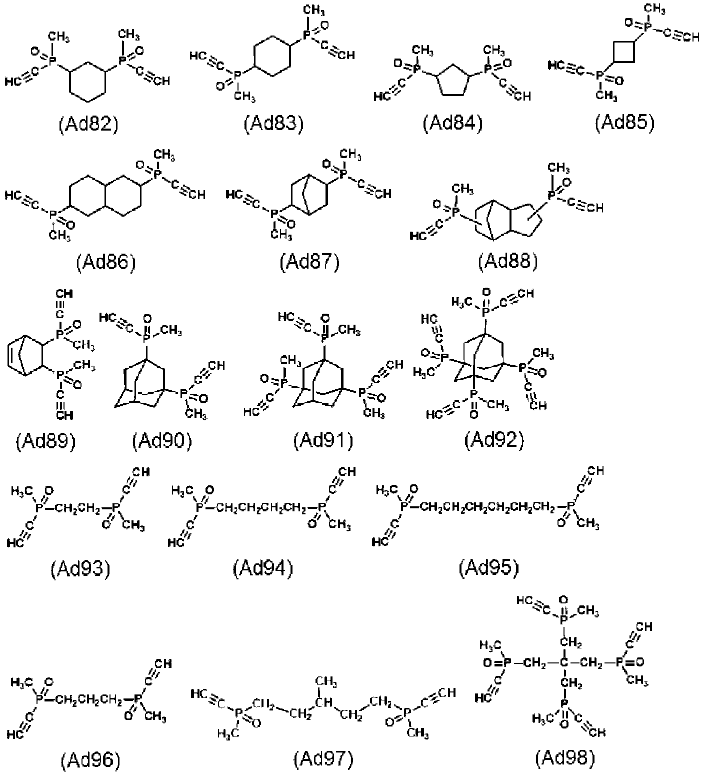

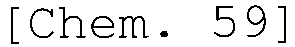

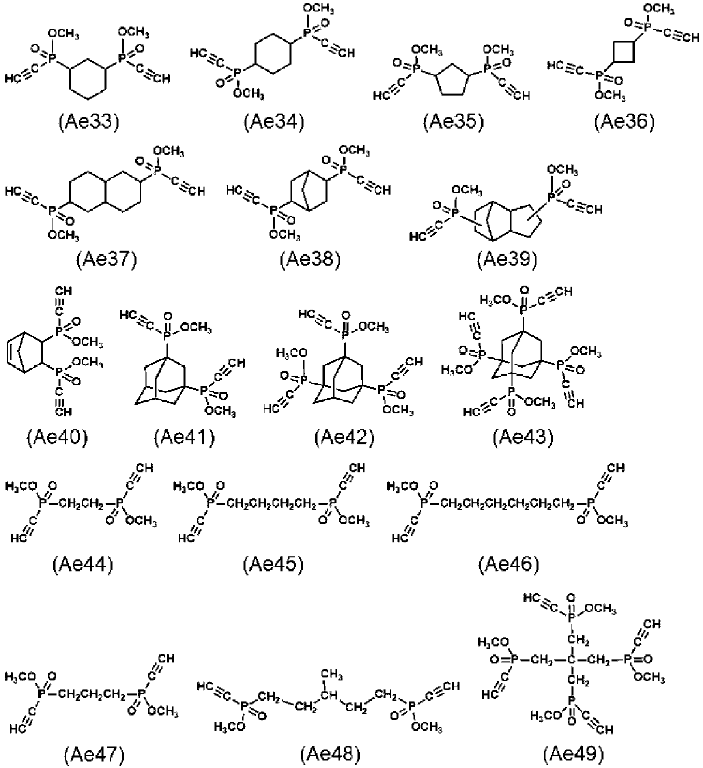

### [Prepreg]

The prepreg according to the invention is a prepreg containing a fibrous reinforcing material and an ethynyl group-containing compound represented by formula (A): 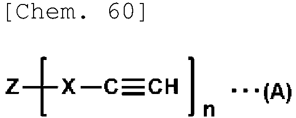 (wherein, in formula (A),
-X- is a divalent group selected from the group consisting of -C(=O)-, -S(=O)-, -S(=O)₂-, -P(=O)R^{a}-, and - P(=O)(OR^{b})-; when more than one -X- is present, they may be the same or different;
R^{a} is hydrogen or a monovalent organic group; when more than one R^{a} is present, they may be the same or different;
R^{b} is hydrogen or a monovalent organic group; when more than one R^{b} is present, they may be the same or different,
Z is an n-valent organic group; and
n is an integer of 1 or more.).

The repreg according to the invention is prepared by applying the ethynyl group-containing compound or a composition containing the ethynyl group-containing compound to a fibrous reinforcing material by means of preliminary impregnation, application, etc.

The ethynyl group-containing compound represented by formula (A) may be the ethynyl group-containing compound described above in the [Carbon material] section.

The fibrous reinforcing material includes, for example, at least one type of fibers selected from inorganic fibers such as carbon fibers, glass fibers, potassium titanate fibers, and metal fibers and organic fibers such as heat resistant macromolecules. No particular limitation is imposed on the form of the fibrous reinforcing material. The fibrous reinforcing material may be in the form of a woven fabric, a nonwoven fabric, a roving, a chopped strand mat, a surfacing mat, etc. The woven fabric used may be, for example, a plain weave fabric, a mat weave fabric, a twill weave fabric, etc.

The fibrous reinforcing material used may optionally be subjected to fiber-opening treatment or surface treatment using, for example, a silane coupling agent.

A fiber-reinforced material can be obtained by optionally subjecting the prepreg to forming and then heat-curing the resulting prepreg in the temperature range of, for example, 50°C or higher and 250°C or lower or in the temperature range of, for example, 50°C or higher and 200°C or lower.

### [EXAMPLES]

The present invention will next be described more specifically by way of Examples. However, it will be appreciated that these Examples are illustrative and should not be construed as being limiting in any way.

### {Synthesis of compounds represented by formula (A1)/formula (B)}

### [Example 1A]

### <Synthesis of 1-(3-(4-propioloylphenoxy)phenyl)prop-2-yn-1-one>

### (Step 1: Synthesis of 3-(4-formylphenoxy)benzaldehyde)

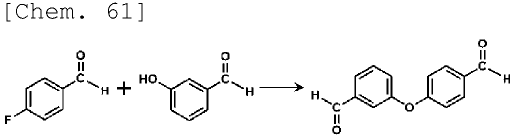

4-Fluorobenzaldehyde (4.96 g, 40.0 mmol) was dissolved in 20 mL of dehydrated dimethyl sulfoxide in an argon atmosphere. 3-Hydroxybenzaldehyde (4.44 g, 20.0 mmol) and potassium carbonate (5.53 g, 40.0 mmol) were added to the solution, and the mixture was stirred under heating at 110°C for 43 hours. The resulting solution was naturally cooled to room temperature (25°C), and 200 mL of water was added. Then the mixture was extracted three times each with 200 mL of a solvent mixture of hexane and ethyl acetate in a volume ratio of 4:1. The solvents were removed from the resulting organic phase by evaporation under reduced pressure, and the resulting organic phase was dried in a vacuum atmosphere. 3-(4-Formylphenoxy)benzaldehyde (4.24 g, 18.7 mmol) was thereby obtained as a pale yellow liquid with a yield of 93.6%.

### (Step 2: Synthesis of 1-(3-(4-propioloylphenoxy)phenyl)prop-2-yn-1-one)

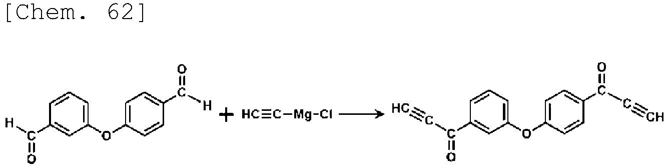

3-(4-Formylphenoxy)benzaldehyde (3.39 g, 15.0 mmol) was dissolved in 150 mL of dehydrated tetrahydrofuran in an argon atmosphere. The solution was cooled to 0°C, and then 120 mL (60.0 mmol) of a 0.5M tetrahydrofuran solution of ethynylmagnesium chloride was added dropwise over 30 minutes. The mixture was heated to room temperature (25°C) and stirred at room temperature (25°C) for 19 hours. 200 mL of a saturated aqueous ammonium chloride solution was added to the solution, and the mixture was extracted three times each with 50 mL of dichloromethane. The solvent was removed from the organic phase by evaporation under reduced pressure, and the resulting organic phase was dried in a vacuum atmosphere to thereby obtain a crude product. The obtained crude product was dissolved in 150 mL of dichloromethane in an air atmosphere. Then, manganese dioxide (52.1 g, 600 mmol) was added, and the mixture was stirred at room temperature (25°C) for 1 hour. The solution was filtered, and the solvent was removed from the organic phase by evaporation under reduced pressure. Then the resulting organic phase was dried in a vacuum atmosphere. The product was purified by column chromatography using a solvent mixture of hexane and ethyl acetate in a volume ratio of 4:1. 1-(3-(4-Propioloylphenoxy)phenyl)prop-2-yn-1-one (2.68 g, 9.77 mmol) was thereby obtained as a pale yellow solid with a yield of 65.2%.

### [Reference Example 1A]

### <Synthesis of 1,1'-(1,3-phenylene)bis(prop-2-yn-1-one)>

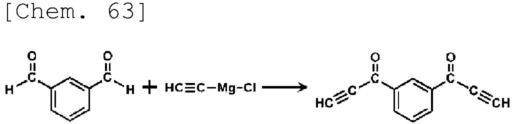

Isophthaldialdehyde (3.35 g, 25.0 mmol) was dissolved in 250 mL of dehydrated tetrahydrofuran in an argon atmosphere. The solution was cooled to 0°C, and then 200 mL (100 mmol) of a 0.5M tetrahydrofuran solution of ethynylmagnesium chloride was added dropwise over 30 minutes. The mixture was heated to room temperature (25°C) and stirred at room temperature (25°C) for 19 hours. 200 mL of a saturated aqueous ammonium chloride solution was added to the solution, and the mixture was extracted three times each with 50 mL of dichloromethane. The solvent was removed from the organic phase by evaporation under reduced pressure, and the resulting organic phase was dried in a vacuum atmosphere to thereby obtain a crude product. The obtained crude product was dissolved in 200 mL of dichloromethane in an air atmosphere. Then, manganese dioxide (43.5 g, 500 mmol) was added, and the mixture was stirred at room temperature (25°C) for 1 hour. The solution was filtered, and the solvent was removed from the organic phase by evaporation under reduced pressure. Then the resulting organic phase was dried in a vacuum atmosphere. The product was purified by column chromatography using a solvent mixture of hexane and ethyl acetate in a volume ratio of 4:1. 1,1'-(1,3-Phenylene)bis(prop-2-yn-1-one) (2.26 g, 12.4 mmol) was thereby obtained as a red solid with a yield of 49.6%.

### [Example 2A]

### <Synthesis of 1,1'-((1,2-phenylenebis(oxy))bis(2,1-phenylene))bis(prop-2-yn-1-one)>

### (Step 1: Synthesis of 2,2'-(1,2-phenylenebis(oxy))bis(benzaldehyde))

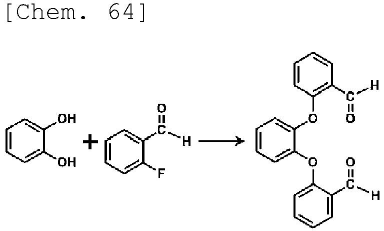

2-Fluorobenzaldehyde (2.48 g, 20.0 mmol) was dissolved in 8 mL of dehydrated dimethyl sulfoxide in an argon atmosphere, and catechol (0.551 g, 5.0 mmol) and potassium carbonate (2.76 g, 20.0 mmol) were added to the solution. The mixture was stirred under heating at 110°C for 3 hours. The resulting mixture was naturally cooled to room temperature (25°C), and 20 mL of water was added. Then the mixture was extracted three times each with 20 mL of a solvent mixture of hexane and ethyl acetate in a volume ratio of 4:1. The solvents were removed from the resulting organic phase by evaporation under reduced pressure, and the resulting organic phase was dried in a vacuum atmosphere. 2,2'-(1,2-Phenylenebis(oxy))bis(benzaldehyde) (1.41 g, 4.43 mmol) was thereby obtained as a pale yellow liquid with a yield of 88.6%.

### (Step 2: Synthesis of 1,1'-((1,2-phenylenebis(oxy))bis(2,1-phenylene))bis(prop-2-yn-1-one))

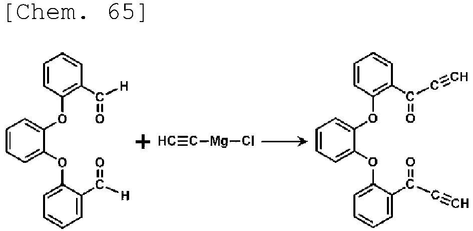

2,2'-(1,2-Phenylenebis(oxy))bis(benzaldehyde)(1.27 g, 4.00 mmol) was dissolved in 40 mL of dehydrated tetrahydrofuran in an argon atmosphere. The solution was cooled to 0°C, and then 32.0 mL (16.0 mmol) of a 0.5M tetrahydrofuran solution of ethynylmagnesium chloride was added dropwise over 30 minutes. The mixture was heated to room temperature (25°C) and stirred at room temperature (25°C) for 19 hours. 200 mL of a saturated aqueous ammonium chloride solution was added to the solution, and the mixture was extracted three times each with 50 mL of dichloromethane. The solvent was removed from the organic phase by evaporation under reduced pressure, and the resulting organic phase was dried in a vacuum atmosphere to thereby obtain a crude product. The obtained crude product was dissolved in 150 mL of dichloromethane in an air atmosphere, and manganese dioxide (13.9 g, 160 mmol) was added. The mixture was stirred at room temperature (25°C) for 1 hour. The solution was filtered, and the solvent was removed from the organic phase by evaporation under reduced pressure. The resulting organic phase was dried in a vacuum atmosphere. The product was purified by column chromatography using a solvent mixture of hexane and ethyl acetate in a volume ratio of 4:1. 1,1'-((1,2-Phenylenebis(oxy))bis(2,1-phenylene))bis(prop-2-yn-1-one) (0.500 g, 1.36 mmol) was thereby obtained as a pale yellow solid with a yield of 34.1%.

### [Example 3A]

### <Synthesis of 1,1'-((1,2-phenylenebis(oxy))bis(4,1-phenylene))bis(prop-2-yn-1-one)>

### (Step 1: Synthesis of 4,4'-(1,2-phenylenebis(oxy))bis(benzaldehyde))

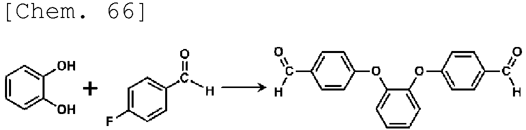

4-Fluorobenzaldehyde (2.48 g, 20.0 mmol) was dissolved in 8 mL of dehydrated dimethyl sulfoxide in an argon atmosphere. Catechol (0.551 g, 5.00 mmol) and potassium carbonate (2.76 g, 20.0 mmol) were added to the solution, and the mixture was stirred under heating at 110°C for 3 hours. The resulting solution was naturally cooled to room temperature (25°C), and 20 mL of water was added. Then, the mixture was extracted three times each with 20 mL of a solvent mixture of hexane and ethyl acetate in a volume ratio of 4:1. The solvents were removed from the resulting organic phase by evaporation under reduced pressure, and the resulting organic phase was dried in a vacuum atmosphere. 4,4'-(1,2-Phenylenebis(oxy))bis(benzaldehyde)(1.44 g, 4.53 mmol) was obtained as a pale yellow solid with a yield of 90.6%.

### (Step 2: Synthesis of 1,1'-((1,2-phenylenebis(oxy))bis(4,1- phenylene))bis(prop-2-yn-1-one))

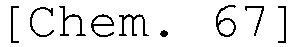

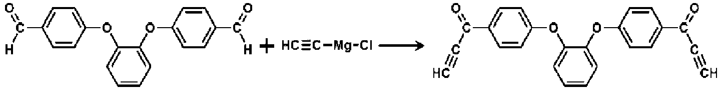

4,4'-(1,2-Phenylenebis(oxy))bis(benzaldehyde) (1.44 g, 4.53 mmol) was dissolved in 45 mL of dehydrated tetrahydrofuran in an argon atmosphere. The solution was cooled to 0°C, and then 36.2 mL (18.1 mmol) of a 0.5M tetrahydrofuran solution of ethynylmagnesium chloride was added dropwise over 30 minutes. The mixture was heated to room temperature (25°C) and stirred at room temperature (25°C) for 19 hours. 200 mL of a saturated aqueous ammonium chloride solution was added to the solution, and the mixture was extracted three times each with 50 mL of dichloromethane. The solvent was removed from the organic phase by evaporation under reduced pressure, and the resulting organic phase was dried in a vacuum atmosphere to thereby obtain a crude product. The obtained crude product was dissolved in 45 mL of dichloromethane in an air atmosphere. Manganese dioxide (15.8 g, 182 mmol) was added, and the mixture was stirred at room temperature (25°C) for 1 hour. The solution was filtered, and the solvent was removed from the organic phase by evaporation under reduced pressure. The resulting organic phase was dried in a vacuum atmosphere. The product was purified by column chromatography using a solvent mixture of hexane and ethyl acetate in a volume ratio of 4:1. 1,1'-((1,2-

Phenylenebis(oxy))bis(4,1-phenylene))bis(prop-2-yn-1-one) (1.11 g, 3.03 mmol) was thereby obtained as a pale yellow solid with a yield of 67.0%.

### [Example 4A]

### <Synthesis of 4,4'-oxybis((ethynylsulfonyl)benzene)>

### (Step 1: Synthesis of 4,4'-oxydibenzenethiol)

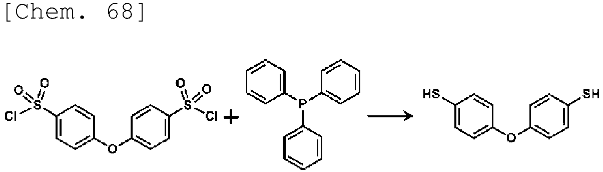

4,4'-Oxydibenzenesulfonyl chloride (5.51 g, 15.0 mmol) was dissolved in 30 mL of dehydrated toluene in an argon atmosphere, and the solution was heated to 60°C. Triphenylphosphine (23.6 g, 90.0 mmol) was added to the solution, and the mixture was heated to 60°C and stirred for 15 minutes. The resulting solution was naturally cooled to room temperature (25°C). 10 mL of water was added, and the mixture was extracted three times with 20 mL of ethyl acetate. The solvent was removed from the resulting organic phase by evaporation under reduced pressure, and the resulting organic phase was dried in a vacuum atmosphere. The product obtained as a pale yellow solid was dissolved in 400 mL of a 10% by mass aqueous sodium hydroxide solution, and the solution was neutralized with 1.0 L of 1M

hydrochloric acid. The precipitated pale yellow solid was separated by filtration and washed with 100 mL of water and dried in a vacuum atmosphere. 4,4'-Oxydibenzenethiol (3.24 g, 13.8 mmol) was thereby obtained as a pale yellow solid with a yield of 92.1%.

### (Step 2: Synthesis of 1,1'-((oxybis(4,1-phenylene))bis(sulfanediyl))bis(pyrrolidine-2,5-dione))

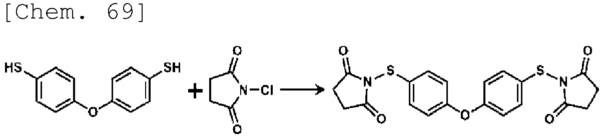

N-Chlorosuccinimide (2.81 g, 21.0 mmol) was dissolved in 40 mL of dried dichloromethane in an argon atmosphere, and the solution was cooled to 0°C. 4,4'-Oxydibenzenethiol (2.34 g, 10.0 mmol) was added to the solution, and the mixture was stirred at 0°C for 30 minutes under heating. Then, 40 mL (22.0 mmol) of a 0.55M dichloromethane solution of triethylamine was added dropwise to the mixture, and the resulting mixture was further stirred at 0°C for 2 hours. 20 mL of water was added to the mixture, and the resulting mixture was extracted three times with 30 mL of dichloromethane. The solvent was removed from the resulting organic phase by evaporation under reduced pressure, and the resulting organic phase was dried in a vacuum atmosphere. The product was purified by column chromatography using a solvent mixture of methanol and dichloromethane in a volume ratio of 1:50. 1,1'-((oxybis(4,1-phenylene))bis(sulfanediyl))bis(pyrrolidine-2,5-dione) (4.30 g, 10.0 mmol) was thereby obtained quantitatively as a colorless and transparent solid.

### (Step 3: Synthesis of (((oxybis(4,1-phenylene))bis(sulfanediyl))bis(ethyne-2,1-diyl))bis(trimethylsilane))

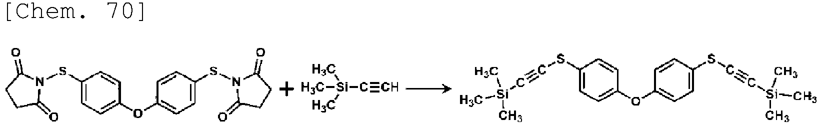

Trimethylsilylacetylene (2.46 g, 25.0 mmol) was dissolved in 70 mL of dried tetrahydrofuran in an argon atmosphere, and the solution was cooled to -78°C. 7.81 mL of a 2.69M tetrahydrofuran solution of n-butyllithium was added dropwise to the solution, and the mixture was stirred at -78°C for 30 minutes. Then, 20 mL (10.0 mmol) of a 0.5M tetrahydrofuran solution of 1,1'-((oxybis(4,1-phenylene))bis(sulfanediyl))bis(pyrrolidine-2,5-dione) was added dropwise to the mixture, and the resulting mixture was heated to room temperature (25°C) and stirred for 2 hours. 100 mL of a saturated aqueous sodium hydrogencarbonate solution was added to the mixture, and the resulting mixture was extracted five times with 40 mL of dichloromethane. The solvent was removed from the resulting organic phase by evaporation under reduced pressure, and the resulting organic phase was dried in a vacuum atmosphere. The product was purified by column chromatography using a solvent mixture of hexane and ethyl acetate in a volume ratio of 50:1. (((Oxybis(4,1-phenylene))bis(sulfanediyl))bis(ethyne-2,1-diyl))bis(trimethylsilane) (3.71 g, 8.72 mmol) was thereby obtained as a pale yellow solid with a yield of 87.2%.

### (Step 4: Synthesis of 4,4'-oxybis((ethynylsulfonyl)benzene))

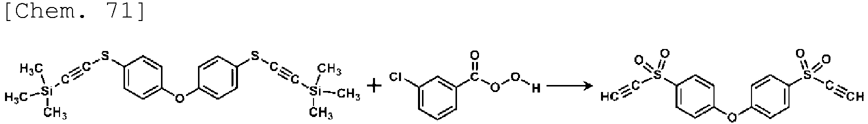

(((Oxybis(4,1-phenylene))bis(sulfanediyl))bis(ethyne-2,1-diyl))bis(trimethylsilane) (2.80 g, 6.55 mmol) was dissolved in 125 mL of dried dichloromethane in an argon atmosphere. m-Chloroperoxybenzoic acid (containing ca. 30% water) (9.69 g, 39.3 mmol) was added to the solution, and the mixture was stirred at room temperature (25°C) for 27 hours. 100 mL of a 10% by mass aqueous sodium thiosulfate solution was added to the mixture, and the resulting mixture was extracted three times with 40 mL of dichloromethane. The obtained organic phase was further washed with 40 mL of a saturated aqueous sodium hydrogencarbonate solution. The solvent was removed from the resulting organic phase by evaporation under reduced pressure, and the resulting organic phase was dried in a vacuum atmosphere to thereby obtain a crude product. The obtained crude product was dissolved in 125 mL of ethanol. 12 mL of a 1.64M aqueous sodium fluoride solution was added to the solution, and the mixture was stirred at room temperature (25°C) for 30 minutes. 20 mL of water was added to the mixture, and the resulting mixture was extracted three times with 40 mL of dichloromethane. The solvent was removed from the resulting organic phase by evaporation under reduced pressure, and the resulting organic phase was dried in a vacuum atmosphere. The product was purified by column chromatography using a solvent mixture of hexane and ethyl acetate in a volume ratio of 2:1. 4,4'-Oxybis((ethynylsulfonyl)benzene) (1.47 g, 4.25 mmol) was thereby obtained as a colorless and transparent solid with a yield of 64.9%.

### [Example 5A]

### <Synthesis of 1,1'-(oxydi-1,4-phenylene)bis(prop-2-yn-1-one)>

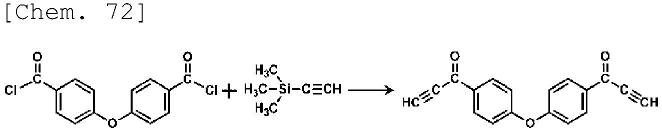

Bis(triphenylphosphine)palladium(II) dichloride (1.97 g, 2.80 mmol) was dissolved in 700 mL of dried tetrahydrofuran in an argon atmosphere. Copper iodide (1.07 g, 5.60 mmol), 4,4'-oxybis(benzoylchloride) (20.7 g, 70.0 mmol), triethylamine (14.2 g, 140 mmol), and trimethylsilylacetylene (16.5 g, 168 mmol) were added to the solution, and the mixture was stirred at room temperature for 2 hours. 30 mL of water was added to the mixture, and the resulting mixture was extracted three times with 20 mL of dichloromethane. The solvent was removed from the resulting organic phase by evaporation under reduced pressure, and the resulting organic phase was dried in a vacuum atmosphere to thereby obtain a crude product. The crude product was dissolved in 500 mL of dried tetrahydrofuran. Then, a 0.0100M aqueous borax solution (50.5 mL, 0.505 mmol) was added dropwise to the solution, and the mixture was stirred at room temperature for 15 minutes. 800 mL of water was added to the mixture, and the resulting mixture was extracted three times with 200 mL of dichloromethane. The solvent was removed from the resulting organic phase by evaporation under reduced pressure, and the resulting organic phase was dried in a vacuum atmosphere. The product was purified by column chromatography using a solvent mixture of hexane and ethyl acetate in a volume ratio of 1:1. 1,1'-(Oxydi-1,4-phenylene)bis(prop-2-yn-1-one) (9.36 g, 34.1 mmol) was thereby obtained as a pale yellow solid with a yield of 48.7%.

### [Example 6A]

### <Synthesis of 1,1'-((1,4-phenylenebis(oxy))bis(4,1-phenylene))bis(prop-2-yn-1-one)>

### (Step 1: Synthesis of 4,4'-(1,4-phenylenebis(oxy))bis(benzaldehyde)

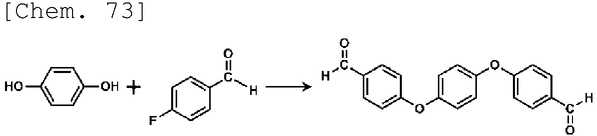

4-Fluorobenzaldehyde (2.48 g, 20.0 mmol) was dissolved in 8 mL of dehydrated dimethyl sulfoxide in an argon atmosphere. Hydroquinone (0.550 g, 5.00 mmol) and potassium carbonate (2.76 g, 20.0 mmol) were added to the solution, and the mixture was stirred under heating at 110°C for 5 hours. The resulting solution was naturally cooled to room temperature (25°C), and 20 mL of water was added. The resulting mixture was extracted three times each with 20 mL of a solvent mixture of hexane and ethyl acetate in a volume ratio of 4:1. The solvents were removed from the resulting organic phase by evaporation under reduced pressure, and the resulting organic phase was dried in a vacuum atmosphere. 4,4'-(1,4-Phenylenebis(oxy))bis(benzaldehyde) (1.25 g, 3.93 mmol) was thereby obtained as a pale yellow solid with a yield of 78.4%.

### (Step 2: Synthesis of 1,1'-((1,4-phenylenebis(oxy))bis(4,1-phenylene))bis(prop-2-yn-1-one))

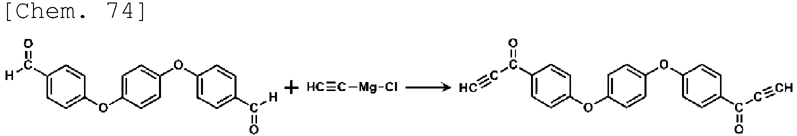

4,4'-(1,4-Phenylenebis(oxy))bis(benzaldehyde) (0.934 g, 2.94 mmol) was dissolved in 30 mL of dehydrated tetrahydrofuran in an argon atmosphere. The solution was cooled to 0°C, and then 23.6 mL(11.8 mmol) of a 0.5M tetrahydrofuran solution of ethynylmagnesium chloride was added dropwise over 30 minutes. The mixture was heated to room temperature (25°C) and stirred at room temperature (25°C) for 1 hour. 200 mL of a saturated aqueous ammonium chloride solution was added to the solution, and the mixture was extracted three times each with 50 mL of dichloromethane. The solvent was removed from the organic phase by evaporation under reduced pressure, and the resulting organic phase was dried in a vacuum atmosphere to thereby obtain a crude product. The obtained crude product was dissolved in 30 mL of dichloromethane in an air atmosphere. Manganese dioxide (10.2 g, 118 mmol) was added to the solution, and the mixture was stirred at room temperature (25°C) for 2 hours. The solution was filtered, and the solvent was removed from the organic phase by evaporation under reduced pressure. The resulting organic phase was dried in a vacuum atmosphere. The product was purified by column chromatography using a solvent mixture of hexane and ethyl acetate in a volume ratio of 4:1. 1,1'-((1,4-Phenylenebis(oxy))bis(4,1-phenylene))bis(prop-2-yn-1-one) (0.962 g, 2.62 mmol) was thereby obtained as a pale yellow solid with a yield of 89.1%.

### {Production of curable compositions}

### [Example 1B]

### <Production of curable composition 1B>

16.4644 g (60 mmol) of 1-(3-(4-propioloylphenoxy)phenyl)prop-2-yn-1-one was weighed, and 0.1292 g (1.50 mmol) of piperazine was added thereto. The mixture was pulverized and mixed in a mortar for 30 minutes to thereby obtain 16.5936 g of a curable composition 1B.

### [Example 2B]

### <Production of curable composition 2B>

The same procedure as in Example 1B was repeated except that 10.9320 g (60 mmol) of 1,1'-(1,3-phenylene)bis(prop-2-yn-1-one) was used instead of 16.4644 g (60 mmol) of 1-(3-(4-propioloylphenoxy)phenyl)prop-2-yn-1-one to thereby obtain 11.0612 g of a curable composition 2B.

### [Example 3B]

### <Production of curable composition 3B>

16.4640 g (60 mmol) of 1-(3-(4-propioloylphenoxy)phenyl)prop-2-yn-1-one was weighed and pulverized and mixed in a mortar for 30 minutes to thereby obtain 16.4640 g of a curable composition 3B.

### [Example 4B]

### <Production of curable composition 4B>

The same procedure as in Example 3B was repeated except that 10.9321 g (60 mmol) of 1,1'-(1,3-phenylene)bis(prop-2-yn-1-one) was used instead of 16.4644 g (60 mmol) of 1-(3-(4-propioloylphenoxy)phenyl)prop-2-yn-1-one to thereby obtain 10.9321 g of a curable composition 4B.

### [Example 5B]

### <Production of curable composition 5B>

0.080600 g (0.22 mmol) of 1,1'-((1,2-phenylenebis(oxy))bis(2,1-phenylene))bis(prop-2-yn-1-one) was weighed, and 0.000474 g (0.00550 mmol) of piperazine was added thereto. The mixture was pulverized and mixed in a mortar for 30 minutes to thereby obtain 0.081074 g of a curable composition 5B.

### [Example 6B]

### <Production of curable composition 6B>

The same procedure as in Example 5B was repeated except that 0.080600 g (0.22 mmol) of 1,1'-((1,2-phenylenebis(oxy))bis(4,1-phenylene))bis(prop-2-yn-1-one) was used instead of 1,1'-((1,2-phenylenebis(oxy))bis(2,1-phenylene))bis(prop-2-yn-1-one) to thereby obtain 0.081074 g of a curable composition 6B.

### [Example 7B]

### <Production of curable composition 7B>

0.06920 g (0.20 mmol) of 4,4'-oxybis((ethynylsulfonyl)benzene) was weighed, and 0.00431 g (0.00500 mmol) of piperazine was added thereto. The mixture was pulverized and mixed in a mortar for 30 minutes to thereby obtain 0.07351 g of a curable composition 7B.

### [Example 8B]

### <Production of curable composition 8B>

The same procedure as in Example 1B was repeated except that 16.4644 (60 mmol) of 1,1'-(oxydi-1,4-phenylene)bis(prop-2-yn-1-one) was used instead of 16.4644 g (60 mmol) of 1-(3-(4-propioloylphenoxy)phenyl)prop-2-yn-1-one to thereby obtain 16.5936 g of a curable composition 8B.

### [Example 9B]

### <Production of curable composition 9B>

The same procedure as in Example 5B was repeated except that 0.080600 g (0.22 mmol) of 1,1'-((1,4-phenylenebis(oxy))bis(4,1-phenylene))bis(prop-2-yn-1-one) was used instead of 1,1'-((1,2-phenylenebis(oxy))bis(2,1-phenylene))bis(prop-2-yn-1-one) to thereby obtain 0.081074 g of a curable composition 9B.

### {Measurement of properties of curable compositions and cured products}

### [5% weight loss temperatures of curable compositions]

### <Measurement of 5% weight loss temperature of curable composition 1B>

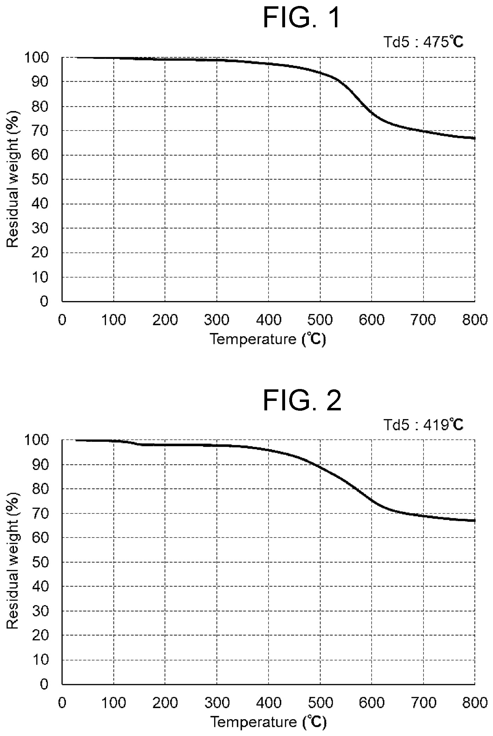

7.8 mg of the curable composition 1B was weighed into a platinum pan, and the platinum pan was placed in a thermogravimetric analyzer ("STA7200" manufactured by Hitachi High-Tech Science Corporation). The curable composition 1B weighed into the platinum pan was heated from 30°C to 800°C at a heating rate of 10°C/min in a nitrogen atmosphere to perform TG-DTA analysis, and the 5% weight loss temperature Td5 was measured and found to be 475°C. Fig. 1 shows the results of the TG-DTA analysis of the curable composition 1B.

### <Measurement of 5% weight loss temperature of curable composition 2B>

The 5% weight loss temperature Td5 of the curable composition 2B was measured in the same manner as in the <Measurement of 5% weight loss temperature of curable composition 1B> section and was found to be 419°C. Fig. 2 shows the results of the TG-DTA analysis of the curable composition 2B.

### <Measurement of 5% weight loss temperature of curable composition 3B>

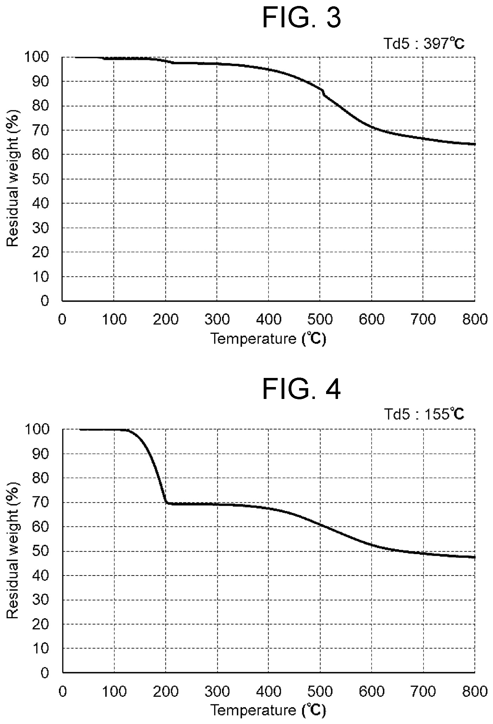

The 5% weight loss temperature Td5 of the curable composition 3B was measured in the same manner as in the <Measurement of 5% weight loss temperature of curable composition 1B> section and was found to be 397°C. Fig. 3 shows the results of the TG-DTA analysis of the curable composition 3B.

### <Measurement of 5% weight loss temperature of curable composition 4B>

The 5% weight loss temperature Td5 of the curable composition 4B was measured in the same manner as in the <Measurement of 5% weight loss temperature of curable composition 1B> section and was found to be 155°C. Fig. 4 shows the results of the TG-DTA analysis of the curable composition 4B.

### <Measurement of 5% weight loss temperature of curable composition 5B>

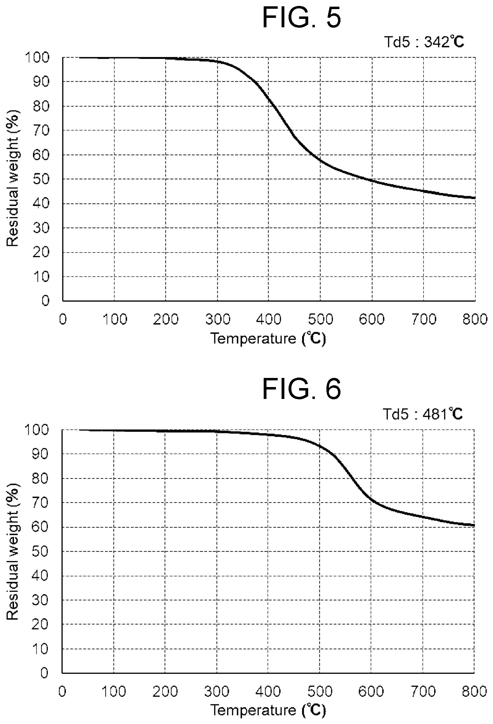

The 5% weight loss temperature Td5 of the curable composition 5B was measured in the same manner as in the <Measurement of 5% weight loss temperature of curable composition 1B> section and was found to be 342°C. Fig. 5 shows the results of the TG-DTA analysis of the curable composition 5B.

### <Measurement of 5% weight loss temperature of curable composition 6B>

The 5% weight loss temperature Td5 of the curable composition 6B was measured in the same manner as in the <Measurement of 5% weight loss temperature of curable composition 1B> section and was found to be 481°C. Fig. 6 shows the results of the TG-DTA analysis of the curable composition 6B.

### <Measurement of 5% weight loss temperature of curable composition 8B>

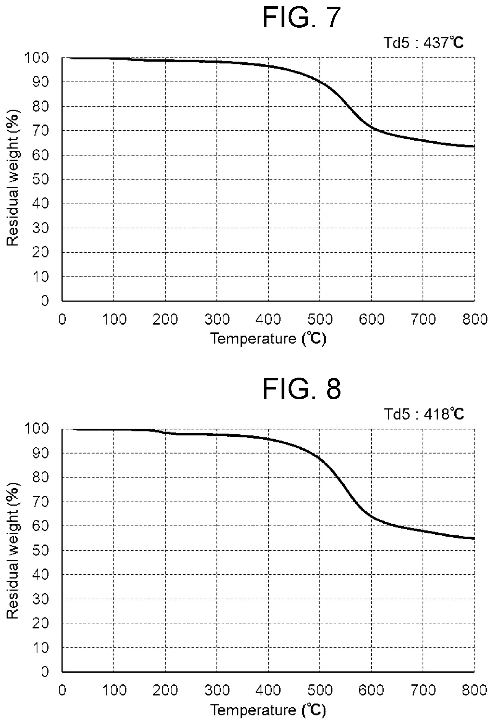

The 5% weight loss temperature Td5 of the curable composition 8B was measured in the same manner as in the <Measurement of 5% weight loss temperature of curable composition 1B> section and was found to be 437°C. Fig. 7 shows the results of the TG-DTA analysis of the curable composition 8B.

### <Measurement of 5% weight loss temperature of curable composition 9B>

The 5% weight loss temperature Td5 of the curable composition 9B was measured in the same manner as in the <Measurement of 5% weight loss temperature of curable composition 1B> section and was found to be 418°C. Fig. 8 shows the results of the TG-DTA analysis of the curable composition 9B.

### [5% weight loss temperatures of heat-resistant resin materials obtained by curing curable compositions]

### <Measurement of 5% weight loss temperature of heat-resistant resin material (cured product) 1Ca>

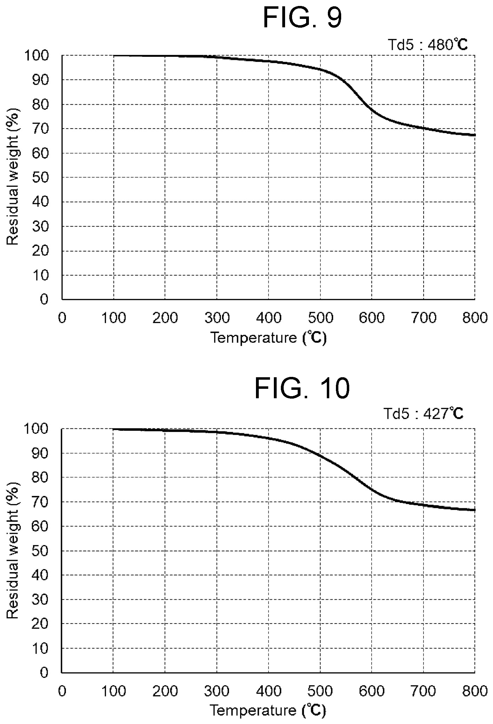

65.0 mg of the curable composition 1B was melted at 120°C, poured into a 1 cm × 2 cm aluminum mold, and heated in an oven at 120°C in an air atmosphere for 6 hours to thereby obtain a heat-resistant resin material (cured product) 1Ca. 5.7 mg of the obtained heat-resistant resin material (cured product) 1Ca was placed in a platinum pan, and the platinum pan was placed in a thermogravimetric analyzer ("STA7200" manufactured by Hitachi High-Tech Science Corporation). The heat-resistant resin material (cured product) 1Ca placed in the platinum pan was heated from 100°C to 800°C at a heating rate of 10°C/min in a nitrogen atmosphere to perform TG-DTA analysis, and the 5% weight loss temperature Td5 was measured and found to be 480°C. Fig. 9 shows the results of the TG-DTA analysis.

### <Measurement of 5% weight loss temperature of heat-resistant resin material (cured product) 2C>

65.0 mg of the curable composition 2B was melted at 130°C, poured into a 1 cm × 2 cm aluminum mold, and heated in an oven at 130°C in an air atmosphere for 6 hours to thereby obtain a heat-resistant resin material (cured product) 2C. The 5% weight loss temperature Td5 of the heat-resistant resin material (cured product) 2C was measured in the same manner as in the <Measurement of 5% weight loss temperature of heat-resistant resin material (cured product) 1Ca> section and was found to be 427°C. Fig. 10 shows the results of the TG-DTA analysis.

### <Measurement of 5% weight loss temperature of heat-resistant resin material (cured product) 3C>

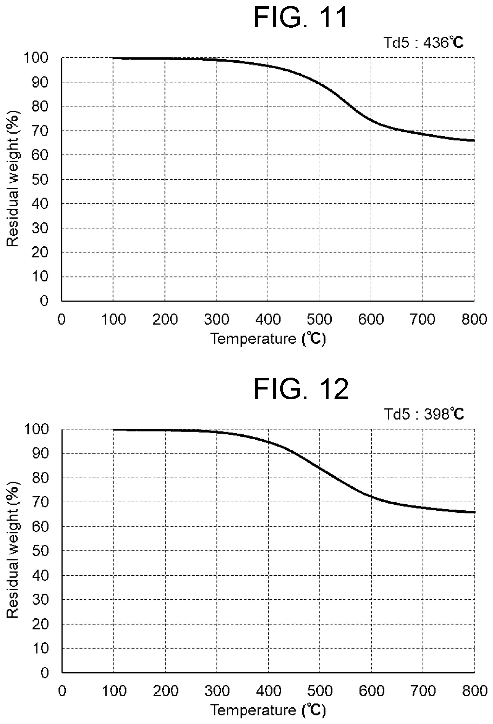

65.2 mg of the curable composition 3B was melted at 120°C, poured into a 1 cm × 2 cm aluminum mold, and heated in an oven in an air atmosphere in a stepwise manner at 120°C for 1 hour, at 150°C for 2 hours, and then at 180°C for 2 hours to thereby obtain a heat-resistant resin material (cured product) 3C. The 5% weight loss temperature Td5 of the heat-resistant resin material (cured product) 3C was measured in the same manner as in the <Measurement of 5% weight loss temperature of heat-resistant resin material (cured product) 1Ca> section and was found to be 436°C. Fig. 11 shows the results of the TG-DTA analysis.

### <Measurement of 5% weight loss temperature of heat-resistant resin material (cured product) 4C>

65.0 mg of the curable composition 4B was melted at 130°C, poured into a 1 cm × 2 cm aluminum mold, and heated in an oven in an air atmosphere in a stepwise manner at 130°C for 1 hour, at 150°C for 2 hours, and then at 180°C for 2 hours to thereby obtain a heat-resistant resin material (cured product) 4C. The 5% weight loss temperature Td5 of the heat-resistant resin material (cured product) 4C was measured in the same manner as in the <Measurement of 5% weight loss temperature of heat-resistant resin material (cured product) 1C> section and was found to be 398°C. Fig. 12 shows the results of the TG-DTA analysis.

### <Measurement of 5% weight loss temperature of heat-resistant resin material (cured product) 5C>

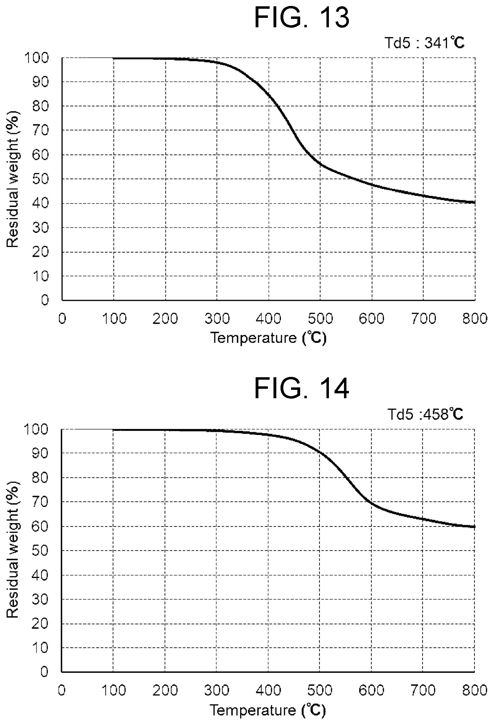

65.0 mg of the curable composition 5B was melted at 120°C, poured into a 1 cm × 2 cm aluminum mold, and heated in an oven at 120°C in an air atmosphere for 6 hours to thereby obtain a heat-resistant resin material (cured product) 5C. The 5% weight loss temperature Td5 of the heat-resistant resin material (cured product) 5C was measured in the same manner as in the <Measurement of 5% weight loss temperature of heat-resistant resin material (cured product) 1Ca> section and was found to be 341°C. Fig. 13 shows the results of the TG-DTA analysis.

### <Measurement of 5% weight loss temperature of heat-resistant resin material (cured product) 6C>

65.0 mg of the curable composition 6B was melted at 120°C, poured into a 1 cm × 2 cm aluminum mold, and heated in an oven at 120°C in an air atmosphere for 6 hours to thereby obtain a heat-resistant resin material (cured product) 6C. The 5% weight loss temperature Td5 of the heat-resistant resin material (cured product) 6C was measured in the same manner as in the <Measurement of 5% weight loss temperature of heat-resistant resin material (cured product) 1Ca> section and was found to be 458°C. Fig. 14 shows the results of the TG-DTA analysis.

### <Measurement of 5% weight loss temperature of heat-resistant resin material (cured product) 7C>

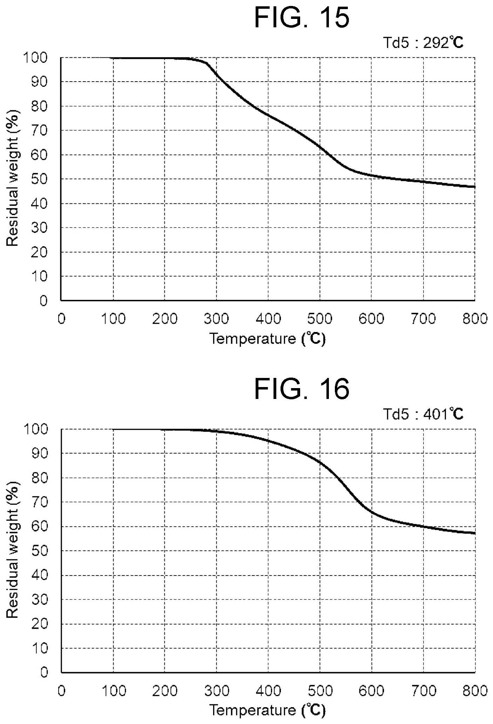

65.0 mg of the curable composition 7B was melted at 150°C, poured into a 1 cm × 2 cm aluminum mold, and heated in an oven in an air atmosphere at 150°C for 1 hour, at 160°C for 1 hour, and then at 180°C for 2 hours to thereby obtain a heat-resistant resin material (cured product) 7C. The 5% weight loss temperature Td5 of the heat-resistant resin material (cured product) 7C was measured in the same manner as in the <Measurement of 5% weight loss temperature of heat-resistant resin material (cured product) 1Ca> section and was found to be 292°C. Fig. 15 shows the results of the TG-DTA analysis.

### <Measurement of 5% weight loss temperature of heat-resistant resin material (cured product) 8C>

65.0 mg of the curable composition 8B was heated at 120°C, placed in a 1 cm × 2 cm aluminum mold, and heated in an oven in an air atmosphere at 120°C for 2 hours, at 150°C for 2 hours, and then at 180°C for 2 hours to thereby obtain a heat-resistant resin material (cured product) 8C. The 5% weight loss temperature Td5 of the heat-resistant resin material (cured product) 8C was measured in the same manner as in the <Measurement of 5% weight loss temperature of heat-resistant resin material (cured product) 1Ca> section and was found to be 401°C. Fig. 16 shows the results of the TG-DTA analysis.

### <Measurement of 5% weight loss temperature of heat-resistant resin material (cured product) 9C>

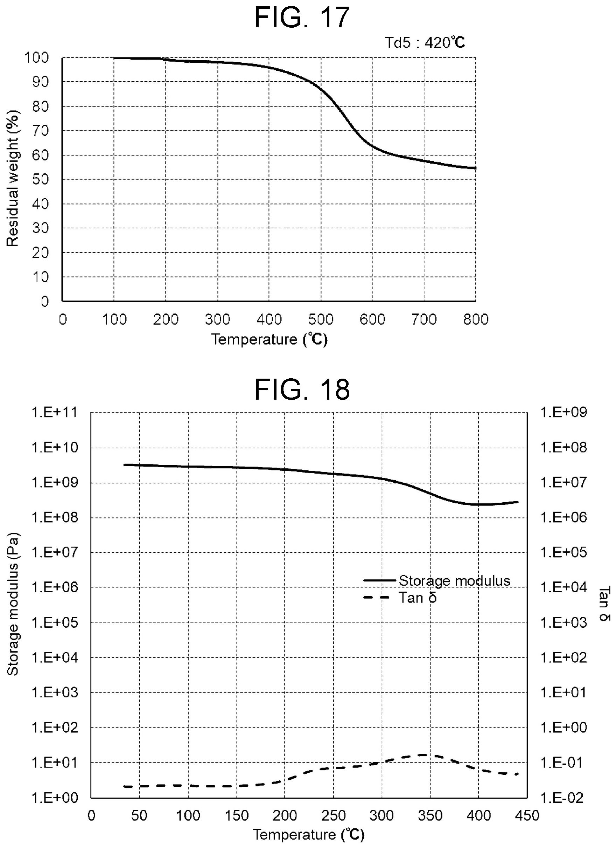

65.0 mg of the curable composition 9B was heated at 120°C, placed in a 1 cm × 2 cm aluminum mold, and heated in an oven in an air atmosphere at 120°C for 2 hours, at 150°C for 2 hours, and then at 180°C for 2 hours to thereby obtain a heat-resistant resin material (cured product) 9C. The 5% weight loss temperature Td5 of the heat-resistant resin material (cured product) 9C was measured in the same manner as in the <Measurement of 5% weight loss temperature of heat-resistant resin material (cured product) 1Ca> section and was found to be 420°C. Fig. 17 shows the results of the TG-DTA analysis.

### [Glass transition temperatures (Tg) of heat-resistant resin materials obtained by curing curable compositions]

### <Measurement of glass transition temperature (Tg) of heat-resistant resin material (cured product) 1Cb>

163 mg of the curable composition 1B was melted at 120°C, poured into an 8 mm × 50 mm aluminum mold, and heated in an oven in an air atmosphere in a stepwise manner at 120°C for 1 hour, at 150°C for 2 hours, and then at 180°C for 2 hours to thereby obtain a heat-resistant resin material (cured product) 1Cb having a thickness of 290 µm. The obtained heat-resistant resin material (cured product) 1Cb was placed in a dynamic viscoelasticity measuring device ("DMA7100" manufactured by Hitachi High-Tech Science Corporation). The heat-resistant resin material (cured product) 1Cb was heated from 30°C to 450°C at a heating rate of 10°C/min in an air atmosphere to measure the dynamic viscoelasticity. The glass transition temperature (Tg) of the heat-resistant resin material (cured product) 1Cb that was obtained from the peak top of Tan δ was 351°C. Fig. 18 shows the results of the DMA measurement.

### <Measurement of glass transition temperature (Tg) of heat-resistant resin material (cured product) 2C>

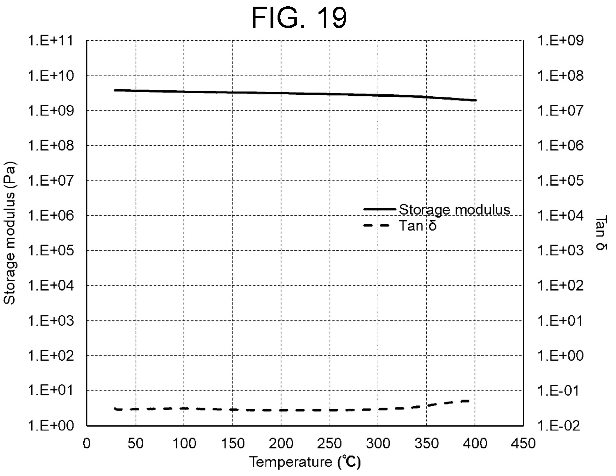

163.3 mg of the curable composition 2B was melted at 130°C, poured into an 8 mm × 50 mm aluminum mold, and heated in an oven at 130°C in an air atmosphere for 8 hours to thereby obtain a heat-resistant resin material (cured product) 2C having a thickness of 360 µm. The obtained heat-resistant resin material (cured product) 2C was placed in a dynamic viscoelasticity measuring device ("DMA7100" manufactured by Hitachi High-Tech Science Corporation). The heat-resistant resin material (cured product) 2C was heated from 30°C to 400°C at a heating rate of 10°C/min in an air atmosphere to measure the dynamic viscoelasticity. No peak top of Tan δ was observed, and the glass transition temperature (Tg) was found to be higher than 400°C. Fig. 19 shows the results of the DMA measurement.

### [Heat generation onset temperatures (Tonset (°C)) and exothermic peak temperatures (Tpeak (°C)) of curable compositions]

### <Measurement of heat generation onset temperature and exothermic peak temperature of curable composition 1B>

7.1 mg of the curable composition 1B was weighed into an aluminum pan, and the aluminum pan was placed in a differential scanning calorimeter (DSC7020 manufactured by Hitachi High-Tech Science Corporation). The curable composition 1B was heated from 30°C to 300°C at a heating rate of 5°C/min in a nitrogen atmosphere to obtain a heat generation spectrum, and the heat generation onset temperature (Tonset (°C)) and the exothermic peak temperature (Tpeak (°C)) were measured. In the present invention, the heat generation onset temperature (Tonset (°C)) is the temperature at the intersection of the tangential line at the point of maximum positive gradient of the peak in the DSC heat generation spectrum and the base line, and the exothermic peak temperature (Tpeak (°C)) is the peak top temperature in the DES heat generation spectrum. The heat generation onset temperature (Tonset (°C)) of the curable composition 1B was 94.4°C, and its exothermic peak temperature (Tpeak (°C)) was 158°C.

### <Measurement of heat generation onset temperature and exothermic peak temperature of curable composition 2B>

The heat generation onset temperature (Tonset (°C)) and exothermic peak temperature (Tpeak(°C)) of the curable composition 2B were measured in the same manner as in the <Measurement of heat generation onset temperature and exothermic peak temperature of curable composition 1B> section. The heat generation onset temperature (Tonset (°C)) of the curable composition 2B was 85.0°C, and its exothermic peak temperature (Tpeak (°C)) was 130°C.

### <Measurement of heat generation onset temperature and exothermic peak temperature of curable composition 3B>

The heat generation onset temperature (Tonset (°C)) and exothermic peak temperature (Tpeak(°C)) of the curable composition 3B were measured in the same manner as in the <Measurement of heat generation onset temperature and exothermic peak temperature of curable composition 1B> section. The heat generation onset temperature (Tonset (°C)) of the curable composition 3B was 172°C, and its exothermic peak temperature (Tpeak (°C)) was 206°C.

### <Measurement of heat generation onset temperature and exothermic peak temperature of curable composition 4B>

The heat generation onset temperature (Tonset (°C)) and exothermic peak temperature (Tpeak(°C)) of the curable composition 4B were measured in the same manner as in the <Measurement of heat generation onset temperature and exothermic peak temperature of curable composition 1B> section. The heat generation onset temperature (Tonset (°C)) of the curable composition 4B was 179°C, and its exothermic peak temperature (Tpeak (°C)) was 206°C.

### [Insoluble matter ratios of heat-resistant resin materials obtained by curing curable compositions]

### <Measurement of insoluble matter ratio of heat-resistant resin material (cured product) 1C>

65 mg the curable composition 1B was placed in a 1 cm × 2 cm mold and heated in an oven at 120°C in an air atmosphere for 6 hours to thereby obtain a film-shaped cured product of the heat-resistant resin material (cured product) 1C. The obtained heat-resistant resin material (cured product) 1C was immersed in boiling tetrahydrofuran for 2 hours, subjected to solvent exchange in acetone at room temperature of 25°C±5°C for 20 hours, and then dried in an 80°C atmosphere under a reduced pressure of -0.1 MPa while mass measurement was performed every hour until no change in mass was observed for 3 hours or longer (dried for 6 hours). The insoluble matter ratio was determined using a formula below. The insoluble matter ratio of the heat-resistant resin material (cured product) 1C was 100%. 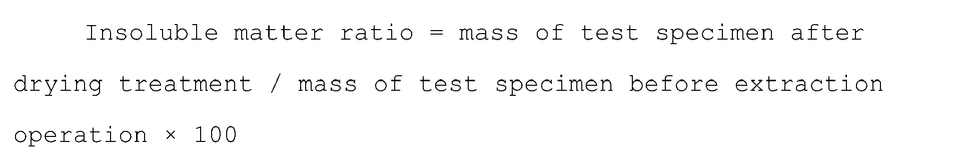 Insoluble matter ratio = mass of test specimen after drying treatment / mass of test specimen before extraction operation × 100

### <Measurement of insoluble matter ratio of heat-resistant resin material (cured product) 2C>

A heat-resistant resin material (cured product) 2C was obtained in the same manner as in the <Measurement of insoluble matter ratio of heat-resistant resin material (cured product) 1C> section except that the curable composition 2B was used instead of the curable composition 1B. The insoluble matter ratio of the heat-resistant resin material (cured product) 2C was measured in the same manner as in the <Measurement of insoluble matter ratio of heat-resistant resin material (cured product) 1C> section. The insoluble matter ratio of the heat-resistant resin material (cured product) 2C was 99.5%.

### <Measurement of insoluble matter ratio of heat-resistant resin material (cured product) 3C>

A heat-resistant resin material (cured product) 3C was obtained in the same manner as in the <Measurement of insoluble matter ratio of heat-resistant resin material (cured product) 1C> section except that the curable composition 3B was used instead of the curable composition 1B. The insoluble matter ratio of the heat-resistant resin material (cured product) 3C was measured in the same manner as in the <Measurement of insoluble matter ratio of heat-resistant resin material (cured product) 1C> section. The insoluble matter ratio of the heat-resistant resin material (cured product) 3C was 99.0%.

### <Measurement of insoluble matter ratio of heat-resistant resin material (cured product) 4C>

A heat-resistant resin material (cured product) 4C was obtained in the same manner as in the <Measurement of insoluble matter ratio of heat-resistant resin material (cured product) 1C> section except that the curable composition 4B was used instead of the curable composition 1B. The insoluble matter ratio of the heat-resistant resin material (cured product) 4C was measured in the same manner as in the <Measurement of insoluble matter ratio of heat-resistant resin material (cured product) 1C> section. The insoluble matter ratio of the heat-resistant resin material (cured product) 4C was 98.5%.

### [Residual carbon weights of cured products of heat-resistant resin materials obtained by curing curable compositions]

### <Measurement of residual carbon weight of heat-resistant resin material (cured product) 1C>

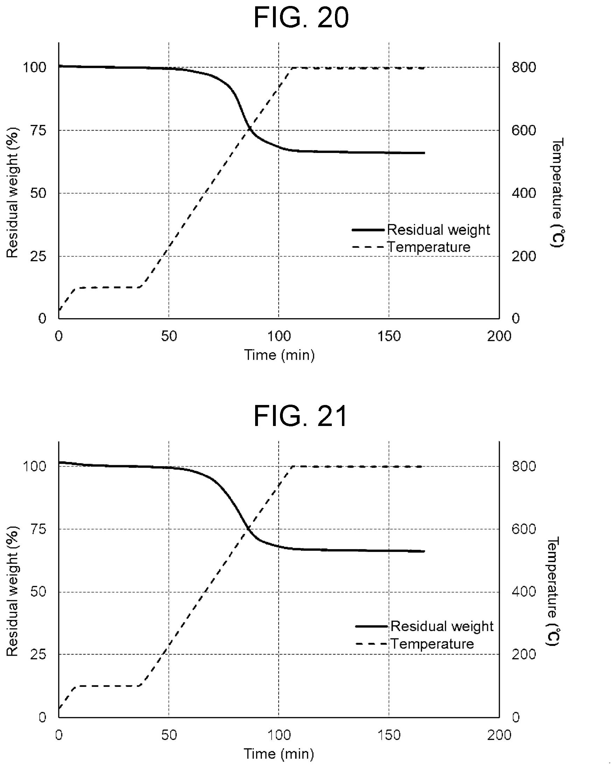

65.1 mg of the curable composition 1B was melted at 120°C, poured into a 1 cm × 2 cm aluminum mold, and heated in an oven at 120°C in an air atmosphere for 6 hours to thereby obtain a heat-resistant resin material (cured product) 1C. 8.5 mg of the heat-resistant resin material (cured product) 1C was placed in a platinum pan, and the platinum pan was placed in a thermogravimetric analyzer ("STA7200" manufactured by Hitachi High-Tech Science Corporation). The heat-resistant resin material (cured product) 1C placed in the platinum pan was maintained at 100°C for 30 minutes in a nitrogen atmosphere, heated from 100°C to 800°C at a heating rate of 10°C/min, and maintained at 800°C for 1 hour to thereby obtain a carbon material 1D. The mass ratio of the heat-resistant resin material (cured product) 1C after it was maintained at 100°C for 30 minutes was defined as 100, and the mass ratio after heating at 800°C for 1 hour was defined as the residual carbon weight. The residual carbon weight determined was 66.1%. Fig. 20 shows the results of the TG-DTA analysis.

### <Measurement of residual carbon weight of heat-resistant resin material (cured product) 2C>

65.0 mg of the curable composition 2B was melted at 130°C, poured into a 1 cm × 2 cm aluminum mold, and heated in an oven at 130°C in an air atmosphere for 6 hours to thereby obtain a heat-resistant resin material (cured product) 2C. The obtained heat-resistant resin material (cured product) 2C was heated in the same manner as in the <Measurement of residual carbon weight of heat-resistant resin material (cured product) 1C> section to thereby obtain a carbon material 2D. The residual carbon weight of the obtained heat-resistant resin material (cured product) 2C was measured in the same manner as in the <Measurement of residual carbon weight of heat-resistant resin material (cured product) 1C> section and was found to be 65.8%. Fig. 21 shows the results of the TG-DTA analysis.

The embodiments of the invention and the Examples have been described. However, the embodiments and Examples described above are not intended to limit the invention according to the claims. It should be noted that all the combinations of the features described in the embodiments and Examples are not necessarily essential for achieving the objects of the invention and that various modifications may be made without departing from the technical idea of the invention.

## Claims

1. A curable composition comprising an ethynyl group-containing compound represented by formula (A1): 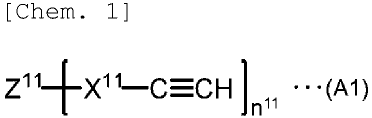 (wherein, in formula (A1), Z¹¹ is an n-valent aromatic organic group including at least one group selected from the group consisting of Ar¹¹, 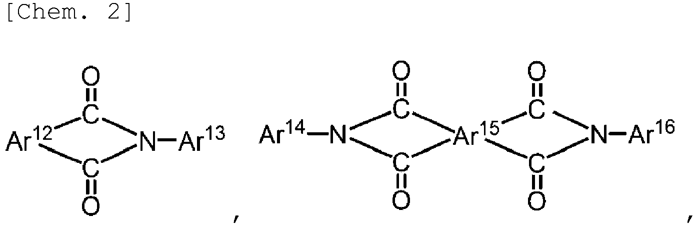 -O-, -S-, -C(=O)-, -S(=O)-, -S(=O)₂-, -P(=O)R¹¹-, - P(=O)(OR¹²)-, -NR¹³CO-, -COO-, -NR¹⁴-, and a direct bond;
Ar¹¹, Ar¹³, Ar¹⁴, and Ar¹⁶ are each independently a monovalent or higher-valent aromatic ring optionally having a substituent;
Ar¹² is a divalent or higher-valent aromatic ring optionally having a substituent;
Ar¹⁵ is a tetravalent or higher-valent aromatic ring optionally having a substituent;
-X¹¹-C≡CH is bonded to any of Ar¹¹ to Ar¹⁶;
R¹¹ to R¹⁴ are each independently hydrogen or a monovalent organic group; and
in Z¹¹, -O-, -S-, -C(=O)-, -S(=O)-, -S(=O)₂-, -P(=O)R¹¹-, -P(=O)(OR¹²)-, -NR¹³CO-, -COO-, and -NR¹⁴- are not directly bonded to one another.
-X¹¹- is a divalent group selected from the group consisting of -C(=O)-, -S(=O)-, -S(=O)₂-, -P(=O)R¹⁵-, and - P(=O)(OR¹⁶)-, and
R¹⁵ and R¹⁶ are each independently hydrogen or a monovalent organic group.
n¹¹ is an integer of 1 or more.
When more than one Ar¹¹, Ar¹², Ar¹³, Ar¹⁴, Ar¹⁵, Ar¹⁶, R¹¹, R¹², R¹³, R¹⁴, R¹⁵, R¹⁶, or -X¹¹- is present, they may be the same or different.).

2. The curable composition according to claim 1, wherein, in formula (A1) above,
when n¹¹ is 2, -X¹¹- is -C(=O)-, and Z¹¹ is 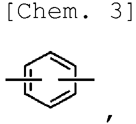 then the two -X¹¹-C≡CH groups are in ortho or meta positions; and
when n¹¹ is 2, -X¹¹- is -C(=O)-, and Z¹¹ is 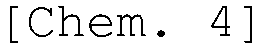 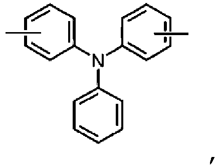 then at least one -X¹¹-C≡CH group is in an ortho or meta position relative to N.

3. The curable composition according to claim 1 or 2, wherein the ethynyl group-containing compound represented by formula (A1) above includes a compound in which n¹¹ is an integer of 2 or more, and wherein an average value of n¹¹ in the curable composition as a whole is 1.5 or more.

4. The curable composition according to claim 1 or 2, wherein the following requirement (I) and/or requirement (II) is satisfied:
(I) in TG-DTA (thermogravimetry-differential thermal analysis) measurement of the curable composition, a weight loss when the curable composition is heated from 30°C to 300°C at a heating rate of 10°C/minute in a nitrogen atmosphere is 10% or less; and
(II) in TG-DTA (thermogravimetry-differential thermal analysis) measurement of a cured product of the curable composition that is obtained by heating the curable composition under conditions of 50°C or higher and 250°C or lower for 48 hours or shorter, a weight loss when the cured product is heated from 30°C to 300°C at a heating rate of 10°C/minute in a nitrogen atmosphere is 10% or less.

5. The curable composition according to claim 1 or 2, wherein, when a cured product obtained by heating the curable composition under conditions of 50°C or higher and 250°C or lower for 48 hours or shorter is immersed in boiling tetrahydrofuran for 2 hours, subjected to solvent exchange in acetone at 25°C±5°C for 6 hours or longer, and then dried in an 80°C atmosphere under a reduced pressure of -0.1 MPa while mass measurement is performed every hour until no change in mass is observed for 3 hours or longer, an amount of insoluble matter is 70% or more.

6. The curable composition according to claim 1 or 2, wherein the ethynyl group-containing compound represented by formula (A1) above is an ethynyl group-containing compound represented by the following formula (A2): 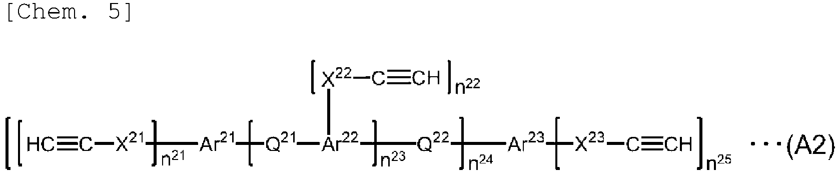 (wherein, in formula (A2), Ar²¹ to Ar²³ are each independently an n-valent aromatic organic group including at least one group selected from the group consisting of _{Ar}²⁴, 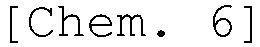 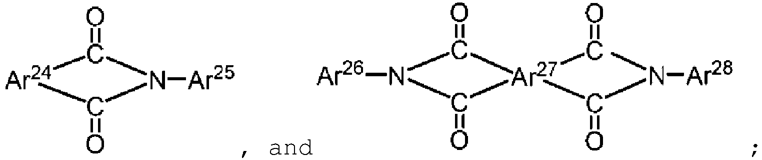
Ar²⁴, Ar²⁶, Ar²⁷, and Ar²⁹ are each independently a monovalent or higher-valent aromatic ring optionally having a substituent;
Ar²⁵ is a divalent or higher-valent aromatic ring optionally having a substituent;
Ar²⁸ is a tetravalent or higher-valent aromatic ring optionally having a substituent;
Q²¹ and Q²² are each independently a group selected from the group consisting of -O-, -S-, -C(=O)-, -S(=O)-, - S(=O)₂-, -P(=O)R²¹-, -P(=O)(OR²²)-, -NR²³CO-, -COO-, -NR²⁴-, and a direct bond; and
R²¹ to R²⁴ are each independently hydrogen or a monovalent organic group.
-X²¹- to -X²³- are each independently a divalent group selected from the group consisting of -C(=O)-, -S(=O)-, - S(=O)₂-, -P(=O)R²⁵-, and -P(=O)(OR²⁶)-, and
R²⁵ and R²⁶ are each independently hydrogen or a monovalent organic group.
n²¹ to n²⁴ are each 0 or an integer of 1 or more; n²⁵ is an integer of 1 or more; when n²⁴ is 0, n²⁵ is an integer of 2 or more;
when n²⁴ is an integer of 1 or more and n²³ is 0, then n²¹ + n²⁵ is an integer of 2 or more; and
when n²³ and n²⁴ are each an integer of 1 or more, n²¹ + n²² + n²⁵ is an integer of 2 or more.
When more than one Ar²¹, Ar²², Ar²³, Ar²⁴, Ar²⁵, Ar²⁶, Ar²⁷, Ar²⁸, Ar²⁹, -X²¹-, -X²²-, -X²³-, R²¹, R²², R²³, R²⁴, R²⁵, or R²⁶ is present, they may be the same or different.
When n²⁴ is 0, n²⁵ is 2, -X²³- is -C(=O)-, and -Ar²³- is 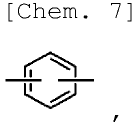 then the two -X²³-C≡CH groups are in ortho or meta positions.
When n²¹ is 1, n²³ is 0, n²⁴ is 1, -X²¹- and -X²³- are each -C(=O)-, and -Ar²¹-Q²²-Ar²³- is 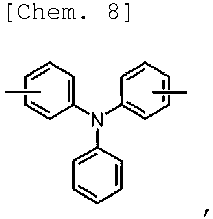 then at least one -X²³-C≡CH group is in an ortho or meta position relative to N.).

7. The curable composition according to claim 6, wherein the ethynyl group-containing compound represented by formula (A2) above is an ethynyl group-containing compound represented by the following formula (A3): 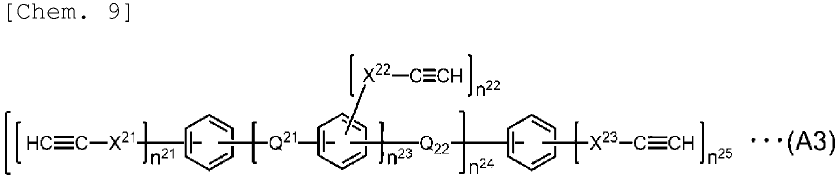 (wherein, in formula (A3), Q²¹ and Q²² are each independently a group selected from the group consisting of -O-, -S-, - C(=O)-, -S(=O)-, -S(=O)₂-, -P(=O)R²¹-, -P(=O)(OR²²)-, - NR²³CO-, -COO-, -NR²⁴-, and a direct bond, and
R²¹ to R²⁴ are each independently hydrogen or a monovalent organic group.
-X²¹- to -X²³- are each independently a divalent group selected from the group consisting of -C(=O)-, -S(=O)-, - S(=O)₂-, -P(=O)R²⁵-, and -P(=O)(OR²⁶)-, and
R²⁵ and R²⁶ are each independently hydrogen or a monovalent organic group.
n²¹ to n²⁴ are each 0 or an integer of 1 or more; n²⁵ is an integer of 1 or more; when n²⁴ is 0, n²⁵ is an integer of 2 or more;
when n²⁴ is an integer of 1 or more and n²³ is 0, then n²¹ + n²⁵ is an integer of 2 or more; and
when n²³ and n²⁴ are each an integer of 1 or more, n²¹ + n²² + n²⁵ is an integer of 2 or more.
When more than one -X²¹-, -X²²-, -X²³-, R²¹, R²², R²³, R²⁴, R²⁵, or R²⁶ is present, they may be the same or different.
When n²⁴ is 0, n²⁵ is 2, and -X²³- is -C(=O)-, then the two -X²³-C≡CH groups are in ortho or meta positions.
When n²¹, n²⁴, and n²⁵ are each 1, n²³ is 0, -X²¹- and - X²³- are each -C(=O)-, Q²² is NR²⁴, and R²⁴ is phenyl, then - X²¹-C≡CH is in an ortho or meta position relative to N.).

8. The curable composition according to claim 1 or 2, wherein the curable composition is a single-component or multi-component curable composition.

9. An ethynyl group-containing compound represented by formula (B): 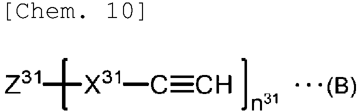 (wherein, in formula (B), Z³¹ is an n-valent aromatic organic group including at least one group selected from the group consisting of Ar³¹, 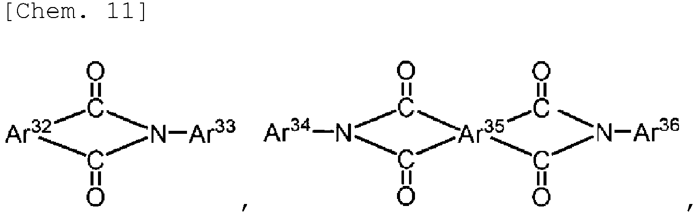 -O-, -S-, -C(=O)-, -S(=O)-, -S(=O)₂-, -P(=O)R³¹-, - P(=O)(OR³²)-, -NR³³CO-, -COO-, -NR³⁴-, and a direct bond;
Ar³¹, Ar³³, Ar³⁴, and Ar³⁶ are each independently a monovalent or higher-valent aromatic ring optionally having a substituent;
Ar³² is a divalent or higher-valent aromatic ring optionally having a substituent;
Ar³⁵ is a tetravalent or higher-valent aromatic ring optionally having a substituent;
-X³¹-C≡CH is bonded to any of Ar³¹ to Ar³⁶;
R³¹ to R³⁴ are each independently hydrogen or a monovalent organic group; and
in Z³¹, -O-, -S-, -C(=O)-, -S(=O)-, -S(=O)₂-, -P(=O)R³¹-, -P(=O)(OR³²)-, -NR³³CO-, -COO-, and -NR³⁴- are not directly bonded to one another.
-X³¹- is a divalent group selected from the group consisting of -C(=O)-, -S(=O)-, -S(=O)₂-, -P(=O)R³⁵-, and - P(=O)(OR³⁶)-, and
R³⁵ and R³⁶ are each independently hydrogen or a monovalent organic group.
n³¹ is an integer of 2 or more.
When more than one Ar³¹, Ar³², Ar³³, Ar³⁴, Ar³⁵, Ar³⁶, R³¹, R³², R³³, R³⁴, R³⁵, R³⁶, or -X³¹- is present, they may be the same or different.
When -X³¹- is -C(=O)- and Z³¹ is a phenyl ring having no substituent, then n³¹ is an integer from 3 to 6.
When n³¹ is 2, -X³¹- is -C(=O)-, and Z³¹ is 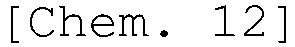 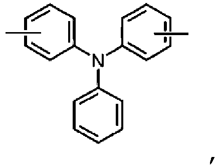 then at least one -X³¹-C≡CH group is in an ortho position relative to N, or the two -X³¹-C≡CH groups are in para and meta positions relative to N.
When n³¹ is 2, -X³¹- is -C(=O)- or -S(=O)₂-*,* and Z³¹ is 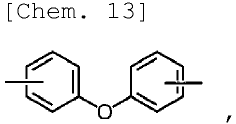 then at least one -X³¹-C≡CH group is in an ortho or meta position relative to O.
When n³¹ is 2, -X³¹- is -C(=O)-, and Z³¹ is 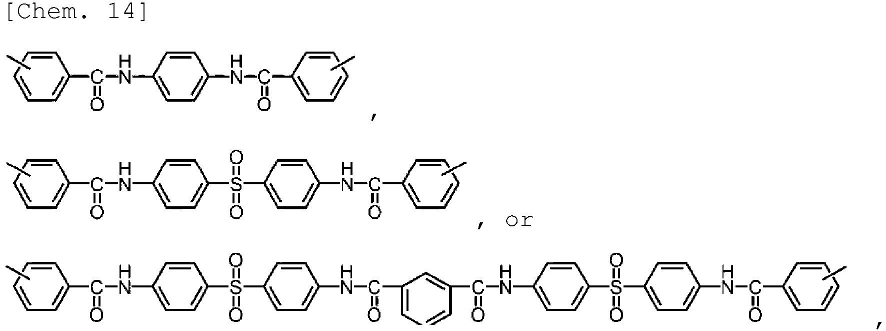 then at least one -X³¹-C≡CH group is in an ortho or meta position relative to an amide bond.
When n³¹ is 2, -X³¹- is -C(=O)-, and Z³¹ is 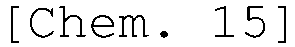 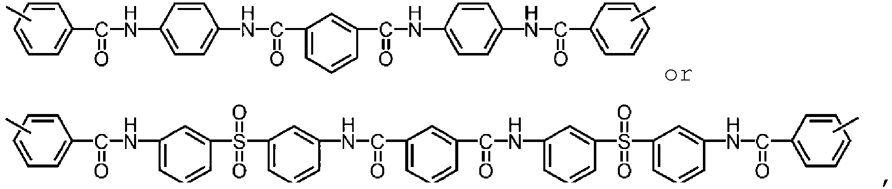 then at least one -X³¹-C≡CH group is in an ortho or para position relative to an amide bond.).

10. A heat-resistant resin material obtained by curing the curable composition according to claim 1 or the compound according to claim 9.

11. An adhesive comprising the curable composition according to claim 1 or the compound according to claim 9.

12. A sealing material comprising the curable composition according to claim 1 or the compound according to claim 9.

13. A potting material comprising the curable composition according to claim 1 or the compound according to claim 9.

14. An encapsulant comprising the curable composition according to claim 1 or the compound according to claim 9.

15. A carbon material obtained by firing a curable composition containing an ethynyl group-containing compound represented by formula (A) or a cured product of the curable composition: 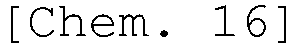 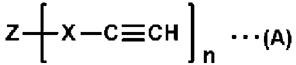 (wherein, in formula (A),
- X- is a divalent group selected from the group consisting of -C(=O)-, -S(=O)-, -S(=O)₂-, -P(=O)R^{a}-, and - P(=O)(OR^{b})-; when more than one -X- is present, they may be the same or different;
R^{a} is hydrogen or a monovalent organic group; when more than one R^{a} is present, they may be the same or different;
R^{b} is hydrogen or a monovalent organic group; when more than one R^{b} is present, they may be the same or different;
Z is an n-valent organic group; and
n is an integer of 1 or more.).

16. A prepreg comprising: a fibrous reinforcing material; and an ethynyl group-containing compound represented by formula (A): 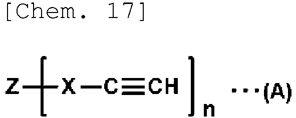 (wherein, in formula (A),
-X- is a divalent group selected from the group consisting of -C(=O)-, -S(=O)-, -S(=O)₂-, -P(=O)R^{a}-, and - P(=O)(OR^{b})-; when more than one -X- is present, they may be the same or different;
R^{a} is hydrogen or a monovalent organic group; when more than one R^{a} is present, they may be the same or different;
R^{b} is hydrogen or a monovalent organic group; when more than one R^{b} is present, they may be the same or different;
Z is an n-valent organic group; and
n is an integer of 1 or more.).
